# EUROPEAN PATENT APPLICATION

(11) **EP 4 769 750 A1**
(43) Date of publication of application: **01.07.2026**
(21) Application number: 24916097.9
(22) Date of filing: 12.01.2024
(51) Int. Cl.: H01M 50/342, H01M 50/30, H01M 50/131, H01M 50/233, H01M 50/103, H01M 50/249

(54) **BATTERY CELL, BATTERY AND ELECTRIC DEVICE**

(71) Applicant: Contemporary Amperex Technology Co., Limited, Ningde, Fujian 352100 (CN)
(72) Inventor: WU, Kai, Fujian, 352100 (CN); LUI, Sike, Fujian, 352100 (CN); LI, Yao, Fujian, 352100 (CN); GU, Mingguang, Fujian, 352100 (CN); CHEN, Shilong, Fujian, 352100 (CN); LI, Quankun, Fujian, 352100 (CN); HUANG, Xiuxue, Fujian, 352100 (CN); CHEN, Weike, Fujian, 352100 (CN); GAN, Jiuqiang, Fujian, 352100 (CN)
(74) Representative: Kraus & Lederer PartGmbB
(86) International application number: PCT/CN2024/072099
(87) International publication number: WO 2025/148033

(57) **Abstract**

A battery cell (20), a battery (100), and an electric device are disclosed. The battery cell (20) includes a housing (21) and a pressure relief component (22); the housing (21) includes a first wall portion (211), and the pressure relief component (22) is arranged on the first wall portion (211). The pressure relief component (22) is provided with a first groove (221). The first groove (221) is recessed from a first surface (2111) in a thickness direction of the first wall portion (211) towards a second surface (2112). The first groove (221) defines at least one predetermined pressure relief area (P). The pressure relief component (22) is configured to be capable of cracking along at least a portion of the first groove (221) when the battery cell (20) relieves pressure; where a sum S₁ of areas of all the predetermined pressure relief areas (P) is 0.03 to 0.3 times an area S₂ of the first surface (2111). This can reduce the risk of the housing (21) of the battery cell (20) bursting, exploding, or catching fire due to untimely pressure relief of the pressure relief component (22), and reduce the risk of leakage problems caused by premature actuation or fatigue cracking of the pressure relief component (22) after long-term use of the battery cell (20), which is beneficial to improving the service life and service reliability of the battery cell (20).

## Description

### TECHNICAL FIELD

The present application relates to the field of battery technology, and more specifically, to a battery cell, a battery, and an electric device.

### BACKGROUND

Batteries are widely used in new energy vehicles, electronic devices, and other fields. As the demand for batteries increases, higher requirements are placed on battery reliability.

In battery technology, the pressure relief component of a battery cell is one of the important factors affecting the reliability of the battery cell. The pressure relief component is configured to release the internal pressure of the battery cell. The pressure relief component can release the internal pressure of the battery cell when the internal pressure or temperature of the battery cell reaches a threshold. However, after multiple cycles and long-term use of the battery cell, the pressure relief component is prone to premature actuation for pressure relief or fatigue cracking, which reduces the service reliability of the battery cell.

### SUMMARY

Embodiments of the present application provide a battery cell, a battery, and an electric device to improve the reliability of the battery cell.

According to a first aspect, an embodiment of the present application provides a battery cell, where the battery cell includes a housing and a pressure relief component; the housing includes a first wall portion, and in a thickness direction of the first wall portion, the first wall portion has a first surface and a second surface arranged opposite to each other; and the pressure relief component is arranged on the first wall portion, and the pressure relief component is provided with a first groove, where the first groove is recessed from the first surface towards the second surface, the first groove defines at least one predetermined pressure relief area, and the pressure relief component is configured to be capable of cracking along at least a portion of the first groove when the battery cell relieves pressure; where a sum S₁ of areas of all the predetermined pressure relief areas is 0.03 to 0.3 times an area S₂ of the first surface.

In the above technical solution, the first wall portion of the housing is provided with a pressure relief component, and the pressure relief component includes a first weak portion, where the first weak portion can crack when the battery cell relieves pressure, so as to release the internal pressure of the battery cell, thereby reducing problems such as explosion and fire caused by excessive internal pressure of the battery cell. By setting the sum S₁ of the areas of all the predetermined pressure relief areas to be 0.03 to 0.3 times the area S₂ of the first surface where the first groove is provided, that is, setting the ratio of the sum S₁ of the areas of all the predetermined pressure relief areas to the area S₂ of the first surface where the first groove is provided to be between 0.03 and 0.3, the relative sizes of the sum S₁ of the areas of all the predetermined pressure relief areas and the area S₂ of the first surface where the first groove is provided are set more reasonably. Setting the ratio to be greater than or equal to 0.03 can alleviate the problem of insufficient area of the predetermined pressure relief area, so as to alleviate the phenomenon that the bottom wall of the first groove has excessive pressure bearing capacity, which causes the bursting pressure required for the pressure relief component to relieve pressure in the battery cell to be too large, thereby reducing the risk of the housing of the battery cell bursting, exploding, or catching fire due to untimely pressure relief of the pressure relief component, and further effectively improving the service reliability of the battery cell. The expansion force generated by the expansion of the battery cell during use will cause deformation of the first wall portion. Setting the ratio to be less than or equal to 0.3 can alleviate the problem that the strength and rigidity of the first wall portion are reduced due to the predetermined pressure relief area being too large relative to the area of the first surface, which easily causes large deformation. It can also reduce the concentration of stress on the bottom wall of the first groove when the expansion force generated by the expansion of the battery cell during use acts on the pressure relief component, and enables the predetermined pressure relief area to absorb a part of the expansion force, thereby effectively alleviating phenomena such as tensile deformation of the bottom wall of the first groove of the pressure relief component, so as to reduce the strain and strain amplitude of the bottom wall of the first groove of the pressure relief component, that is, to reduce the deformation of the bottom wall of the first groove, and further alleviate the phenomenon that the structural strength of the bottom wall of the first groove of the pressure relief component is reduced due to excessive strain and strain amplitude, thereby reducing the risk of leakage problems caused by premature actuation or fatigue cracking of the pressure relief component in the area corresponding to the first groove after long-term use of the battery cell, so as to improve the service stability of the pressure relief component, which is beneficial to improving the service life and service reliability of the battery cell.

In some embodiments of the first aspect of the present application, 500mm² ≤ S₁ ≤ 1300mm².

In the above technical solution, by limiting the sum S₁ of the areas of all the predetermined pressure relief areas to be between 500mm² and 1300mm², and setting the sum S₁ of the areas of all the predetermined pressure relief areas to be greater than or equal to 500mm², the problem of insufficient area of the predetermined pressure relief area can be alleviated, so as to alleviate the phenomenon that the bottom wall of the first groove has excessive pressure bearing capacity, which causes the bursting pressure required for the pressure relief component to relieve pressure in the battery cell to be too large, thereby reducing the risk of the housing of the battery cell bursting, exploding, or catching fire due to untimely pressure relief of the pressure relief component, and further effectively improving the service reliability of the battery cell. Setting the sum of the areas of all the predetermined pressure relief areas to be less than or equal to 1300mm² can alleviate the problem that the strength of the first wall portion is reduced due to the predetermined pressure relief area being too large, which easily causes large deformation. It can also reduce the concentration of stress on the bottom wall of the first groove when the expansion force generated by the expansion of the battery cell during use acts on the pressure relief component, and enables the predetermined pressure relief area to absorb a part of the expansion force, thereby effectively alleviating phenomena such as tensile deformation of the bottom wall of the first groove of the pressure relief component, so as to reduce the strain and strain amplitude of the bottom wall of the first groove of the pressure relief component, that is, to reduce the deformation of the bottom wall of the first groove, and further alleviate the phenomenon that the structural strength of the bottom wall of the first groove of the pressure relief component is reduced due to excessive strain and strain amplitude, thereby reducing the risk of leakage problems caused by premature actuation or fatigue cracking of the pressure relief component in the area corresponding to the first groove after long-term use of the battery cell, so as to improve the service stability of the pressure relief component, which is beneficial to improving the service life and service reliability of the battery cell.

In some embodiments of the first aspect of the present application, 5000mm² ≤ S₂ ≤ 8500mm².

In the above technical solution, by setting the area S₂ of the first surface where the first groove is provided to be between 6000mm² and 8500mm², and setting the area of the first surface to be greater than or equal to 6000mm², the problem that the strength of the first wall portion is reduced due to the area of the first surface being too small, which easily causes large deformation, can be alleviated. It can also reduce the concentration of stress on the bottom wall of the first groove when the expansion force generated by the expansion of the battery cell during use acts on the pressure relief component, and enables the predetermined pressure relief area to absorb a part of the expansion force, thereby effectively alleviating phenomena such as tensile deformation of the bottom wall of the first groove of the pressure relief component, so as to reduce the strain and strain amplitude of the bottom wall of the first groove of the pressure relief component, that is, to reduce the deformation of the bottom wall of the first groove, and further alleviate the phenomenon that the structural strength of the bottom wall of the first groove of the pressure relief component is reduced due to excessive strain and strain amplitude, thereby reducing the risk of leakage problems caused by premature actuation or fatigue cracking of the pressure relief component in the area corresponding to the first groove after long-term use of the battery cell, so as to improve the service stability of the pressure relief component, which is beneficial to improving the service life and service reliability of the battery cell. Setting the area of the first surface to be less than or equal to 8500mm² can alleviate the problem that the strength and rigidity of the first wall portion are too large to withstand greater pressure and are difficult to deform due to the area of the first surface being too small, so as to alleviate the phenomenon that the bottom wall of the first groove has excessive pressure bearing capacity, which causes the bursting pressure required for the pressure relief component to relieve pressure in the battery cell to be too large, thereby reducing the risk of the housing of the battery cell bursting, exploding, or catching fire due to untimely pressure relief of the pressure relief component, and further effectively improving the service reliability of the battery cell.

In some embodiments of the first aspect of the present application, the first wall portion is a rectangular wall portion; and along a width direction of the first wall portion, a dimension of the first surface is c; along a length direction of the first wall portion, a dimension of the first surface is d; and S₂ = c*d; where 55mm ≤ c ≤ 85mm, and 100mm ≤ d ≤ 260mm.

In the above technical solution, the first wall portion is a rectangular wall portion, which is convenient for manufacturing and molding, and also facilitates the measurement of the area of the first surface.

In some embodiments of the first aspect of the present application, the first wall portion is a rectangular wall portion; and along a length direction of the first wall portion, the pressure relief component is formed with at least one predetermined pressure relief area, and a sum a of dimensions of all the predetermined pressure relief areas arranged along the length direction of the first wall portion is 0.1 to 0.5 times a dimension d of the first surface along the length direction of the first wall portion.

In the above technical solution, the sum a of the dimensions of all the predetermined pressure relief areas arranged along the length direction of the first wall portion is 0.1 to 0.5 times the dimension d of the first surface along the length direction of the first wall portion, that is, the ratio of the sum a of the dimensions of all the predetermined pressure relief areas arranged along the length direction of the first wall portion to the dimension d of the first surface along the length direction of the first wall portion is limited to 0.1 to 0.5. When the ratio of the sum a of the dimensions of all the predetermined pressure relief areas arranged along the length direction of the first wall portion to the dimension d of the first surface along the length direction of the first wall portion is greater than or equal to 0.1, it can alleviate the problem that the bottom wall of the first groove has excessive pressure bearing capacity, which causes the bursting pressure required for the pressure relief component to relieve pressure in the battery cell to be too large, thereby reducing the risk of the housing of the battery cell bursting, exploding, or catching fire due to untimely pressure relief of the pressure relief component, and further effectively improving the service reliability of the battery cell. When the ratio of the sum a of the dimensions of all the predetermined pressure relief areas arranged along the length direction of the first wall portion to the dimension d of the first surface along the length direction of the first wall portion is less than or equal to 0.5, it can reduce the deformation of the bottom wall of the first groove when the expansion force generated by the expansion of the battery cell during use acts on the pressure relief component, and further reduce the phenomenon that the structural strength of the bottom wall of the first groove of the pressure relief component is reduced due to excessive deformation, further reducing the risk of leakage problems caused by premature actuation or fatigue cracking of the pressure relief component at the position corresponding to the first groove after long-term use of the battery cell, so as to improve the service stability of the pressure relief component, and improve the service life and service reliability of the battery cell. Therefore, when the sum a of the dimensions of all the predetermined pressure relief areas arranged along the length direction of the first wall portion is 0.1 to 0.5 times the dimension d of the first surface along the length direction of the first wall portion, it can balance the reduction of the risk of the housing of the battery cell bursting, exploding, or catching fire due to untimely pressure relief of the pressure relief component, and the reduction of the risk of leakage problems caused by premature actuation or fatigue cracking of the pressure relief component at the position corresponding to the first groove after long-term use of the battery cell, so as to improve the service stability of the pressure relief component, and improve the service life and service reliability of the battery cell.

In some embodiments of the first aspect of the present application, the first wall portion is a rectangular wall portion; and along a width direction of the first wall portion, the first groove defines at least one predetermined pressure relief area, and a sum b of dimensions of all the predetermined pressure relief areas arranged along the width direction of the first wall portion is 0.3 to 0.7 times a dimension c of the first surface along the width direction of the first wall portion.

In the above technical solution, the sum b of the dimensions of all the predetermined pressure relief areas arranged along the width direction of the first wall portion is 0.3 to 0.7 times the dimension c of the first surface along the width direction of the first wall portion, that is, the ratio of the sum b of the dimensions of all the predetermined pressure relief areas arranged along the width direction of the first wall portion to the dimension of the first surface along the width direction of the first wall portion is limited to 0.3 to 0.7. By setting the ratio of the sum b of the dimensions of all the predetermined pressure relief areas arranged along the width direction of the first wall portion to the dimension of the first surface along the width direction of the first wall portion to be greater than or equal to 0.3, it can alleviate the problem that the bottom wall of the first groove has excessive pressure bearing capacity, which causes the bursting pressure required for the pressure relief component to relieve pressure in the battery cell to be too large, thereby reducing the risk of the housing of the battery cell bursting, exploding, or catching fire due to untimely pressure relief of the pressure relief component, and further effectively improving the service reliability of the battery cell. By setting the ratio of the sum b of the dimensions of all the predetermined pressure relief areas arranged along the width direction of the first wall portion to the dimension of the first surface along the width direction of the first wall portion to be less than or equal to 0.7, it can reduce the degree of material accumulation on the upper part of the width direction of the first wall portion during the manufacturing process of the first groove, thereby alleviating the problem of poor flatness of the surface of the battery cell in the width direction of the first wall portion due to the formation of the first groove.

In some embodiments of the first aspect of the present application, the first wall portion is a rectangular wall portion; and along a length direction of the first wall portion, the pressure relief component is formed with at least one predetermined pressure relief area, and a sum of dimensions of all the predetermined pressure relief areas arranged along the length direction of the first wall portion is a, where 26mm ≤ a ≤ 50mm.

In the above technical solution, the sum a of the dimensions of all the predetermined pressure relief areas arranged along the length direction of the first wall portion is greater than or equal to 26mm, which not only facilitates the processing and molding of the first groove and defines the predetermined pressure relief area, but also helps to increase the area of the predetermined pressure relief area, alleviating the problem that the bottom wall of the first groove has excessive pressure bearing capacity, which causes the bursting pressure required for the pressure relief component to relieve pressure in the battery cell to be too large, thereby reducing the risk of the housing of the battery cell bursting, exploding, or catching fire due to untimely pressure relief of the pressure relief component, and further effectively improving the service reliability of the battery cell. The sum a of the dimensions of all the predetermined pressure relief areas arranged along the length direction of the first wall portion is less than or equal to 50mm, which can reduce the deformation of the bottom wall of the first groove when the expansion force generated by the expansion of the battery cell during use acts on the pressure relief component, and further reduce the phenomenon that the structural strength of the bottom wall of the first groove of the pressure relief component is reduced due to excessive deformation, further reducing the risk of leakage problems caused by premature actuation or fatigue cracking of the pressure relief component at the position corresponding to the first groove after long-term use of the battery cell, so as to improve the service stability of the pressure relief component, and improve the service life and service reliability of the battery cell.

In some embodiments of the first aspect of the present application, the first wall portion is a rectangular wall portion; and along a width direction of the first wall portion, the first groove defines at least one predetermined pressure relief area, and a sum of dimensions of all the predetermined pressure relief areas arranged along the width direction of the first wall portion is b, where 18mm ≤ b ≤ 62mm.

In the above technical solution, the sum b of the dimensions of all the predetermined pressure relief areas arranged along the width direction of the first wall portion is greater than or equal to 18mm, which not only facilitates the processing and molding of the first groove and defines the predetermined pressure relief area, but also helps to increase the area of the predetermined pressure relief area, alleviating the problem that the bottom wall of the first groove has excessive pressure bearing capacity, which causes the bursting pressure required for the pressure relief component to relieve pressure in the battery cell to be too large, thereby reducing the risk of the housing of the battery cell bursting, exploding, or catching fire due to untimely pressure relief of the pressure relief component, and further effectively improving the service reliability of the battery cell. The sum b of the dimensions of all the predetermined pressure relief areas arranged along the width direction of the first wall portion is less than or equal to 62mm, which can reduce the degree of material accumulation on the upper part of the width direction of the first wall portion during the manufacturing process of the first groove, thereby alleviating the problem of poor flatness of the surface of the battery cell in the width direction of the first wall portion due to the formation of the first groove.

In some embodiments of the first aspect of the present application, the first wall portion is a rectangular wall portion; along a length direction of the first wall portion, the pressure relief component is formed with at least one predetermined pressure relief area, and a sum of dimensions of all the predetermined pressure relief areas arranged along the length direction of the first wall portion is a; along a width direction of the first wall portion, the first groove defines at least one predetermined pressure relief area, and a sum of dimensions of all the predetermined pressure relief areas arranged along the width direction of the first wall portion is b, and along the width direction of the first wall portion, a dimension of the first surface is c; when 10mm ≤ c ≤ 40mm, the sum a of dimensions of all the predetermined pressure relief areas arranged along the length direction of the first wall portion is 2 to 3 times the sum b of dimensions of all the predetermined pressure relief areas arranged along the width direction of the first wall portion; when 40mm < c ≤ 60mm, the sum a of dimensions of all the predetermined pressure relief areas arranged along the length direction of the first wall portion is 1 to 2 times the sum b of dimensions of all the predetermined pressure relief areas arranged along the width direction of the first wall portion; and when 60mm < c, the sum a of dimensions of all the predetermined pressure relief areas arranged along the length direction of the first wall portion is 0.4 to 1 times the sum b of dimensions of all the predetermined pressure relief areas arranged along the width direction of the first wall portion.

In the above technical solution, when 10mm ≤ c ≤ 40mm, the sum a of the dimensions of all the predetermined pressure relief areas arranged along the length direction of the first wall portion is 2 to 3 times the sum b of the dimensions of all the predetermined pressure relief areas arranged along the width direction of the first wall portion, that is, the ratio of the sum a of the dimensions of all the predetermined pressure relief areas arranged along the length direction of the first wall portion to the sum b of the dimensions of all the predetermined pressure relief areas arranged along the width direction of the first wall portion is 2 to 3. When the ratio of the sum a of the dimensions of all the predetermined pressure relief areas arranged along the length direction of the first wall portion to the sum b of the dimensions of all the predetermined pressure relief areas arranged along the width direction of the first wall portion is greater than or equal to 2, the bursting pressure is more stable, which is beneficial for the pressure relief component to relieve pressure in time, thereby reducing the risk of the housing of the battery cell bursting, exploding, or catching fire due to untimely pressure relief of the pressure relief component, and further effectively improving the service reliability of the battery cell. When the ratio of the sum a of the dimensions of all the predetermined pressure relief areas arranged along the length direction of the first wall portion to the sum b of the dimensions of all the predetermined pressure relief areas arranged along the width direction of the first wall portion is less than or equal to 3, it is beneficial for the valve opening angle of the predetermined pressure relief area to be larger when the first groove cracks, so that the pressure relief component has a larger pressure relief area, which is beneficial for the pressure relief component to relieve pressure in time, reducing the risk of the housing of the battery cell bursting, exploding, or catching fire, and improving the reliability of the battery cell. When 40mm < c ≤ 60mm, the sum a of the dimensions of all the predetermined pressure relief areas arranged along the length direction of the first wall portion is 1 to 2 times the sum b of the dimensions of all the predetermined pressure relief areas arranged along the width direction of the first wall portion, that is, the ratio of the sum a of the dimensions of all the predetermined pressure relief areas arranged along the length direction of the first wall portion to the sum b of the dimensions of all the predetermined pressure relief areas arranged along the width direction of the first wall portion is 1 to 2. When the ratio of the sum a of the dimensions of all the predetermined pressure relief areas arranged along the length direction of the first wall portion to the sum b of the dimensions of all the predetermined pressure relief areas arranged along the width direction of the first wall portion is greater than or equal to 1, the bursting pressure is more stable, which is beneficial for the pressure relief component to relieve pressure in time, thereby reducing the risk of the housing of the battery cell bursting, exploding, or catching fire due to untimely pressure relief of the pressure relief component, and further effectively improving the service reliability of the battery cell. When the ratio of the sum a of the dimensions of all the predetermined pressure relief areas arranged along the length direction of the first wall portion to the sum b of the dimensions of all the predetermined pressure relief areas arranged along the width direction of the first wall portion is less than or equal to 2, it is beneficial for the valve opening angle of the predetermined pressure relief area to be larger when the first groove cracks, so that the pressure relief component has a larger pressure relief area, which is beneficial for the pressure relief component to relieve pressure in time, reducing the risk of the housing of the battery cell bursting, exploding, or catching fire, and improving the reliability of the battery cell. When 60mm < c, the sum a of the dimensions of all the predetermined pressure relief areas arranged along the length direction of the first wall portion is 0.4 to 1 times the sum b of the dimensions of all the predetermined pressure relief areas arranged along the width direction of the first wall portion, that is, the ratio of the sum a of the dimensions of all the predetermined pressure relief areas arranged along the length direction of the first wall portion to the sum b of the dimensions of all the predetermined pressure relief areas arranged along the width direction of the first wall portion is 0.4 to 1. When the ratio of the sum a of the dimensions of all the predetermined pressure relief areas arranged along the length direction of the first wall portion to the sum b of the dimensions of all the predetermined pressure relief areas arranged along the width direction of the first wall portion is greater than or equal to 0.4, the bursting pressure is more stable, which is beneficial for the pressure relief component to relieve pressure in time, thereby reducing the risk of the housing of the battery cell bursting, exploding, or catching fire due to untimely pressure relief of the pressure relief component, and further effectively improving the service reliability of the battery cell. When the ratio of the sum a of the dimensions of all the predetermined pressure relief areas arranged along the length direction of the first wall portion to the sum b of the dimensions of all the predetermined pressure relief areas arranged along the width direction of the first wall portion is less than or equal to 1, it is beneficial for the valve opening angle of the predetermined pressure relief area to be larger when the first groove cracks, so that the pressure relief component has a larger pressure relief area, which is beneficial for the pressure relief component to relieve pressure in time, reducing the risk of the housing of the battery cell bursting, exploding, or catching fire, and improving the reliability of the battery cell.

In some embodiments of the first aspect of the present application, the pressure relief component further includes a second groove, where the second groove is configured to guide the predetermined pressure relief area to open.

In the above technical solution, the pressure relief component is provided with a second groove, so the pressure relief component forms a weak portion in the area corresponding to the second groove. The weak portion corresponding to the second groove can guide the predetermined pressure relief area to open, thereby improving the opening effect of the predetermined pressure relief area of the pressure relief component, which is beneficial to increasing the pressure relief area of the battery cell after the predetermined pressure relief area opens, and further improving the pressure relief rate of the battery cell when thermal runaway occurs, so as to reduce the risk of fire, explosion, connection failure, and more caused by untimely pressure relief of the battery cell, which is beneficial to improving the service reliability of the battery cell. The pressure relief component is provided with a second groove, so that the pressure relief component forms a weak portion in the area where the second groove is provided and corresponds to the bottom surface of the second groove. The battery cell with this structure facilitates the formation of a weak portion on the pressure relief component, which is beneficial to reducing the difficulty of forming a weak portion on the pressure relief component to guide the predetermined pressure relief area to open, so as to improve the production efficiency of the battery cell.

In some embodiments of the first aspect of the present application, the second groove is recessed from the second surface towards the first surface.

In the above technical solution, the second groove is recessed from the second surface towards the first surface, so the first groove and the second groove are arranged on opposite sides of the pressure relief component along the thickness direction of the first wall portion, which facilitates processing the first groove and the second groove separately on both sides of the pressure relief component along the thickness direction of the first wall portion, and helps to reduce the mutual influence between the first groove and the second groove during the processing.

In some embodiments of the first aspect of the present application, the first surface is a surface of the pressure relief component facing away from an interior of the housing, and the second surface is a surface of the pressure relief component facing towards the interior of the housing.

In the above technical solution, by arranging the first groove and the second groove on the first surface and the second surface, respectively, which are opposite to each other along the thickness direction of the first wall portion of the pressure relief component, it facilitates processing the first groove and the second groove separately on both sides of the pressure relief component along the thickness direction of the first wall portion, and helps to reduce the mutual influence between the first groove and the second groove during the processing. Moreover, arranging the second groove on the second surface of the pressure relief component facing towards the interior of the housing facilitates the predetermined pressure relief area to flip towards the outer side of the housing around the bottom wall of the second groove when it is opened, thereby reducing the interference effect of the side surface of the second groove on the predetermined pressure relief area during the flipping process, and helps to improve the flipping effect of the predetermined pressure relief area.

In some embodiments of the first aspect of the present application, the first groove and the second groove do not contact each other.

In the above technical solution, by setting the first groove and the second groove as structures that do not contact each other, on the one hand, it can reduce the mutual influence between the first groove and the second groove during the processing, and on the other hand, it can reduce the phenomenon that the area corresponding to the second groove cracks when the first groove cracks for pressure relief, and can reduce the stress influence between the first groove and the second groove.

In some embodiments of the first aspect of the present application, the first groove includes a first groove segment and a second groove segment, where the first groove segment and the second groove segment are connected, and the first groove segment and the second groove segment jointly define the at least one predetermined pressure relief area.

In the above technical solution, the first groove includes a first groove segment and a second groove segment, and the first groove segment and the second groove segment are connected to each other. On the one hand, it can increase the pressure relief area of the battery cell to improve the pressure relief rate of the battery cell. On the other hand, it makes the connection position between the first groove segment and the second groove segment weaker, making it easier to crack and open the predetermined pressure relief area to release the internal pressure of the battery cell.

In some embodiments of the first aspect of the present application, the first groove further includes a third groove segment, where the first groove segment and the third groove segment are arranged opposite to each other, the second groove segment connects the first groove segment and the third groove segment, and the first groove segment, the second groove segment, and the third groove segment jointly define the at least one predetermined pressure relief area.

In the above technical solution, the first groove is provided with a first groove segment and a third groove segment arranged opposite to each other, and a second groove segment connecting the first groove segment and the third groove segment, so that the pressure relief component can crack along the first groove segment, the second groove segment, and the third groove segment when the battery cell relieves pressure, so as to open the predetermined pressure relief area to release the internal pressure of the battery cell. The first groove with this structure makes the intersection position of the first groove segment and the second groove segment and the intersection position of the second groove segment and the third groove segment weaker, making it easier to crack and open the predetermined pressure relief area for pressure relief, and can further improve the pressure relief area and pressure relief rate of the battery cell.

In some embodiments of the first aspect of the present application, a position where the second groove segment is connected to the first groove segment is offset from two ends of the first groove segment, and a position where the second groove segment is connected to the third groove segment is offset from two ends of the third groove segment.

In the above technical solution, the position where the second groove segment is connected to the first groove segment is offset from the two ends of the first groove segment, so the connection position between the first groove segment and the second groove segment is set to be between the two ends of the first groove segment. The position where the second groove segment is connected to the third groove segment is offset from the two ends of the third groove segment, so the connection position between the third groove segment and the second groove segment is set to be between the two ends of the third groove segment. This forms an "H"-shaped structure with the first groove segment, the second groove segment, and the third groove segment, so that predetermined pressure relief areas can be formed on both sides of the second groove segment of the first groove, and the two predetermined pressure relief areas can open in an opposing manner for pressure relief when the battery cell relieves pressure, which is beneficial to further increasing the pressure relief effect of the battery cell and can effectively improve the pressure relief rate of the battery cell.

In some embodiments of the first aspect of the present application, the first groove defines two of the predetermined pressure relief areas, where the two predetermined pressure relief areas are respectively located on two sides of the second groove segment; the pressure relief component further includes a second groove, where the second groove is configured to guide the predetermined pressure relief area to open, and each of the predetermined pressure relief areas is correspondingly provided with at least one second groove, and the first groove is located between the two second grooves.

In the above technical solution, the second groove can guide the corresponding predetermined pressure relief area to open, and each predetermined pressure relief area is correspondingly provided with at least one second groove, thereby improving the opening effect of each predetermined pressure relief area of the pressure relief component, which is beneficial to increasing the pressure relief area of the battery cell after the predetermined pressure relief area opens, and further improving the pressure relief rate of the battery cell when thermal runaway occurs, so as to reduce the risk of fire, explosion, connection failure, and more caused by untimely pressure relief of the battery cell, which is beneficial to improving the service reliability of the battery cell.

In some embodiments of the first aspect of the present application, the second groove segment and the second groove are arranged opposite to each other along a first direction, and along the first direction, the first groove segment and the third groove segment are both spaced apart from the second groove.

In the above technical solution, the second groove segment and the second groove are arranged opposite to each other along the first direction, and along the first direction, the first groove segment and the third groove segment are both spaced apart from the second groove, so the first groove segment, the second groove segment, and the third groove segment do not contact the second groove. This can reduce the mutual influence between the first groove and the second groove during processing, and can also reduce the phenomenon that the area corresponding to the second groove cracks when the first groove cracks for pressure relief, and can reduce the stress influence between the first groove and the second groove. The second groove segment and the second groove are arranged opposite to each other along the first direction, and along the first direction, the first groove segment and the third groove segment are both spaced apart from the second groove, so the second groove is located between the edge of the first wall portion along the first direction and the first score line. The second groove can act as a buffer between the first groove and the edge of the first wall portion along the first direction, reducing the risk of the first groove cracking due to external force, and improving the reliability of the battery cell.

In some embodiments of the first aspect of the present application, the first wall portion is a rectangular wall portion, and the first direction is parallel to a width direction of the first wall portion.

In the above technical solution, the first direction is parallel to the width direction of the first wall portion, so the second groove segment and the second groove are arranged opposite to each other along the width direction of the first wall portion. Along the width direction of the first wall portion, the first groove segment and the third groove segment are both spaced apart from the second groove. The first groove segment, the second groove segment, and the third groove segment do not contact the second groove in the width direction of the first wall portion. This can reduce the mutual influence between the first groove and the second groove during processing, and can also reduce the phenomenon that the area corresponding to the second groove cracks when the area corresponding to the first groove cracks for pressure relief, and can reduce the stress influence between the first groove and the second groove. The second groove segment and the second groove are arranged opposite to each other along the width direction of the first wall portion, and along the width direction of the first wall portion, the first groove segment and the third groove segment are both spaced apart from the second groove, so the second groove is located between the edge of the first wall portion along the width direction of the first wall portion and the first score line. The second groove can act as a buffer between the first groove and the edge of the first wall portion along the first direction, reducing the risk of the first groove cracking due to external force, and improving the reliability of the battery cell.

In some embodiments of the first aspect of the present application, the first groove is a multi-stage score line groove, where the multi-stage score line groove is a multi-stage score line groove sequentially arranged from the first surface to the second surface, and in two adjacent stages of the score line grooves, a stage of the score line groove farther from the first surface is arranged on a bottom surface of a stage of the score line groove closer to the first surface.

In the above technical solution, by setting the first groove as a stepped groove structure arranged along the thickness direction of the wall portion, so that the first groove is a groove formed by multiple processing steps, this structure, when forming a groove of the same depth in the pressure relief component, on the one hand, can reduce the depth of a single processing step of the score line groove, which is beneficial to reducing the manufacturing difficulty of forming a groove of the same depth and the requirements for manufacturing equipment, so as to reduce manufacturing costs, and can reduce the forming force received by the pressure relief component during a single processing step in the formation of the first groove, which is beneficial to reducing the risk of cracks in the pressure relief component, so as to improve the production quality of the battery cell. On the other hand, it can improve the flow state of the material during the formation of the bottom wall of the first groove, which is beneficial to the flow of the material generated when forming the bottom wall of the first groove, so as to improve the structural consistency of the multi-stage score line groove.

In some embodiments of the first aspect of the present application, the first groove is a three-stage score line groove, where the three-stage score line groove is sequentially arranged from the first surface to the second surface.

In the above technical solution, the first groove is a three-stage score line groove. In the case of forming a groove of the same depth, it can not only reduce the depth of a single processing step of the score line groove, which is beneficial to reducing the manufacturing difficulty of forming a groove of the same thickness and the requirements for manufacturing equipment, so as to reduce manufacturing costs, and can reduce the forming force received by the pressure relief component during a single processing step in the formation of the bottom wall of the first groove, which is beneficial to reducing the risk of cracks in the pressure relief component, so as to improve the production quality of the battery cell. On the other hand, it can improve the flow state of the material during the formation of the bottom wall of the first groove, which is beneficial to the flow of the material generated when forming the first groove, so as to improve the structural consistency of the multi-stage score line groove. It also alleviates the problem of increased processing time due to multiple processing steps required for the formation of the first groove.

In some embodiments of the first aspect of the present application, the pressure relief component is integrally formed with the first wall portion.

In the above technical solution, by setting the pressure relief component and the first wall portion as an integrally formed structure, the pressure relief component is a structure integrated on the first wall portion, that is, the pressure relief component is a wall of the housing, and correspondingly, the first wall portion is provided with the pressure relief component. The battery cell with this structure can improve the structural strength of the pressure relief component on the first wall portion, and can reduce the risk of leakage caused by improper assembly between the pressure relief component and the first wall portion.

In some embodiments of the first aspect of the present application, the pressure relief component is separately arranged from the first wall portion, where the first wall portion is provided with a pressure relief hole, and the pressure relief component is installed on the first wall portion and covers the pressure relief hole.

In the above technical solution, by setting the pressure relief component and the first wall portion as a separate structure, the pressure relief component is a structure installed on the first wall portion. The battery cell with this structure can reduce the difficulty of arranging the pressure relief component on the first wall portion, and enables the processing procedures of the housing and the pressure relief component to be carried out simultaneously, which is beneficial to optimizing the production beat of the battery cell.

In some embodiments of the first aspect of the present application, the battery cell includes an electrode assembly, where the electrode assembly is accommodated in the housing, and the first wall portion supports the electrode assembly.

In the above technical solution, the first wall portion supports the electrode assembly, and the pressure relief component is arranged on the first wall portion, which can reduce the risk of substances released during pressure relief of the battery cell acting on other electrical connection structures, thereby reducing the risk of causing other reliability problems.

In some embodiments of the first aspect of the present application, the battery cell includes an electrode terminal, where the electrode terminal is arranged on a wall portion of the housing other than the first wall portion.

In the above technical solution, the electrode terminal is arranged on a wall portion of the housing other than the first wall portion, so the risk of substances released during pressure relief of the battery cell acting on the electrode terminal is low, which can reduce the risk of the battery cell short-circuiting and causing thermal runaway again due to the substances released during pressure relief of the battery cell forming an electrical connection with the electrode terminal.

In some embodiments of the first aspect of the present application, the electrode terminal is arranged on a wall of the housing opposite to the first wall portion.

In the above technical solution, the electrode terminal is arranged on the wall of the housing opposite to the first wall portion, which makes the distance between the electrode terminal and the pressure relief component greater, and can further reduce the risk of substances released during pressure relief of the battery cell acting on the electrode terminal, and further reduces the risk of the battery cell short-circuiting and causing thermal runaway again due to the substances released during pressure relief of the battery cell forming an electrical connection with the electrode terminal.

In some embodiments of the first aspect of the present application, the housing includes a housing body and an end cover; the housing body has at least one opening; the end cover corresponds to the opening one-to-one, and the end cover is connected to the housing body and seals the opening; where at least one end cover is the first wall portion, or the housing body includes the first wall portion.

In the above technical solution, by setting the first wall portion of the housing as the end cover of the housing for sealing the opening, the battery cell with this structure facilitates arranging the pressure relief component on the end cover, which is beneficial to reducing the manufacturing difficulty of the battery cell, so as to improve the production efficiency of the battery cell. By setting the first wall portion of the housing as a wall portion of the housing body, the battery cell with this structure can make the area of the housing where the pressure relief component is arranged away from the end cover, thereby effectively alleviating the phenomenon that the stress generated by the connection between the end cover and the housing body acts on the pressure relief component, so as to reduce the impact on the predetermined pressure relief area of the pressure relief component and the area corresponding to the first groove, and further helps to reduce the risk of cracking or structural strength reduction of the pressure relief component under the pulling action of stress, so as to improve the service life and service reliability of the battery cell.

In some embodiments of the first aspect of the present application, the housing body has two openings arranged opposite to each other; and the housing includes two end covers, where each of the end covers is connected to the housing body and seals one of the openings, and the housing body includes the first wall portion.

In the above technical solution, the housing body of the housing has two openings arranged opposite to each other, and the two end covers respectively seal the two openings. The battery cell with this structure facilitates assembling the battery cell from both ends of the housing body, which is beneficial to reducing the manufacturing difficulty and assembly difficulty of the battery cell. The housing body includes the first wall portion, and the pressure relief component is not arranged on the end cover, which can reduce the risk of substances released during pressure relief of the battery cell acting on other structures of the battery, and further reduces the risk of the battery cell short-circuiting and causing thermal runaway again due to the substances released during pressure relief of the battery cell forming an electrical connection with the electrode terminal.

In some embodiments of the first aspect of the present application, the housing body has one opening, and a wall portion of the housing body arranged opposite to the opening is the first wall portion.

In the above technical solution, the wall portion of the housing body arranged opposite to the opening is the first wall portion, which can reduce the risk of substances released during pressure relief of the battery cell acting on other structures of the battery, and further reduces the risk of the battery cell short-circuiting and causing thermal runaway again due to the substances released during pressure relief of the battery cell forming an electrical connection with the electrode terminal.

In some embodiments of the first aspect of the present application, a material of the pressure relief component includes steel.

In the above technical solution, the material of the pressure relief component includes steel. Steel has the characteristic of high strength. The pressure relief component made of steel has better strength. When the bursting pressure of the battery cell is constant, the pressure relief component can be made thinner, reducing the volume of the pressure relief component.

In some embodiments of the first aspect of the present application, the steel is carbon steel or stainless steel.

In some embodiments of the first aspect of the present application, a material of the pressure relief component includes aluminum alloy.

In the above technical solution, aluminum alloy has the characteristics of light weight and good ductility, making it easier to process the first groove on the pressure relief component.

In some embodiments of the first aspect of the present application, the aluminum alloy includes the following components by mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other single elements ≤ 0.03%.

In the above technical solution, this aluminum alloy has lower hardness and better formability, which reduces the processing difficulty of the first groove, helps to improve the processing accuracy of the first groove, and improves the pressure relief consistency of the pressure relief component.

In some embodiments of the first aspect of the present application, the aluminum alloy includes the following components by mass percentage: aluminum ≥ 96.7%, 0.05% ≤ copper ≤ 0.2%, iron ≤ 0.7%, manganese ≤ 1.5%, silicon ≤ 0.6%, zinc ≤ 0.1%, other single element components ≤ 0.05%, and total other element components ≤ 0.15%.

In the above technical solution, the pressure relief component made of this aluminum alloy has higher hardness and greater strength, and has good anti-damage capability.

According to a second aspect, an embodiment of the present application also provides a battery, including the battery cell described above.

According to a third aspect, an embodiment of the present application also provides an electric device, including the battery cell described above.

### BRIEF DESCRIPTION OF DRAWINGS

To make the technical solutions of the embodiments of the present application clearer, the accompanying drawings used in the embodiments will be briefly introduced below. It should be understood that the following drawings only show some embodiments of the present application, and therefore should not be considered as a limitation of the scope. For persons skilled in the art, other related drawings can be obtained from these drawings without creative effort.
FIG. 1 is a schematic structural diagram of a vehicle provided in some embodiments of the present application;
FIG. 2 is an exploded view of a battery provided in some embodiments of the present application;
FIG. 3 is a schematic structural diagram of a battery cell provided in some embodiments of the present application;
FIG. 4 is an exploded view of a battery cell provided in some embodiments of the present application;
FIG. 5 is a top view of a housing provided in some embodiments of the present application;
FIG. 6 is a cross-sectional view of a first wall portion provided in some embodiments of the present application;
FIG. 7 is an enlarged view of portion B1 in FIG. 6;
FIG. 8 is a top view of a housing provided in other embodiments of the present application;
FIG. 9 is a top view of a housing provided in still other embodiments of the present application;
FIG. 10 is a top view of a housing provided in yet other embodiments of the present application;
FIG. 11 is a top view of a housing provided in still yet other embodiments of the present application;
FIG. 12 is a schematic view observed along the length direction of the first wall portion after the first groove cracks;
FIG. 13 is a top view of a housing provided in yet still other embodiments of the present application;
FIG. 14 is a top view of a housing provided in still other embodiments of the present application;
FIG. 15 is a top view of a housing provided in yet other embodiments of the present application;
FIG. 16 is a top view of a housing provided in still other embodiments of the present application;
FIG. 17 is a top view of a housing provided in yet other embodiments of the present application;
FIG. 18 is a cross-sectional view taken along the direction Q1-Q1 in FIG. 17;
FIG. 19 is an enlarged view of portion B2 in FIG. 18;
FIG. 20 is an enlarged view of portion B3 in FIG. 18;
FIG. 21 is a top view of a housing provided in still other embodiments of the present application;
FIG. 22 is a top view of a housing provided in yet other embodiments of the present application;
FIG. 23 is a cross-sectional view taken along the direction Q2-Q2 in FIG. 22;
FIG. 24 is an enlarged view of portion B4 in FIG. 23;
FIG. 25 is a cross-sectional view taken along the direction Q3-Q3 in FIG. 22;
FIG. 26 is an enlarged view of portion B5 in FIG. 23; and
FIG. 27 is an enlarged view of portion B6 in FIG. 23.

Reference signs: 1000, vehicle; 100, battery; 10, box; 11, first box body; 12, second box body; 20, battery cell; 21, housing; 211, first wall portion; 2111, first surface; 2112, second surface; 212, housing body; 2121, opening; 2122, second wall portion; 2123, third wall portion; 2124, fourth wall portion; 2125, fifth wall portion; 2126, first chamfered surface; 2127, second chamfered surface; 2128, third chamfered surface; 2129, fourth chamfered surface; 213, end cover; 22, pressure relief component; 221, first groove; 2211, first weak portion; 2211a, first weak segment; 2212, first groove segment; 2213, second groove segment; 2214, third groove segment; 2215, fourth groove segment; 222, second groove; 2221, second weak portion; 221a, first sub-groove; 221a1, first segment; 221a2, second segment; 221a3, third segment; 221b, second sub-groove; 221b1, fourth segment; 221b2, fifth segment; 221b3, sixth segment; 221c, third sub-groove; 221c1, seventh segment; 221c2, eighth segment; 221c3, ninth segment; 23, electrode assembly; 231, tab; 24, electrode terminal; 25, current collecting member; 200, controller; 300, motor; X, thickness direction of the first wall portion; Y, width direction of the first wall portion; Z, length direction of the first wall portion; and P, predetermined pressure relief area.

### DESCRIPTION OF EMBODIMENTS

In order to make the objectives, technical solutions, and advantages of the embodiments of the present application clearer, the technical solutions in the embodiments of the present application will be described clearly and completely below in conjunction with the accompanying drawings in the embodiments of the present application. Obviously, the described embodiments are only some of the embodiments of the present application, and not all of the embodiments. The components of the embodiments of the present application described and shown herein in the drawings can be arranged and designed in various different configurations.

Therefore, the following detailed description of the embodiments of the present application provided in the accompanying drawings is not intended to limit the scope of the claimed present application, but merely represents selected embodiments of the present application. All other embodiments obtained by persons skilled in the art based on the embodiments in the present application without creative effort fall within the protection scope of the present application.

It should be noted that the embodiments of the present application and the features in the embodiments can be combined with each other without conflict.

It should be noted that similar reference numerals and letters in the following drawings represent similar items, and therefore, once an item is defined in one drawing, it does not need to be further defined and explained in subsequent drawings.

In the description of the embodiments of the present application, it should be noted that the indicated orientation or positional relationship is based on the orientation or positional relationship shown in the drawings, or the customary orientation or positional relationship when the product of the application is used, or the orientation or positional relationship customarily understood by persons skilled in the art, and is only for the convenience of describing the present application and simplifying the description, and does not indicate or imply that the referred device or element must have a specific orientation, or be constructed and operated in a specific orientation, and therefore cannot be understood as a limitation of the present application. In addition, the terms "first", "second", "third", and so on are only used to distinguish descriptions, and cannot be understood as indicating or implying relative importance.

In the present application, the term "and/or" is merely a description of the association relationship between associated objects, indicating that three relationships can exist. For example, A and/or B can mean: A exists alone, A and B exist simultaneously, or B exists alone. In addition, in the present application, the character "/", generally indicates an "or" relationship between the associated objects before and after it.

In the embodiments of the present application, the same reference signs represent the same components, and for brevity, detailed descriptions of the same components are omitted in different embodiments. It should be understood that the dimensions such as thickness, length, and width of various components in the embodiments of the present application shown in the drawings, as well as the overall thickness, length, and width of the integrated device, are merely illustrative, and should not constitute any limitation on the present application.

"Multiple" appearing in the present application refers to more than two (including two).

In the embodiments of the present application, the battery cell may be a secondary battery, and a secondary battery refers to a battery cell that can continue to be used by activating active materials through charging after the battery cell is discharged.

The battery cell can be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. The embodiments of the present application are not limited thereto.

A battery cell generally includes an electrode assembly. The electrode assembly includes a positive electrode, a negative electrode, and a separator. During charging and discharging of the battery cell, active ions (such as lithium ions) are reversibly embedded and de-embedded between the positive electrode and the negative electrode. The separator is arranged between the positive electrode and the negative electrode, which can prevent short circuits between the positive and negative electrodes, and at the same time allow active ions to pass through.

In some embodiments, the positive electrode may be a positive electrode plate, and the positive electrode plate may include a positive current collector and a positive active material arranged on at least one surface of the positive current collector.

As an example, the positive current collector has two surfaces opposite to each other in its own thickness direction, and the positive active material is arranged on any one or both of the two opposite surfaces of the positive current collector.

As an example, the positive current collector may use a metal foil or a composite current collector. For example, as a metal foil, silver-plated aluminum, silver-plated stainless steel, stainless steel, copper, aluminum, nickel, carbon electrode, carbon, nickel, or titanium may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like.) on a polymer material substrate (such as polypropylene, polyethylene terephthalate, polybutylene terephthalate, polystyrene, polyethylene, or the like.).

As an example, the positive active material may include at least one of the following materials: lithium-containing phosphates, lithium transition metal oxides, and their respective modified compounds. However, the present application is not limited to these materials, and other conventional materials that can be used as positive active materials for batteries may also be used. These positive active materials may be used alone or in combination of two or more. Examples of lithium-containing phosphates may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of lithium transition metal oxides may include, but are not limited to, at least one of lithium cobalt oxide (such as LiCoO₂), lithium nickel oxide (such as LiNiO₂), lithium manganese oxide (such as LiMnO₂, LiMn₂O₄), lithium nickel cobalt oxide, lithium manganese cobalt oxide, lithium nickel manganese oxide, lithium nickel cobalt manganese oxide (such as LiNi_{1/3}C_{1/3}Mn_{1/3}O₂ (also referred to as NCM333), LiNi_{0.5}Co_{0.2}Mn_{0.3}O₂ (also referred to as NCM523), LiNi_{0.5}Co_{0.2}sMn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811), lithium nickel cobalt aluminum oxide (such as LiNi_{0.85}Co_{0.15}Al_{0.05}O₂)), and their modified compounds.

In some embodiments, the positive electrode may use foam metal. The foam metal may be foam nickel, foam copper, foam aluminum, foam alloy, or the like. When foam metal is used as the positive electrode, the surface of the foam metal may not be provided with a positive active material, or may be provided with a positive active material. As an example, lithium source material, potassium metal, or sodium metal may also be filled and/or deposited in the foam metal, where the lithium source material is lithium metal and/or lithium-rich material.

In some embodiments, the negative electrode may be a negative electrode plate, and the negative electrode plate may include a negative current collector.

As an example, the negative current collector may use a metal foil, foam metal, or a composite current collector. For example, as a metal foil, silver surface-treated aluminum or stainless steel, stainless steel, copper, aluminum, nickel, carbon electrode, nickel, or titanium may be used. The foam metal may be foam nickel, foam copper, foam aluminum, foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like.) on a polymer material substrate (such as polypropylene, polyethylene terephthalate, polybutylene terephthalate, polystyrene, polyethylene, or the like.).

As an example, the negative electrode plate may include a negative current collector and a negative active material arranged on at least one surface of the negative current collector.

As an example, the negative current collector has two surfaces opposite to each other in its own thickness direction, and the negative active material is arranged on any one or both of the two opposite surfaces of the negative current collector.

As an example, the negative active material may be a negative active material known in the art for the battery cell 20. As an example, the negative active material may include at least one of the following materials: artificial graphite, natural graphite, soft carbon, hard carbon, silicon-based materials, tin-based materials, and lithium titanate. The silicon-based material may be selected from at least one of elemental silicon, silicon oxide compounds, silicon-carbon composites, silicon-nitrogen composites, and silicon alloys. The tin-based material may be selected from at least one of elemental tin, tin oxide compounds, and tin alloys. However, the present application is not limited to these materials, and other conventional materials that can be used as negative active materials for batteries may also be used. These negative active materials may be used alone or in combination of two or more.

In some embodiments, the material of the positive current collector may be aluminum, and the material of the negative current collector may be copper.

In some embodiments, the electrode assembly also includes a separator, where the separator is arranged between the positive electrode and the negative electrode.

In some embodiments, the separator is a separator membrane. There can be various types of separator membranes, and any known porous separator membrane with good chemical stability and mechanical stability can be selected.

As an example, the material of the separator membrane may include at least one of glass fiber, non-woven fabric, polyethylene, polypropylene, and polyvinylidene fluoride. The separator membrane may be a single-layer film or a multi-layer composite film. When the separator membrane is a multi-layer composite film, the materials of each layer may be the same or different. The separator may be a single component located between the positive and negative electrodes, or may be attached to the surface of the positive and negative electrodes.

In some embodiments, the separator is a solid electrolyte. The solid electrolyte is arranged between the positive electrode and the negative electrode, and simultaneously functions to transmit ions and separate the positive and negative electrodes.

In some embodiments, the battery cell also includes an electrolyte, where the electrolyte functions to conduct ions between the positive and negative electrodes. The electrolyte can be liquid, gel, or solid. The liquid electrolyte includes electrolyte salt and solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel electrolyte includes a polymer as the skeleton network of the electrolyte, combined with an ionic liquid-lithium salt.

The solid electrolyte includes polymer solid electrolyte, inorganic solid electrolyte, and composite solid electrolyte.

As an example, the polymer solid electrolyte may be polyether (polyethylene oxide), polysiloxane, polycarbonate, polyacrylonitrile, polyvinylidene fluoride, polymethyl methacrylate, single ion polymer, polyionic liquid-lithium salt, cellulose, and the like.

As an example, the inorganic solid electrolyte may include one or more of oxide solid electrolytes (crystalline perovskite, sodium superionic conductor, garnet, amorphous LiPON film), sulfide solid electrolytes (crystalline lithium superionic conductor (lithium germanium phosphorus sulfide, argyrodite), amorphous sulfide), halide solid electrolytes, nitride solid electrolytes, and hydride solid electrolytes.

As an example, the composite solid electrolyte is formed by adding inorganic solid electrolyte fillers to the polymer solid electrolyte.

In some embodiments, the electrode assembly is a wound structure. The positive electrode plate and the negative electrode plate are wound to form a wound structure.

In some embodiments, the electrode assembly is a stacked structure.

As an example, multiple positive electrode plates and multiple negative electrode plates may be provided, and the multiple positive electrode plates and multiple negative electrode plates are alternately stacked.

As an example, multiple positive electrode plates may be provided, and the negative electrode plate is folded to form multiple stacked folded segments, with one positive electrode plate sandwiched between adjacent folded segments.

As an example, both the positive electrode plate and the negative electrode plate are folded to form multiple stacked folded segments.

As an example, multiple separators may be provided, respectively arranged between any adjacent positive electrode plates or negative electrode plates.

As an example, the separator may be continuously arranged, and arranged between any adjacent positive electrode plates or negative electrode plates by folding or winding.

In some embodiments, the shape of the electrode assembly may be cylindrical, flat, or prismatic.

In some embodiments, the electrode assembly is provided with tabs, and the tabs can export current from the electrode assembly. The tabs include a positive tab and a negative tab.

In some embodiments, the battery cell may include a housing. The housing is used to encapsulate components such as the electrode assembly and electrolyte. The housing may be a steel housing, an aluminum housing, a plastic housing (such as polypropylene), a composite metal housing (such as a copper-aluminum composite housing), an aluminum-plastic film, or the like.

As an example, the battery cell may be a cylindrical battery cell, a prismatic battery cell, a pouch battery cell, or other shapes of battery cells. Prismatic battery cells include, but are not limited to, square shell battery cells, blade-shaped battery cells, and multi-prismatic batteries, such as hexagonal prismatic batteries.

The battery mentioned in the embodiments of the present application refers to a single physical module that includes one or more battery cells to provide higher voltage and capacity.

In some embodiments, the battery may be a battery module. When there are multiple battery cells, the multiple battery cells are arranged and fixed to form a battery module.

In some embodiments, the battery may be a battery pack, where the battery pack includes a box and battery cells, and the battery cells or battery modules are accommodated in the box.

In some embodiments, the box may be part of the chassis structure of the vehicle. For example, part of the box may become at least part of the floor of the vehicle, or part of the box 10 may become at least part of the crossbeams and longitudinal beams of the vehicle.

In some embodiments, the battery may be an energy storage device. The energy storage device includes energy storage containers, energy storage cabinets, and the like.

Batteries have outstanding advantages such as high energy density, low environmental pollution, high power density, long service life, wide application range, and small self-discharge coefficient, and are an important part of the current new energy development. The development of battery technology needs to consider many design factors, such as performance parameters like energy density, cycle life, discharge capacity, and charge and discharge rate. In addition, battery reliability also needs to be considered.

In battery technology, for general battery cells, in order to reduce the risk of problems such as explosion and fire, a pressure relief component can be provided on the battery cell to release the internal pressure of the battery cell through the pressure relief component, thereby reducing the risk of problems such as explosion and fire in the battery cell and improving the reliability of the battery cell. In related technologies, the pressure relief component is usually formed integrally with the housing, that is, integrated on the housing of the battery cell, or connected to the wall portion of the housing by welding, snapping, or other methods, so that the pressure relief component can actuate and open when the internal pressure or temperature of the battery cell reaches a threshold, so as to relieve the internal pressure of the battery cell. However, the battery cell is prone to expansion and other phenomena during use or charging and discharging, and the expansion force generated by the battery cell will act on the pressure relief component, making the pressure relief component extremely prone to tensile deformation and other phenomena, and causing the pressure relief component to generate strain and a large strain amplitude, thereby reducing the structural strength of the pressure relief component of the battery cell, resulting in poor service stability of the pressure relief component, which easily causes premature actuation for pressure relief or fatigue cracking of the pressure relief component during use, which is not conducive to improving the service life and service reliability of the battery cell.

Based on the above considerations, in order to alleviate the problem of premature actuation for pressure relief or fatigue cracking of the pressure relief component of the battery cell during use, the embodiments of the present application provide a battery cell, where the battery cell includes a housing and a pressure relief component; the housing includes a first wall portion, and in the thickness direction of the first wall portion, the first wall portion has a first surface and a second surface arranged opposite to each other; and the pressure relief component is arranged on the first wall portion, and the pressure relief component is provided with a first groove, where the first groove is recessed from the first surface towards the second surface, the first groove defines at least one predetermined pressure relief area, and the pressure relief component is configured to be capable of cracking along at least a portion of the first groove when the battery cell relieves pressure; where a sum S₁ of areas of all the predetermined pressure relief areas is 0.03 to 0.3 times an area S₂ of the first surface.

The first wall portion of the housing is provided with a pressure relief component, and the pressure relief component includes a first weak portion, where the first weak portion can crack when the battery cell relieves pressure, so as to release the internal pressure of the battery cell, thereby reducing problems such as explosion and fire caused by excessive internal pressure of the battery cell. By setting the sum S₁ of the areas of all the predetermined pressure relief areas to be 0.03 to 0.3 times the area S₂ of the first surface where the first groove is provided, that is, setting the ratio of the sum S₁ of the areas of all the predetermined pressure relief areas to the area S₂ of the first surface where the first groove is provided to be between 0.03 and 0.3, the relative sizes of the sum S₁ of the areas of all the predetermined pressure relief areas and the area S₂ of the first surface where the first groove is provided are set more reasonably. Setting the ratio to be greater than or equal to 0.03 can alleviate the problem of insufficient area of the predetermined pressure relief area, so as to alleviate the phenomenon that the bottom wall of the first groove has excessive pressure bearing capacity, which causes the bursting pressure required for the pressure relief component to relieve pressure in the battery cell to be too large, thereby reducing the risk of the housing of the battery cell bursting, exploding, or catching fire due to untimely pressure relief of the pressure relief component, and further effectively improving the service reliability of the battery cell. The expansion force generated by the expansion of the battery cell during use will cause deformation of the first wall portion. Setting the ratio to be less than or equal to 0.3 can alleviate the problem that the strength and rigidity of the first wall portion are reduced due to the predetermined pressure relief area being too large relative to the area of the first surface, which easily causes large deformation. It can also reduce the concentration of stress on the bottom wall of the first groove when the expansion force generated by the expansion of the battery cell during use acts on the pressure relief component, and enables the predetermined pressure relief area to absorb a part of the expansion force, thereby effectively alleviating phenomena such as tensile deformation of the bottom wall of the first groove of the pressure relief component, so as to reduce the strain and strain amplitude of the bottom wall of the first groove of the pressure relief component, that is, to reduce the deformation of the bottom wall of the first groove, and further alleviate the phenomenon that the structural strength of the bottom wall of the first groove of the pressure relief component is reduced due to excessive strain and strain amplitude, thereby reducing the risk of leakage problems caused by premature actuation or fatigue cracking of the pressure relief component in the area corresponding to the first groove after long-term use of the battery cell, so as to improve the service stability of the pressure relief component, which is beneficial to improving the service life and service reliability of the battery cell.

The battery cell disclosed in the embodiments of the present application can be used in electric devices such as vehicles, ships, or aircraft, but is not limited thereto. A power system of the electric device can be formed using the battery cell and battery disclosed in the present application, which is beneficial to alleviating the problem of premature actuation for pressure relief or fatigue cracking of the pressure relief component of the battery cell during use, so as to improve the service reliability and service life of the battery cell.

The embodiments of the present application provide an electric device using a battery as a power source. The electric device can be, but is not limited to, mobile phones, tablets, laptops, electric toys, power tools, electric bicycles, electric vehicles, ships, spacecraft, and the like. Electric toys can include stationary or mobile electric toys, such as game consoles, electric car toys, electric ship toys, and electric aircraft toys. Spacecraft can include airplanes, rockets, space shuttles, spaceships, and the like.

For convenience of description, the following embodiments will take a vehicle as an example of the electric device in an embodiment of the present application.

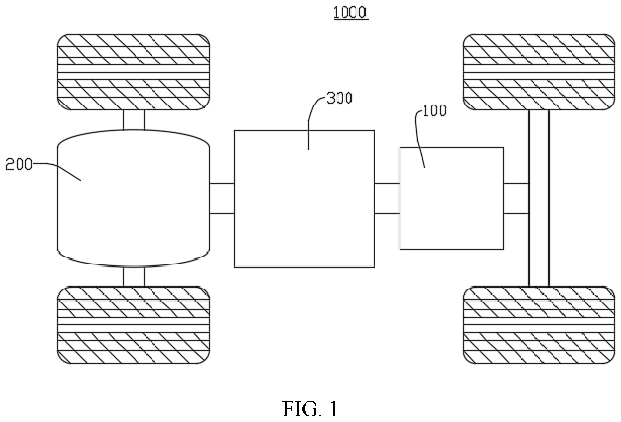

Refer to FIG. 1. FIG. 1 is a schematic structural diagram of a vehicle 1000 provided in some embodiments of the present application. The vehicle 1000 can be a fuel vehicle, a gas vehicle, or a new energy vehicle. The new energy vehicle can be a battery electric vehicle, a hybrid electric vehicle, or a range-extended electric vehicle, or the like. A battery 100 is arranged inside the vehicle 1000. The battery 100 can be arranged at the bottom of the vehicle 1000, at the front of the vehicle 1000, or at the rear of the vehicle 1000. The battery 100 can be used to supply power to the vehicle 1000. For example, the battery 100 can be used as an operating power source or a service power source for the vehicle 1000. The vehicle 1000 can also include a controller 200 and a motor 300. The controller 200 is configured to control the battery 100 to supply power to the motor 300, for example, for the power demand during starting, navigation, and driving of the vehicle 1000.

In some embodiments of the present application, the battery 100 can not only serve as an operating power source or a service power source for the vehicle 1000, but also as a driving power source for the vehicle 1000, replacing or partially replacing fuel or natural gas to provide driving power for the vehicle 1000.

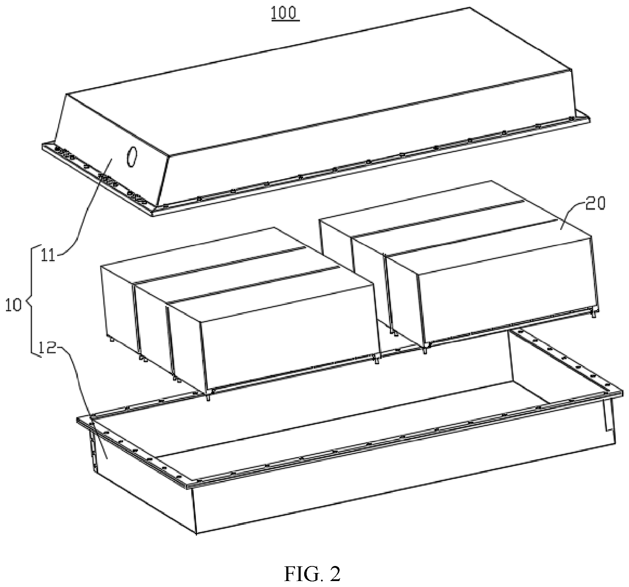

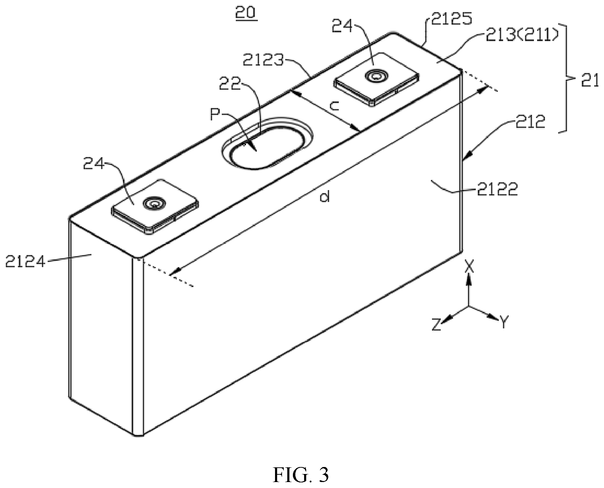

Refer to FIG. 2 and FIG. 3. FIG. 2 is an exploded view of a battery 100 provided in some embodiments of the present application, and FIG. 3 is a schematic structural diagram of a battery cell 20 provided in some embodiments of the present application. The battery 100 includes a box 10 and a battery cell 20, where the battery cell 20 is configured to be accommodated in the box 10.

The box 10 is used to provide an assembly space for the battery cell 20, and the box 10 can adopt various structures. In some embodiments, the box 10 can include a first box body 11 and a second box body 12, where the first box body 11 and the second box body 12 are covered with each other, and the first box body 11 and the second box body 12 jointly define an assembly space for accommodating the battery cell 20. The second box body 12 can be a hollow structure open at one end, and the first box body 11 can be a plate-like structure, where the first box body 11 covers the open side of the second box body 12, so that the first box body 11 and the second box body 12 jointly define the assembly space; the first box body 11 and the second box body 12 can also both be hollow structures open on one side, where the open side of the first box body 11 covers the open side of the second box body 12.

Certainly, the box 10 formed by the first box body 11 and the second box body 12 can be of various shapes, such as a cylinder, a cuboid, or a cube. Exemplarily, in FIG. 2, the shape of the box 10 is a cuboid.

In the battery 100, the number of battery cells 20 arranged in the box 10 can be one or more. When there are multiple battery cells 20 arranged in the box 10, the multiple battery cells 20 can be connected in series, in parallel, or in a mixed connection, where a mixed connection means that there are both series and parallel connections among the multiple battery cells 20. The multiple battery cells 20 can be directly connected in series, in parallel, or in a mixed connection, and then the whole formed by the multiple battery cells 20 is accommodated in the box 10; of course, the battery 100 can also be formed by multiple battery cells 20 first connected in series, in parallel, or in a mixed connection to form a battery module, and then multiple battery modules are connected in series, in parallel, or in a mixed connection to form a whole, which is then accommodated in the box 10.

In some embodiments, the battery 100 may also include other structures. For example, the battery 100 may also include a busbar member, where the busbar member is configured to connect multiple battery cells 20 to achieve electrical connection between the multiple battery cells 20.

Each battery cell 20 can be a secondary battery or a primary battery; it can also be a lithium-sulfur battery, a sodium-ion battery, or a magnesium-ion battery, but is not limited thereto. The battery cell 20 can be cuboid, cylindrical, prismatic, or other shapes. Exemplarily, in FIG. 3, the battery cell 20 is a cuboid structure.

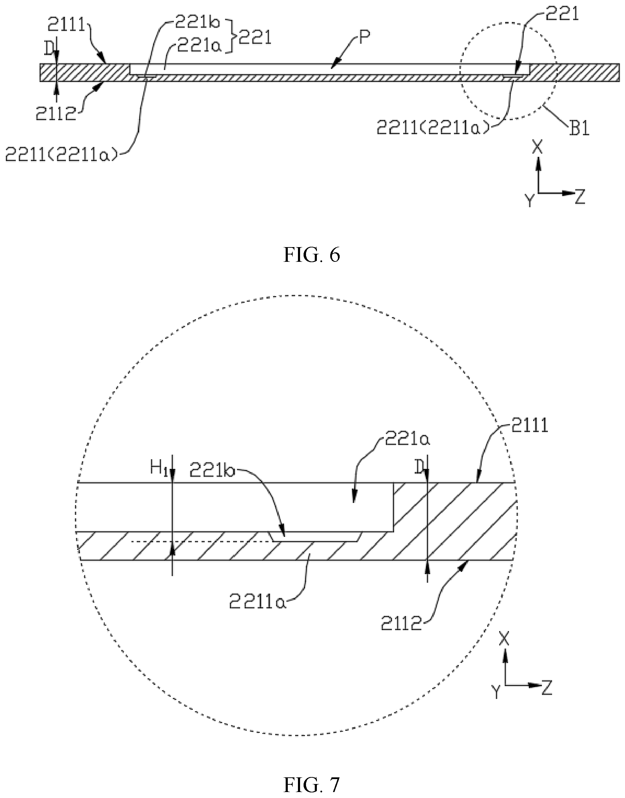

In some embodiments, as shown in FIGs. 3-7, the battery cell 20 includes a housing 21 and a pressure relief component 22; the housing 21 includes a first wall portion 211; the pressure relief component 22 is arranged on the first wall portion 211. Along a thickness direction X of the first wall portion, the first wall portion 211 has a first surface 2111 and a second surface 2112 arranged opposite to each other. The pressure relief component 22 is provided with a first groove 221, where the first groove 221 is recessed from the first surface 2111 towards the second surface 2112. The first groove 221 defines at least one predetermined pressure relief area P, and the pressure relief component 22 is configured to be capable of cracking along at least a portion of the first groove 221 when the battery cell 20 relieves pressure; where a sum S₁ of areas of all the predetermined pressure relief areas P is 0.03 to 0.3 times an area S₂ of the first surface 2111.

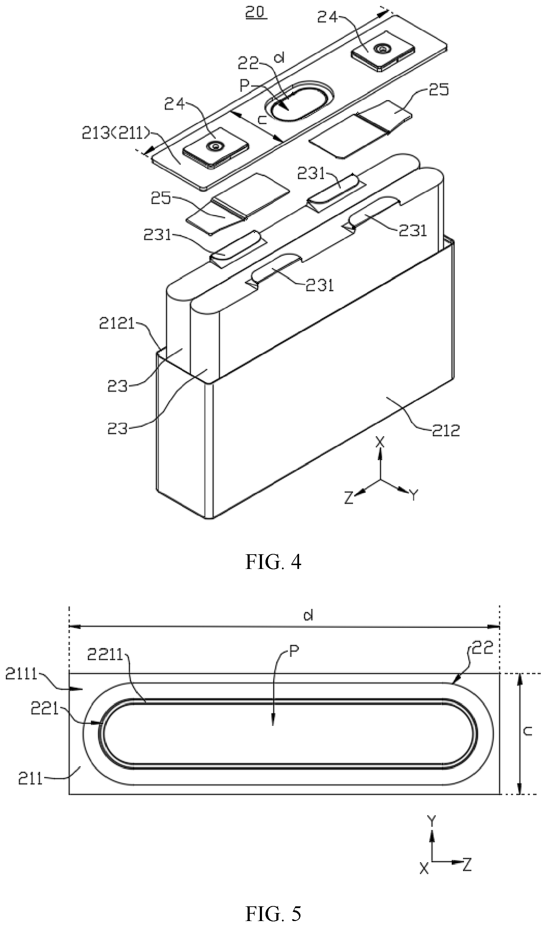

As shown in FIG. 4, the battery cell 20 can also include an electrode assembly 23, where the electrode assembly 23 is accommodated in the housing 21. The electrode assembly 23 is a component in the battery cell 20 where electrochemical reactions occur. The structure of the electrode assembly 23 can be various, for example, the electrode assembly 23 can be a wound structure formed by winding a positive electrode plate, a separator, and a negative electrode plate, or a stacked structure formed by stacking a positive electrode plate, a separator, and a negative electrode plate.

Exemplarily, the separator is a separator membrane, and the main material of the separator membrane can be selected from at least one of glass fiber, non-woven fabric, polyethylene, polypropylene, and polyvinylidene fluoride.

The battery cell 20 can include one electrode assembly 23, or can include multiple electrode assemblies 23. In FIG. 4, the battery cell 20 includes two electrode assemblies 23, and the two electrode assemblies 23 are stacked along the thickness direction of the electrode assembly 23. The stacking direction of the two electrode assemblies 23 can be the thickness direction of the battery cell 20. Certainly, in other embodiments, the number of electrode assemblies 23 included in the battery cell 20 can also be three, four, five, or the like.

In some embodiments, the battery cell 20 also includes an electrolyte, where the electrolyte is accommodated in the housing 21. The electrolyte can be an electrolyte solution.

In some embodiments, the housing 21 may include a housing body 212 and an end cover 213. A receiving cavity is formed inside the housing body 212, where the receiving cavity is configured to receive the electrode assembly 23, and the receiving cavity has at least one opening 2121. That is, the housing body 212 is a hollow structure with at least one opening 2121, and the end cover 213 covers the opening 2121 of the housing body 212 and forms a sealed connection, so as to form a sealed space for receiving the electrode assembly 23 and the electrolyte.

The first wall portion 211 provided with the pressure relief component 22 can be the end cover 213 of the housing 21, or can be a wall portion of the housing body 212 of the housing 21. Exemplarily, in FIG. 3 and FIG. 4, the first wall portion 211 is the end cover 213. Certainly, the structure of the battery cell 20 is not limited thereto. In other embodiments, the first wall portion 211 can also be a wall portion of the housing body 212 arranged opposite to the end cover 213, that is, the bottom wall of the housing body 212. The first wall portion 211 can also be a side wall of the housing body 212 adjacent to and connected to the end cover 213, and the side wall can be a wall surrounding the end cover 213 and forming the opening 2121.

When assembling the battery cell 20, the electrode assembly 23 can be first placed into the housing body 212, and electrolyte can be filled into the housing body 212. Then, the end cover 213 is covered on the opening 2121 of the housing body 212 to complete the assembly of the battery cell 20.

The housing body 212 can be of various shapes, such as cylindrical, cuboid, or prismatic. The shape of the housing body 212 can be determined according to the specific shape of the electrode assembly 23. For example, if the electrode assembly 23 is a cylindrical structure, a cylindrical housing body 212 can be selected; if the electrode assembly 23 is a cuboid structure, a cuboid housing body 212 can be selected. Certainly, the structure of the end cover 213 can also be various, for example, the end cover 213 can be a plate-like structure or a hollow structure open at one end. Exemplarily, in FIG. 3 and FIG. 4, the housing body 212 is a cuboid structure, the length direction Z of the first wall portion is the length direction of the battery cell 20, the width direction Y of the first wall portion is the thickness direction of the battery cell 20, and the thickness direction X of the first wall portion is the height direction of the battery cell 20.

Certainly, it can be understood that the housing 21 is not limited to the above structure. The housing 21 can also be other structures. For example, the housing 21 can include a housing body 212 and two end covers 213. The housing body 212 is a hollow structure with two opposite openings 2121. One end cover 213 correspondingly covers one opening 2121 of the housing body 212 and forms a sealed connection, so as to form a sealed space for accommodating the electrode assembly 23 and the electrolyte. That is, the housing body 212 has openings 2121 on two opposite sides, and the two end covers 213 respectively cover the two sides of the housing body 212 to seal the corresponding openings 2121.

The material of the housing 21 can also be various, such as copper, iron, aluminum, steel, or aluminum alloy.

In some embodiments, the battery cell 20 also includes electrode terminals 24. The electrode terminals 24 can be insulated and installed on the housing 21, and the electrode terminals 24 are electrically connected to the electrode assembly 23 to output or input electrical energy of the battery cell 20.

It should be noted that the electrode terminals 24 are insulated and installed on the housing 21, which means that no electrical connection is formed between the electrode terminals 24 and the housing 21.

The battery cell 20 can include one electrode terminal 24, or can include two electrode terminals 24. Exemplarily, as shown in FIG. 3 and FIG. 4, the battery cell 20 includes two electrode terminals 24, and the two electrode terminals 24 are spaced apart along the length direction Z of the first wall portion. Each electrode assembly 23 has two tabs 231, and the two tabs 231 are spaced apart along the length direction Y of the wall portion. The two tabs 231 have opposite polarities, and the two electrode terminals 24 are respectively electrically connected to the two tabs 231 of the electrode assembly 23 with opposite polarities, so as to realize the input or output of the positive and negative electrodes of the battery cell 20.

It should be noted that one tab 231 of the electrode assembly 23 can be a component formed by stacking regions of the positive electrode plate not coated with a positive active material layer, forming a positive tab 231, and the other tab 231 can be a component formed by stacking regions of the negative electrode plate not coated with a negative active material layer, forming a negative tab 231.

Exemplarily, the material of the electrode terminal 24 can also be various, for example, the material of the electrode terminal 24 can be copper, iron, aluminum, steel, or aluminum alloy.

There are various positions where the electrode terminal 24 is installed on the housing 21. Exemplarily, in FIG. 3 and FIG. 4, both electrode terminals 24 are installed on the end cover 213 of the housing 21. Certainly, the structure of the battery cell 20 is not limited thereto. In embodiments where the battery cell 20 includes two electrode terminals 24, the two electrode terminals 24 can also both be installed on the housing body 212 of the housing 21. Similarly, one electrode terminal 24 can be installed on the housing body 212 of the housing 21, and the other electrode terminal 24 can be installed on the end cover 213 of the housing 21.

In some embodiments, as shown in FIG. 4, the battery cell 20 may also include two current collecting members 25, where the two current collecting members 25 are both arranged in the housing 21 and spaced apart along the length direction Z of the first wall portion. Each current collecting member 25 is configured to connect one electrode terminal 24 and tabs 231 of multiple electrode assemblies 23 with the same polarity, so as to achieve electrical connection between the electrode terminal 24 and the electrode assembly 23, which is beneficial to reducing the assembly difficulty between the tabs 231 and the electrode terminal 24.

Exemplarily, the material of the current collecting member 25 can also be various, for example, the material of the current collecting member 25 can be copper, iron, aluminum, steel, or aluminum alloy.

In the embodiments of the present application, the pressure relief component 22 functions to relieve pressure in the battery cell 20, and is used to release the internal pressure of the battery cell 20 when the internal pressure or temperature of the battery cell 20 reaches a predetermined value.

The structure of the pressure relief component 22 can be various. For example, the pressure relief component 22 can be a structure separately arranged from the first wall portion 211 of the housing 21, or the pressure relief component 22 can be a structure integrally formed with the first wall portion 211 of the housing 21. When the pressure relief component 22 and the first wall portion 211 of the housing 21 are separately arranged structures, that is, the first wall portion 211 of the housing 21 is provided with a pressure relief hole (not shown in the figure) for installing the pressure relief component 22, the pressure relief component 22 is connected to the first wall portion 211 and covers the pressure relief hole. The connection method between the pressure relief component 22 and the first wall portion 211 can be various, for example, welding or snapping. When the pressure relief component 22 and the first wall portion 211 of the housing 21 are integrally formed structures, that is, the pressure relief component 22 is a wall portion of the housing 21, which means that the pressure relief component 22 is integrated on the first wall portion 211 and forms a wall of the housing 21. Correspondingly, the pressure relief component 22 is a weak structure formed on the first wall portion 211 for cracking when the battery cell 20 relieves pressure.

Exemplarily, the pressure relief component 22 and the first wall portion 211 are integrally formed, which means that the pressure relief component 22 is the first wall portion 211, and the first weak portion 2211 formed by the bottom wall of the first groove 221 and the predetermined pressure relief area P are both formed on the first wall portion 211.

The first surface 2111 and the second surface 2112 are two opposite surfaces of the first wall portion 211 in its thickness direction X. The first groove 221 is recessed from the first surface 2111 towards the second surface 2112. In embodiments where the first wall portion 211 and the pressure relief component 22 are integrally formed, it can be understood that the first groove 221 is arranged on the first surface 2111.

The pressure relief component 22 forms a first weak portion 2211 at the position corresponding to the first groove 221, that is, the bottom wall of the first groove 221 is the first weak portion 2211. The bottom wall of the first groove 221 is part of the pressure relief component 22. The bottom wall of the first groove 221 is the area of the pressure relief component 22 with the smallest thickness in the thickness direction X of the first wall portion. Therefore, the bottom wall of the first groove 221 is more likely to crack due to increased internal air pressure of the battery cell 20 than other areas of the pressure relief component 22. The extension trajectory of the first groove 221 is the cracking trajectory of the pressure relief component 22. The pressure relief component 22 can open the predetermined pressure relief area P after at least a portion of the bottom wall of the first groove 221 cracks, so that the battery cell 20 can release the internal pressure of the battery cell 20 from the predetermined pressure relief area P.

The first groove 221 defines at least one predetermined pressure relief area P, that is, the predetermined pressure relief area P is part of the pressure relief component 22. The first groove 221 can define one predetermined pressure relief area P. The first groove 221 can also define multiple predetermined pressure relief areas P, such as two predetermined pressure relief areas P, three predetermined pressure relief areas P, four predetermined pressure relief areas P, and so on.

Depending on the structural shape of the first groove 221, the formation method of the predetermined pressure relief area P is different. For example, in some embodiments, along the extension direction of the first groove 221, the first groove 221 forms a closed structure, and the space enclosed by the first groove 221 is the predetermined pressure relief area P. Exemplarily, as shown in FIGs. 3-5, the extension trajectory of the first groove 221 is elliptical, and the first groove 221 defines an elliptical predetermined pressure relief area P. In this embodiment, the sum S₁ of the areas of all the predetermined pressure relief areas P is the area of the region enclosed by the outer contour of the first groove 221. The outer contour of the first groove 221 is the contour of the edge closest to the first wall portion 211 in the width direction of the first groove 221.

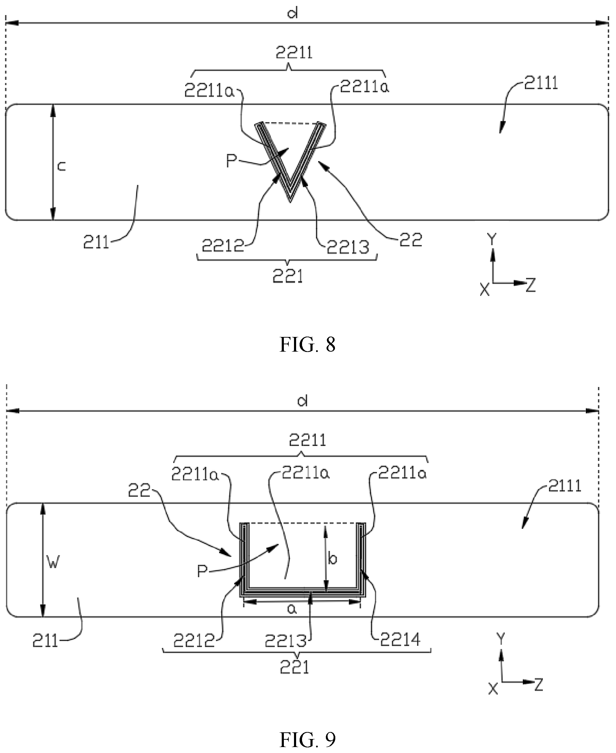

In other embodiments, along the extension direction of the first groove 221, the first groove 221 is a non-closed structure, and the predetermined pressure relief area P is jointly defined by the first groove 221 and the connecting line of the ends of the first groove 221. It should be noted that the connecting line of the ends of the first groove 221 is a virtual line. For example, as shown in FIG. 8, along the extension direction of the first groove 221, the first groove 221 is V-shaped, then the predetermined pressure relief area P is jointly defined by the V-shaped first groove 221 and the connecting line of the two ends of the V-shaped first groove 221. For example, as shown in FIG. 9, along the extension direction of the first groove 221, the first groove 221 is U-shaped, then the predetermined pressure relief area P is jointly defined by the U-shaped first groove 221 and the connecting line of the two ends of the U-shaped first groove 221. In this case, the sum S₁ of the areas of all the predetermined pressure relief areas P is the area of the region jointly enclosed by the outer contour of the first groove 221 and the connecting line of the ends of the first groove 221. The dashed lines shown at the position of the pressure relief component 22 in FIG. 8 and FIG. 9 are the connecting lines of the ends of the first groove 221.

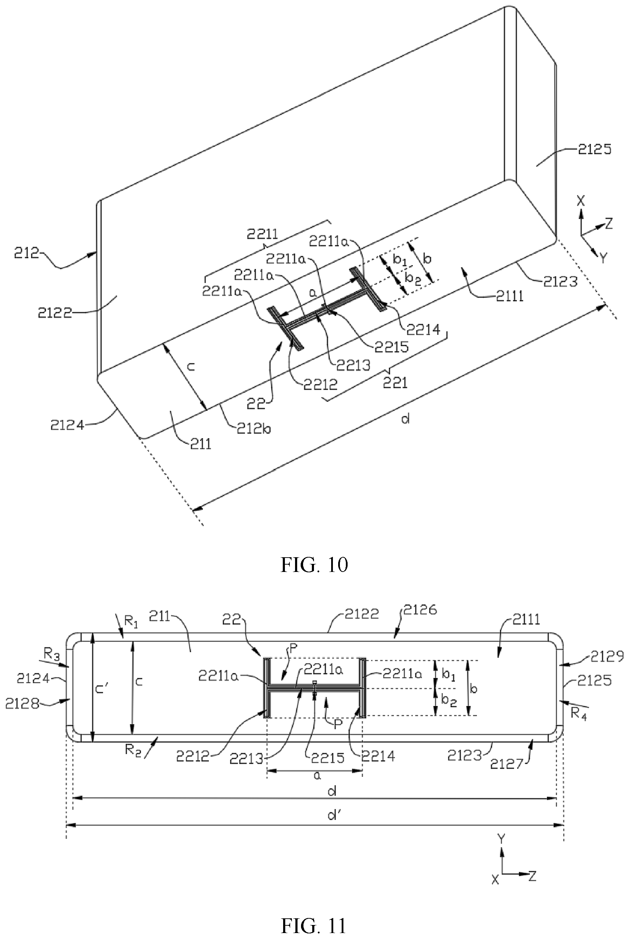

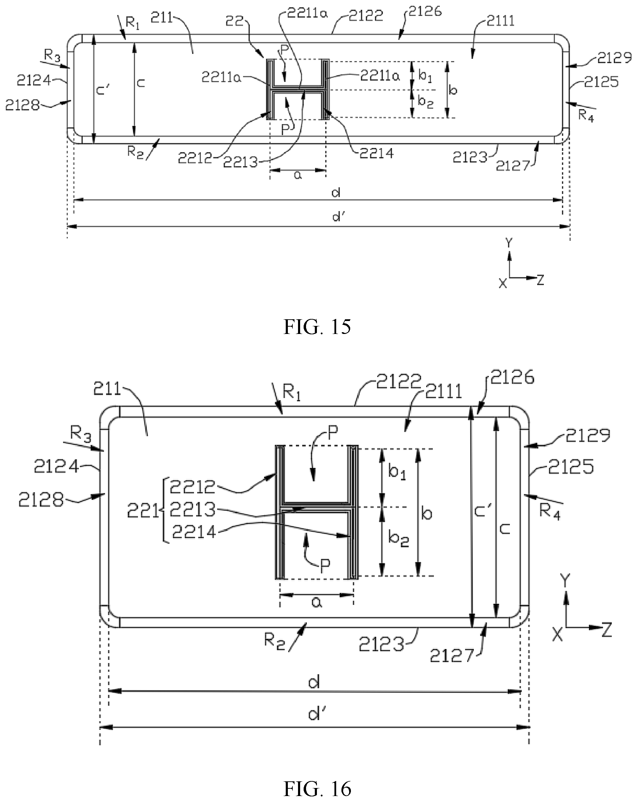

The dashed lines parallel to the second groove 222 in FIGs. 11-16 are the connecting lines of the ends of the first groove segment 2212 and the third groove segment 2214 of the first groove 221 in their extension direction. The two dashed lines and the first groove 221 jointly form two predetermined pressure relief areas P. The dashed lines in FIG. 15 are the connecting lines of the ends of the first groove segment 2212 and the third groove segment 2214 of the first groove 221 in their extension direction. The two dashed lines and the first groove 221 jointly form two predetermined pressure relief areas P.

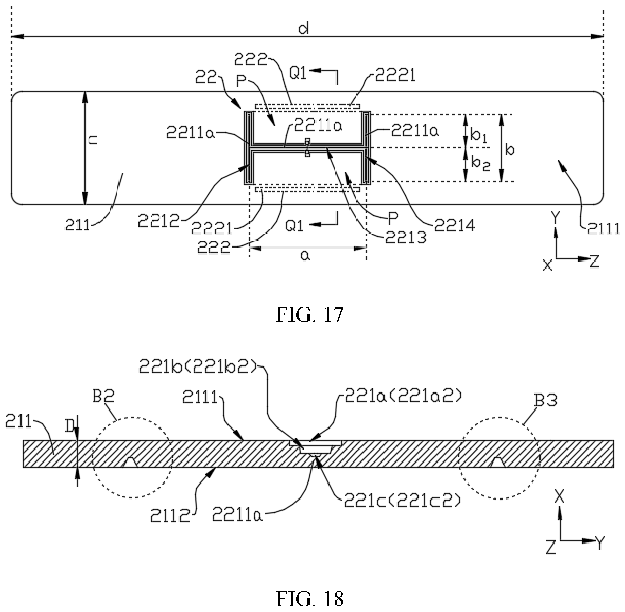

The dashed lines parallel to the second groove 222 in FIG. 17 are the connecting lines of the ends of the first groove segment 2212 and the third groove segment 2214 of the first groove 221 in their extension direction. The two dashed lines and the first groove 221 jointly form two predetermined pressure relief areas P.

The first groove 221 includes at least one groove segment, and each groove segment of the first groove 221 forms a first weak segment 2211a corresponding to its bottom wall. The first weak segments 2211a formed by the various groove segments jointly form the first weak portion 2211. It should be noted that the various groove segments of the first groove 221 are structures extending along a smooth trajectory, such as structures extending along a straight line or an arc. The groove segments of the first groove 221 can be one or more. If the first groove 221 is a straight line structure, an arc structure, or a ring structure, then the first groove 221 includes only one groove segment, and the bottom wall of the first groove 221 forms the first weak portion 2211 including one first weak segment 2211a. If the first groove 221 is a "V"-shaped structure, a "U" structure, or an "H"-shaped structure, then the first groove 221 includes multiple groove segments, and the bottom wall of the first groove 221 forms the first weak portion 2211 including multiple first weak segments 2211a. Exemplarily, in FIGs. 3-5, the pressure relief component 22 is provided with a first groove 221, and the first groove 221 is a ringshaped groove, so the first groove 221 includes one groove segment, and the bottom wall of the first groove 221 forms the first weak portion 2211 including one first weak segment 2211a. For example, as shown in FIG. 8, the pressure relief component 22 is provided with a first groove 221, and the first groove 221 includes a connected first groove segment 2212 and a second groove segment 2213, forming a V-shaped first groove 221. The bottom wall of the first groove segment 2212 and the bottom wall of the second groove segment 2213 respectively form a first weak segment 2211a, and the first weak portion 2211 formed by the bottom wall of the first groove 221 includes two first weak segments 2211a.

As shown in FIG. 9, the pressure relief component 22 is provided with a first groove 221, and the bottom wall of the first groove 221 forms a first weak portion 2211. The first groove 221 includes a connected first groove segment 2212, a second groove segment 2213, and a third groove segment 2214, forming a U-shaped first groove 221. The first groove segment 2212 and the third groove segment 2214 are arranged opposite to each other, and the second groove segment 2213 connects the first groove segment 2212. The bottom wall of the first groove segment 2212, the bottom wall of the second groove segment 2213, and the bottom wall of the third groove segment 2214 respectively form a first weak segment 2211a. The first groove 221 includes three groove segments, and the first weak portion 2211 formed by the bottom wall of the first groove 221 includes three first weak segments 2211a.

For another example, in FIG. 10, the pressure relief component 22 is provided with a first groove 221, and the bottom wall of the first groove 221 forms a first weak portion 2211. The first groove 221 includes a first groove segment 2212, a second groove segment 2213, a third groove segment 2214, and a fourth groove segment 2215. The first groove segment 2212 and the third groove segment 2214 are arranged opposite to each other, the second groove segment 2213 connects the first groove segment 2212 and the third groove segment 2214, and the fourth groove segment 2215 is located between the first groove segment 2212 and the third groove segment 2214, and the fourth groove segment 2215 is connected to the second groove segment 2213. Then, the bottom wall of the first groove segment 2212, the bottom wall of the second groove segment 2213, the bottom wall of the third groove segment 2214, and the bottom wall of the fourth groove segment 2215 all form a first weak segment 2211a. The first groove 221 includes four groove segments, and the first weak portion 2211 formed by the bottom wall of the first groove 221 includes four first weak segments 2211a.

The sum S₁ of the areas of all the predetermined pressure relief areas P is set to be 0.03 to 0.3 times the area S₂ of the first surface 2111 where the first groove 221 is provided, that is, the ratio of the sum S₁ of the areas of all the predetermined pressure relief areas P to the area S₂ of the first surface 2111 where the first groove 221 is provided is set to be between 0.03 and 0.3. Exemplarily, the ratio of the sum S₁ of the areas of all the predetermined pressure relief areas P to the area S₂ of the first surface 2111, that is, S₁/S₂, can be: 0.03, 0.04, 0.05, 0.0588, 0.07, 0.08, 0.09, 0.1, 0.15, 0.2, 0.25, 0.3, or the like.

In order to make the solved technical problems, technical solutions, and beneficial effects of the embodiments of the present application clearer, the following will provide further detailed descriptions in conjunction with examples 1-7 and comparative examples 1-4. Obviously, the described examples are only a part of the examples of the present application, and not all of the examples. The following description of at least one exemplary embodiment is merely illustrative and shall not be construed as any limitation on the present application and its applications. All other examples obtained by persons skilled in the art based on the examples in the present application without creative effort fall within the protection scope of the present application.

### Example 1

### 1. Preparation of battery cell 20

### (1) Preparation of positive electrode plate

A positive electrode slurry was prepared by mixing a positive active material LiNi_{0.7}Co_{0.1}Mn_{0.1}O₂, a conductive agent Super P, and a binder polyvinylidene fluoride (PVDF) in N-methylpyrrolidone (NMP), where the solid content in the positive electrode slurry was 50wt%, and the mass ratio of LiNi_{0.7}Co_{0.1}Mn_{0.1}O₂, Super P, and PVDF in the solid components was 8:1:1. The positive electrode slurry was coated on the upper and lower surfaces of a current collector aluminum foil, dried at 85°C, cold-pressed, then trimmed, cut, and slit, and then dried under vacuum at 85°C for 4 hours to prepare the positive electrode plate.

### (2) Preparation of negative electrode plate

Graphite was uniformly mixed with a conductive agent Super P, a thickener carboxymethyl cellulose (CMC), and a binder styrene-butadiene rubber (SBR) in deionized water to prepare a negative electrode slurry, where the solid content in the negative electrode slurry was 30wt%, and the mass ratio of graphite, silicon monoxide, Super P, CMC, and binder styrene-butadiene rubber (SBR) in the solid components was 88:7:3:2. The negative electrode slurry was applied on the upper and lower surfaces of a current collector copper foil, dried at 85°C, followed by cold-pressing, trimming, cutting, and slitting, and then dried under vacuum at 120°C for 12 hours to prepare the negative electrode plate.

### (3) Preparation of electrolyte

In an argon atmosphere glove box (H₂O < 0.1ppm, O₂ < 0.1ppm), a fully dried electrolyte salt LiPF₆ was dissolved in a mixed solvent (the mixed solvent included ethylene carbonate (EC) and diethyl carbonate (DEC), and ethylene carbonate (EC) and diethyl carbonate (DEC) were mixed in a mass ratio of 50:50), and after uniform mixing, a liquid electrolyte with a concentration of 1mol/L was obtained.

### (4) Separator

A 16µm polyethylene film was used as the separator.

### (5) Preparation of battery cell 20

The positive electrode plate, separator, and negative electrode plate were stacked in order, so that the separator was positioned between the positive and negative electrode plates to isolate the positive and negative electrodes, and the electrode assembly 23 was obtained by winding. The electrode assembly 23 was placed in an aluminum housing 21, and the prepared electrolyte was injected into the dried housing 21. The battery cell 20 was prepared by encapsulation, standing, formation, shaping, capacity testing, and the like. The housing 21 of the battery cell 20 was a cuboid structure. The housing body 212 of the housing 21 was a structure with an opening 2121 formed at one end. The wall portion opposite to the end cover 213 of the housing body 212 was the first wall portion 211. The first wall portion 211 was a rectangular wall portion, and a pressure relief component 22 was arranged on the first wall portion 211 of the housing 21. The first wall portion 211 and the pressure relief component 22 were integrally formed. The pressure relief component 22 was provided with a first groove 221, so that the bottom wall of the first groove 221 formed a first weak portion 2211. The first groove 221 was an H-shaped structure, and the first groove 221 was a three-stage score line groove. The first groove 221 was arranged on the outer surface of the first wall portion 211. The sum S₁ of the areas of all the predetermined pressure relief areas P of the pressure relief component 22 of the battery cell 20 in Example 1 was 420mm², and the area S₂ of the first surface 2111 was 14000mm².

The preparation methods of battery cells 20 in Examples 2-7 and Comparative Examples 1-4 were the same as that in Example 1, except for the different sum S₁ of the areas of all the predetermined pressure relief areas P and the different area S₂ of the first surface 2111.

Fatigue tests were performed on the battery cells 20 in Examples 1-7 and Comparative Examples 1-4 to obtain the number of fatigue cycles during long-term use of the battery cells 20, and thermal runaway tests were performed on the battery cells 20 to obtain the holding time during thermal runaway of the battery cells 20, so as to evaluate the reliability of the battery cells 20. The specific situation is shown in Table 1.

The method for measuring the number of fatigue cycles of the battery cell 20 was as follows:
(1) A special test fixture was prepared. Specifically, the fixture included three 10mm steel plates (first steel plate, second steel plate, third steel plate). Each steel plate could completely cover the large surface of the battery cell 20 (the large surface of the battery cell 20 referred to the outer surface of the housing body 212 perpendicular to the width direction Y of the first wall portion). The first steel plate and the third steel plate were located at both ends of the fixture and were fixed by bolts. The second steel plate was located between the first steel plate and the third steel plate, and the second steel plate was constrained by a guide rail, so the second steel plate could only move in a translational manner perpendicular to the plane of the steel plate.
(2) The battery cell 20 was installed between the first steel plate and the second steel plate. A supporting structure was placed between one large surface of the battery cell 20 and the first steel plate, and between the other large surface and the second steel plate. The supporting structure could be a thermal insulation pad or a water-cooled plate (consistent with the material/structure between two adjacent battery cells 20 in the actual battery 100). The supporting structure could be compressed to provide expansion space for the battery cell 20 during charging and discharging cycle aging. The large surface of the battery cell 20 was attached to the supporting structure, the first steel plate was attached to the corresponding supporting structure, the second steel plate was attached to the corresponding supporting structure, and a pressure sensor was provided between the second steel plate and the third steel plate.
(3) The position of the second steel plate was adjusted by the bolt pretightening force, the pressure sensor was observed, so that the initial extrusion force on the battery cell 20 was 2000N, and the two electrical connection parts (positive electrode terminal 24 and negative electrode terminal 24) of the battery cell 20 were connected to the charge and discharge equipment.
(4) The battery cell 20 and the fixture were placed in a constant temperature environment of 25±2°C, and the test was started after the battery cell 20 reached temperature equilibrium.
(5) The test steps were conducted in accordance with Section 6.4 "Standard Cycle Life" in "GB/T 31484-2015 Requirements and Test Methods for Cycle Life of Power Batteries for Electric Vehicles", and the test cycle termination condition was changed to "stop the test until damage occurred at the first groove 221 of the pressure relief component 22".

Specifically, the test was performed according to the following steps:
(a) Discharge was performed at 1I₁(A) current to 2.8V.
(b) Rest was taken for no less than 30min.
(c) Charge was performed according to the method specified in Section 6.1.1.3 of GB/T 31484-2015 "Cycle Life Requirements and Test Methods for Traction Batteries Used in Electric Vehicles".
(d) Rest was taken for no less than 30min.
(e) Discharge was performed at 1I₁(A) current to 2.8V.
(f) Cycle was performed according to (b) to (e) until damage occurred at the first groove 221 of the pressure relief component 22, and the test was stopped.

That is, during the test, the area where the pressure relief component 22 of the battery cell 20 was provided with the first groove 221 was continuously observed until the pressure relief position was damaged and leaked, and the number of cycles was recorded as the cycle fatigue life of the battery cell 20. The more cycle fatigue life the battery cell 20 had, the smaller the probability of valve opening and leakage due to gas production during long-term use of the battery cell 20, and the longer the service life.

The thermal runaway test method for battery cell 20 was as follows:
1. A heating plate was selected according to the size of the battery cell 20. The size of the heating plate should cover the large surface of the battery cell 20 as much as possible (coverage area ≥ 60%);
2. Before the test, the battery cell 20 was charged to 100% SOC, and it was ensured that the temperature of the battery cell 20 was 25±5°C;
3. Sensor arrangement:
   (1) Arrangement of temperature sensing wires: A layer of Teflon was attached to the center area of the two large surfaces of the battery cell 20, the temperature sensing wires were arranged above the Teflon, and then another layer of Teflon was attached;
   (2) Arrangement of voltage sampling wires: A layer of Teflon was attached to the positive electrode terminal, negative electrode terminal, and housing 21 of the battery cell 20, the voltage sampling wires were arranged above the Teflon, and then another layer of Teflon was attached;
   (3) Arrangement of air pipes: A hole was drilled in the first wall portion 211 of the housing 21 of the battery cell 20. The drilling position was at the center of the edge of the first groove 221 and the side surface of the housing body 212 (the outer surface of the wall portion adjacent to the first wall portion 211 along the length direction Z of the first wall portion of the housing body 212). The air pipe was inserted into the hole and sealed, and the air pipe was connected to the air pressure sensor;
   (4) The temperature sensing wires, voltage sampling wires, and air pressure sensor were connected to a data acquisition instrument to collect and analyze data in real time. The sampling frequency of the data acquisition instrument: ≤ 0.1s;
4. The fixture was assembled, so that the fixture completely covered the large surface of the battery cell 20, with a clamping force of 3000N. Note: The arrangement order of the fixture, heating plate, and battery cell 20: fixture + heating plate + battery cell 20 + fixture;
5. Test: The data acquisition instrument was turned on to collect temperature, voltage, and air pressure data, and then the heating plate with a power of 500W was turned on to heat the battery cell 20 until the battery cell 20 underwent thermal runaway.
6. The pressure holding time of the battery cell 20 was obtained. The thermal runaway moment and the valve opening moment were determined based on the temperature, voltage, and air pressure data collected by the data acquisition instrument, and the pressure holding time of the battery cell 20 was calculated as: pressure holding time = valve opening moment - thermal runaway moment.

Thermal runaway judgment criteria: a) A voltage drop was produced by the trigger object, and the drop exceeded 25% of the initial voltage; b) The temperature at the detection point reached the maximum operating temperature specified by the manufacturer; c) The temperature rise rate at the detection point dT/dt ≥ 1°C/s, and lasted for more than 3s. When a) and c) or b) and c) occurred, it was determined that thermal runaway had occurred, and the thermal runaway moment was determined.

Valve opening moment determination: When the air pressure dropped by more than 25%, it could be determined that the valve had opened (the first groove 221 had cracked), and the moment when the air pressure began to drop was the valve opening moment.

Fatigue tests were performed on the battery cells 20 in Examples 1-7 and Comparative Examples 1-4 to obtain the number of fatigue cycles during long-term use of the battery cells 20, and thermal runaway tests were performed on the battery cells 20 to obtain the holding time during thermal runaway of the battery cells 20, so as to evaluate the reliability of the battery cells 20. The specific situation is shown in Table 1.

**Table 1**

| | S₁ (mm²) | S₂ (mm²) | S₁/S₂ | Experimental result 1 fatigue cycles | Experimental result 2 holding time (s) |
|---|---|---|---|---|---|
| Comparative Example 1 | 200 | 20000 | 0.01 | 3200 | 4.7 |
| Comparative Example 2 | 380 | 19000 | 0.02 | 2915 | 3.9 |
| Example 1 | 420 | 14000 | 0.03 | 1987 | 2.8 |
| Example 2 | 500 | 8500 | 0.0588 | 1845 | 2.3 |
| Example 3 | 600 | 7500 | 0.08 | 1789 | 2.0 |
| Example 4 | 650 | 6500 | 0.1 | 1675 | 1.8 |
| Example 5 | 900 | 6000 | 0.15 | 1532 | 1.7 |
| Example 6 | 1250 | 5000 | 0.25 | 1390 | 1.5 |
| Example 7 | 1300 | 4300 | 0.3 | 1270 | 1.4 |
| Comparative Example 3 | 1500 | 3750 | 0.4 | 873 | 1.2 |
| Comparative Example 4 | 1600 | 3200 | 0.5 | 750 | 1.1 |

As can be seen from Table 1, as S₁/S₂ gradually increases, the holding time of the battery cell 20 becomes shorter, that is, as S₁/S₂ gradually increases, the timely pressure relief performance of the battery cell 20 is better, and the probability of explosion and fire during thermal runaway of the battery cell 20 is lower. As S₁/S₂ gradually increases, the fatigue cycles of the battery cell 20 gradually decrease, that is, as S₁/S₂ gradually increases, the possibility of fatigue valve opening and leakage of the battery cell 20 during long-term use gradually increases.

In Table 1, when S₁/S₂ is 0.01 and 0.02, the holding times of the battery cell 20 are 4.7s and 3.9s, respectively, which are much longer than the holding times when S₁/S₂ is 0.03, 0.0588, 0.08, 0.1, 0.15, 0.25, 0.3, 0.4, and 0.5. That is, the holding times of the battery cells 20 in Comparative Example 1 and Comparative Example 2 during thermal runaway are much longer than the holding times of the battery cells 20 in Examples 1-7, Comparative Example 3, and Comparative Example 4. Therefore, when S₁/S₂ ≥ 0.03, the holding time of the battery cell 20 during thermal runaway is shorter, which can increase the possibility of timely pressure relief of the pressure relief component 22 of the battery cell 20, and reduce the risk of the housing 21 of the battery cell 20 bursting, exploding, or catching fire due to untimely pressure relief of the pressure relief component 22.

In Table 1, when S₁/S₂ is 0.4 and 0.5, the fatigue cycles of the battery cell 20 are 873 and 750, respectively, which are much smaller than the fatigue cycles when S₁/S₂ is 0.01, 0.02, 0.03, 0.0588, 0.08, 0.1, 0.15, 0.25, and 0.3. That is, the fatigue cycles of the battery cells 20 in Comparative Example 3 and Comparative Example 4 are much smaller than the fatigue cycles of the battery cells 20 in Examples 1-7, Comparative Example 1, and Comparative Example 2. Therefore, when S₁/S₂ ≤ 0.3, the fatigue cycles of the battery cell 20 are large, which means that the battery cell 20 has a high fatigue life, and further reduces the risk of leakage problems caused by premature actuation or fatigue cracking of the pressure relief component 22 in the area corresponding to the first groove 221 after long-term use of the battery cell 20. Therefore, 0.03 ≤ S₁/S₂ ≤ 0.3 can balance the reduction of the risk of the housing 21 of the battery cell 20 bursting, exploding, or catching fire due to untimely pressure relief of the pressure relief component 22, and the reduction of the risk of leakage problems caused by premature actuation or fatigue cracking of the pressure relief component 22 in the area corresponding to the first groove 221 after long-term use of the battery cell 20, so as to improve the service stability of the pressure relief component 22, and improve the service life and service reliability of the battery cell 20.

In summary, by setting the sum S₁ of the areas of all the predetermined pressure relief areas P to be 0.03 to 0.3 times the area S₂ of the first surface 2111 where the first groove 221 is provided, that is, setting the ratio of the sum S₁ of the areas of all the predetermined pressure relief areas P to the area S₂ of the first surface 2111 where the first groove 221 is provided to be between 0.03 and 0.3, the relative sizes of the sum S₁ of the areas of all the predetermined pressure relief areas P and the area S₂ of the first surface 2111 where the first groove 221 is provided are set more reasonably. Setting the ratio to be greater than or equal to 0.03 can alleviate the problem of insufficient area of the predetermined pressure relief area P, so as to alleviate the phenomenon that the bottom wall of the first groove 221 has excessive pressure bearing capacity, which causes the bursting pressure required for the pressure relief component 22 to relieve pressure in the battery cell 20 to be too large, thereby reducing the risk of the housing 21 of the battery cell 20 bursting, exploding, or catching fire due to untimely pressure relief of the pressure relief component 22, and further effectively improving the service reliability of the battery cell 20. The expansion force generated by the expansion of the battery cell 20 during use will cause deformation of the first wall portion 211. Setting the ratio to be less than or equal to 0.3 can alleviate the problem that the strength and rigidity of the first wall portion 211 are reduced due to the predetermined pressure relief area P being too large relative to the area of the first surface 2111, which easily causes large deformation. It can also reduce the concentration of stress on the bottom wall of the first groove 221 when the expansion force generated by the expansion of the battery cell 20 during use acts on the pressure relief component 22, and enables the predetermined pressure relief area P to absorb a part of the expansion force, thereby effectively alleviating phenomena such as tensile deformation of the bottom wall of the first groove 221 of the pressure relief component 22, so as to reduce the strain and strain amplitude of the bottom wall of the first groove 221 of the pressure relief component 22, that is, to reduce the deformation of the bottom wall of the first groove 221, and further alleviate the phenomenon that the structural strength of the bottom wall of the first groove 221 of the pressure relief component 22 is reduced due to excessive strain and strain amplitude, thereby reducing the risk of leakage problems caused by premature actuation or fatigue cracking of the pressure relief component 22 in the area corresponding to the first groove 221 after long-term use of the battery cell 20, so as to improve the service stability of the pressure relief component 22, which is beneficial to improving the service life and service reliability of the battery cell 20.

In some embodiments, 500mm² ≤ S₁ ≤ 1300mm².

Exemplarily, S₁ can be 500mm², 600mm², 630mm², 650mm², 800mm², 900mm², 1000mm², 1200mm², 1250mm², 1300mm², or the like.

Continue to refer to Table 1. When S₁ ≥ 500mm², the holding time of the battery cell 20 is shorter compared to the holding time of the battery cell 20 when S₁ is 420mm², which can increase the possibility of timely pressure relief of the pressure relief component 22 of the battery cell 20, and reduce the risk of the housing 21 of the battery cell 20 bursting, exploding, or catching fire due to untimely pressure relief of the pressure relief component 22. When S₁ ≤ 1300mm², the fatigue cycles of the battery cell 20 are greater compared to the fatigue cycles of the battery cell 20 when S₁ is 1500mm² and 1600mm², which means that the battery cell 20 has a higher fatigue life, and further reduces the risk of leakage problems caused by premature actuation or fatigue cracking of the pressure relief component 22 in the area corresponding to the first groove 221 after long-term use of the battery cell 20. Therefore, when 500mm² ≤ S₁ ≤ 1300mm², it can reduce the risk of the housing 21 of the battery cell 20 bursting, exploding, or catching fire due to untimely pressure relief of the pressure relief component 22, and reduce the risk of leakage problems caused by premature actuation or fatigue cracking of the pressure relief component 22 in the area corresponding to the first groove 221 after long-term use of the battery cell 20, so as to improve the service stability of the pressure relief component 22, and improve the service life and service reliability of the battery cell 20.

Therefore, by limiting the sum S₁ of the areas of all the predetermined pressure relief areas P to be between 500mm² and 1300mm², and setting the sum of the areas of all the predetermined pressure relief areas P to be greater than or equal to 500mm², the problem of insufficient area of the predetermined pressure relief area P can be alleviated, so as to alleviate the phenomenon that the bottom wall of the first groove 221 has excessive pressure bearing capacity, which causes the bursting pressure required for the pressure relief component 22 to relieve pressure in the battery cell 20 to be too large, thereby reducing the risk of the housing 21 of the battery cell 20 bursting, exploding, or catching fire due to untimely pressure relief of the pressure relief component 22, and further effectively improving the service reliability of the battery cell 20. Setting the sum of the areas of all the predetermined pressure relief areas P to be less than or equal to 1300mm² can alleviate the problem that the strength of the first wall portion 211 is reduced due to the predetermined pressure relief area P being too large, which easily causes large deformation. It can also reduce the concentration of stress on the bottom wall of the first groove 221 when the expansion force generated by the expansion of the battery cell 20 during use acts on the pressure relief component 22, and enables the predetermined pressure relief area P to absorb a part of the expansion force, thereby effectively alleviating phenomena such as tensile deformation of the bottom wall of the first groove 221 of the pressure relief component 22, so as to reduce the strain and strain amplitude of the bottom wall of the first groove 221 of the pressure relief component 22, that is, to reduce the deformation of the bottom wall of the first groove 221, and further alleviate the phenomenon that the structural strength of the bottom wall of the first groove 221 of the pressure relief component 22 is reduced due to excessive strain and strain amplitude, thereby reducing the risk of leakage problems caused by premature actuation or fatigue cracking of the pressure relief component 22 in the area corresponding to the first groove 221 after long-term use of the battery cell 20, so as to improve the service stability of the pressure relief component 22, which is beneficial to improving the service life and service reliability of the battery cell 20.

In some embodiments, 5000mm² ≤ S₂ ≤ 8500mm².

Exemplarily, S₂ can be 5000mm², 6000mm², 6500mm², 7000mm², 7500mm², 8500mm², or the like.

Continue to refer to Table 1. When S₂ ≥ 5000mm², the fatigue cycles of the battery cell 20 are greater compared to the fatigue cycles of the battery cell 20 when S₂ is 4300mm², which means that the battery cell 20 has a higher fatigue life, and further reduces the risk of leakage problems caused by premature actuation or fatigue cracking of the pressure relief component 22 in the area corresponding to the first groove 221 after long-term use of the battery cell 20. When S₂ ≤ 8500mm², the holding time of the battery cell 20 is shorter compared to the holding time of the battery cell 20 when S₂ is 14000mm², which can increase the possibility of timely pressure relief of the pressure relief component 22 of the battery cell 20, and reduce the risk of the housing 21 of the battery cell 20 bursting, exploding, or catching fire due to untimely pressure relief of the pressure relief component 22. Therefore, when 5000mm² ≤ S₂ ≤ 8500mm², it can reduce the risk of the housing 21 of the battery cell 20 bursting, exploding, or catching fire due to untimely pressure relief of the pressure relief component 22, and reduce the risk of leakage problems caused by premature actuation or fatigue cracking of the pressure relief component 22 in the area corresponding to the first groove 221 after long-term use of the battery cell 20, so as to improve the service stability of the pressure relief component 22, and improve the service life and service reliability of the battery cell 20.

Therefore, by setting the area S₂ of the first surface 2111 where the first groove 221 is provided to be between 5000mm² and 8500mm², and setting the area of the first surface 2111 to be greater than or equal to 5000mm², the problem that the strength of the first wall portion 211 is reduced due to the area of the first surface 2111 being too small, which easily causes large deformation, can be alleviated. It can also reduce the concentration of stress on the bottom wall of the first groove 221 when the expansion force generated by the expansion of the battery cell 20 during use acts on the pressure relief component 22, and enables the predetermined pressure relief area P to absorb a part of the expansion force, thereby effectively alleviating phenomena such as tensile deformation of the bottom wall of the first groove 221 of the pressure relief component 22, so as to reduce the strain and strain amplitude of the bottom wall of the first groove 221 of the pressure relief component 22, that is, to reduce the deformation of the bottom wall of the first groove 221, and further alleviate the phenomenon that the structural strength of the bottom wall of the first groove 221 of the pressure relief component 22 is reduced due to excessive strain and strain amplitude, thereby reducing the risk of leakage problems caused by premature actuation or fatigue cracking of the pressure relief component 22 in the area corresponding to the first groove 221 after long-term use of the battery cell 20, so as to improve the service stability of the pressure relief component 22, which is beneficial to improving the service life and service reliability of the battery cell 20. Setting the area of the first surface 2111 to be less than or equal to 8500mm² can alleviate the problem that the strength and rigidity of the first wall portion 211 are too large to withstand greater pressure and are difficult to deform due to the area of the first surface 2111 being too small, so as to alleviate the phenomenon that the bottom wall of the first groove 221 has excessive pressure bearing capacity, which causes the bursting pressure required for the pressure relief component 22 to relieve pressure in the battery cell 20 to be too large, thereby reducing the risk of the housing 21 of the battery cell 20 bursting, exploding, or catching fire due to untimely pressure relief of the pressure relief component 22, and further effectively improving the service reliability of the battery cell 20.

In some embodiments, the first wall portion 211 is a rectangular wall portion; and along a width direction Y of the first wall portion, a dimension of the first surface 2111 is c; along a length direction Z of the first wall portion, a dimension of the first surface 2111 is d; and S₂ = c*d; where 55mm ≤ c ≤ 85mm, and 100mm ≤ d ≤ 260mm.

c is the dimension of the first surface 2111 along the width direction Y of the first wall portion. d is the dimension of the first surface 2111 along the length direction Z of the first wall portion.

Since the boundaries of the first wall portion 211 in its length direction and its width direction are not easy to determine after the battery cell 20 is assembled and formed, in some embodiments, the distance c' between the outer surfaces of the second wall portion 2122 and the third wall portion 2123 connected to the two ends of the first wall portion in the width direction Y can be measured, so as to equate the distance between the outer surfaces of the second wall portion 2122 and the third wall portion 2123 to the dimension c of the first wall portion 211 in the width direction Y of the first wall portion, that is, c' = c. In some cases, the outer surface of the second wall portion 2122 and the surface of the first wall portion 211 facing away from the interior of the housing body 212 (first surface 2111) are connected by a first chamfered surface 2126, and the outer surface of the third wall portion 2123 and the surface of the first wall portion 211 facing away from the interior of the housing body 212 (first surface 2111) are connected by a second chamfered surface 2127. Along the width direction Y of the first wall portion, the dimension of the first chamfered surface 2126 is R1, and the dimension of the second chamfered surface 2127 is R2. Then, the dimension c of the first surface 2111 is the distance between the outer surfaces of the second wall portion 2122 and the third wall portion 2123 along the width direction Y of the first wall portion minus the dimension of the first chamfered surface 2126 in the width direction Y of the first wall portion and minus the dimension of the dimension of the second chamfered surface 2127 in the width direction Y of the first wall portion, that is, c = c' - R1 - R2. The first chamfered surface 2126 and the second chamfered surface 2127 can be chamfered surfaces or rounded surfaces. In embodiments where the first chamfered surface 2126 and the second chamfered surface 2127 are rounded surfaces, R1 can be the radius of the first chamfered surface 2126, and R2 can be the radius of the second chamfered surface 2127.

The distance d' between the outer surfaces of the fourth wall portion 2124 and the fifth wall portion 2125 connected to the two ends of the first wall portion in the length direction Z can be measured, and the distance between the outer surfaces of the fourth wall portion 2124 and the fifth wall portion 2125 can be equated to the dimension d of the first wall portion 211 in the length direction Z of the first wall portion, that is, d = d'. In some cases, the outer surface of the fourth wall portion 2124 and the surface of the first wall portion 211 facing away from the interior of the housing body 212 (first surface 2111) are connected by a third chamfered surface 2128, and the outer surface of the fifth wall portion 2125 and the surface of the first wall portion 211 facing away from the interior of the housing body 212 (first surface 2111) are connected by a fourth chamfered surface 2129. Along the length direction Z of the first wall portion, the dimension of the third chamfered surface 2128 is R3, and the dimension of the fourth chamfered surface 2129 is R3. Then, the dimension d of the first surface 2111 is the distance between the outer surfaces of the fourth wall portion 2124 and the fifth wall portion 2125 along the length direction Z of the first wall portion minus the dimension of the third chamfered surface 2128 in the width direction Y of the first wall portion and minus the dimension of the fourth chamfered surface 2129 in the width direction Y of the first wall portion, that is, d = d' - R3 - R4. The third chamfered surface 2128 and the fourth chamfered surface 2129 can be chamfered surfaces or rounded surfaces. In embodiments where the third chamfered surface 2128 and the fourth chamfered surface 2129 are rounded surfaces, R3 can be the radius of the first chamfered surface 2126, and R4 can be the radius of the second chamfered surface 2127.

Exemplarily, as shown in FIG. 3, the first wall portion 211 is an end cover 213, and the end cover 213 seals the opening 2121 of the housing body 212. Along the width direction Y of the first wall portion, the housing body 212 has opposite second wall portion 2122 and third wall portion 2123. One end of the second wall portion 2122 forming the opening 2121 and one end of the third wall portion 2123 forming the opening 2121 are respectively connected to the two ends of the end cover 213. Along the length direction Z of the first wall portion, the housing body 212 has opposite fourth wall portion 2124 and fifth wall portion 2125. One end of the fourth wall portion 2124 forming the opening 2121 and one end of the fifth wall portion 2125 forming the opening 2121 are respectively connected to the two ends of the end cover 213.

As shown in FIG. 3, if the end cover 213 and the housing body 212 are not easy to disassemble, the distance c' between the outer surfaces of the second wall portion 2122 and the third wall portion 2123 in the width direction Y of the first wall portion can be measured to obtain the dimension c of the first surface 2111 in the width direction Y of the first wall portion. The distance d' between the outer surfaces of the fourth wall portion 2124 and the fifth wall portion 2125 in the length direction Z of the first wall portion can be measured to obtain the dimension d of the first surface 2111 in the length direction Z of the first wall portion. As shown in FIG. 4, if the end cover 213 and the housing body 212 are easy to disassemble, the dimension of the end cover 213 in the length direction Z of the first wall portion and the dimension of the end cover 213 in the length direction Z of the first wall portion can be directly measured to obtain c and d.

In embodiments where the first wall portion 211 is a wall portion of the housing body 212, exemplarily, as shown in FIG. 11, the first wall portion 211 is the bottom wall of the housing body 212 opposite to the end cover 213. Along the width direction Y of the first wall portion, the housing body 212 has opposite second wall portion 2122 and third wall portion 2123. The second wall portion 2122 and the third wall portion 2123 are respectively connected to the two ends of the first wall portion 211. Along the length direction Z of the first wall portion, the housing body 212 has opposite fourth wall portion 2124 and fifth wall portion 2125. The fourth wall portion 2124 and the fifth wall portion 2125 are respectively connected to the two ends of the first wall portion 211. Along the width direction Y of the first wall portion, the distance between the outer surfaces of the second wall portion 2122 and the third wall portion 2123 is c'. The outer surface of the second wall portion 2122 in the width direction Y of the first wall portion and the surface of the first wall portion 211 facing away from the interior of the housing 21 (first surface 2111) are connected by a first chamfered surface 2126. The outer surface of the third wall portion 2123 in the width direction Y of the first wall portion and the surface of the first wall portion 211 facing away from the interior of the housing 21 (first surface 2111) are connected by a second chamfered surface 2127. The first chamfered surface 2126 and the second chamfered surface 2127 are both rounded surfaces. The radius of the first chamfered surface 2126 is R1, and the radius of the second chamfered surface 2127 is R2. c = c' - R1 - R2.

Along the length direction Z of the first wall portion, the distance between the outer surfaces of the fourth wall portion 2124 and the fifth wall portion 2125 is d'. The outer surface of the fourth wall portion 2124 in the length direction Z of the first wall portion and the surface of the first wall portion 211 facing away from the interior of the housing 21 (first surface 2111) are connected by a third chamfered surface 2128. The outer surface of the fifth wall portion 2125 in the length direction Z of the first wall portion and the surface of the first wall portion 211 facing away from the interior of the housing 21 (first surface 2111) are connected by a fourth chamfered surface 2129. The third chamfered surface 2128 and the fourth chamfered surface 2129 are both rounded surfaces. The radius of the third chamfered surface 2128 is R3, and the radius of the fourth chamfered surface 2129 is R4. d = d' - R3 - R4.

Exemplarily, c can be 55mm, 60mm, 65mm, 70mm, 75mm, 80mm, 85mm, or the like.

d can be 100mm, 110mm, 120mm, 140mm, 150mm, 160mm, 170mm, 200mm, 230mm, 250mm, 260mm, or the like.

The first wall portion 211 is a rectangular wall portion, which is convenient for manufacturing and molding the battery cell 20, and also facilitates the measurement of the area of the first surface 2111.

In some embodiments, the first wall portion 211 is a rectangular wall portion; and along a length direction Z of the first wall portion, the pressure relief component 22 is formed with at least one predetermined pressure relief area P, and a sum a of dimensions of all the predetermined pressure relief areas P arranged along the length direction Z of the first wall portion is 0.1 to 0.5 times a dimension d of the first surface 2111 along the length direction Z of the first wall portion.

Along the length direction Z of the first wall portion, the pressure relief component 22 can form one predetermined pressure relief area P, or can form multiple predetermined pressure relief areas P.

In embodiments where the pressure relief component 22 forms one predetermined pressure relief area P along the length direction Z of the first wall portion, the sum a of dimensions of all the predetermined pressure relief areas P arranged along the length direction Z of the first wall portion is the dimension of the predetermined pressure relief area P along the length direction Z of the first wall portion.

In embodiments where the pressure relief component 22 forms multiple predetermined pressure relief areas P along the length direction Z of the first wall portion, the multiple predetermined pressure relief areas P are arranged sequentially along the length direction Z of the first wall portion. Two adjacent predetermined pressure relief areas P can share a boundary. Then, the sum a of dimensions of all the predetermined pressure relief areas P arranged along the length direction Z of the first wall portion can be the dimension between the outermost boundaries of the two predetermined pressure relief areas P that are farthest apart among the multiple predetermined pressure relief areas P.

The sum a of dimensions of all the predetermined pressure relief areas P arranged along the length direction Z of the first wall portion is 0.1 to 0.5 times the dimension d of the first surface 2111 along the length direction Z of the first wall portion, that is, the ratio of the sum a of dimensions of all the predetermined pressure relief areas P arranged along the length direction Z of the first wall portion to the dimension d of the first surface 2111 along the length direction Z of the first wall portion is 0.1 to 0.5. Exemplarily, a/d can be 0.1, 0.15, 0.2, 0.25, 0.3, 0.35, 0.4, 0.45, 0.45, 0.5, or the like.

In order to make the technical problems, technical solutions, and beneficial effects solved by the embodiments of the present application clearer, the following will provide further detailed descriptions in conjunction with Examples 8-13. Obviously, the described embodiments are only a part of the examples of the present application, and not all of the examples. All other examples obtained by persons skilled in the art based on the embodiments in the present application without creative effort fall within the protection scope of the present application.

Fatigue tests were performed on the battery cells 20 in Examples 8-13 to obtain the number of fatigue cycles during long-term use of the battery cells 20, and thermal runaway tests were performed on the battery cells 20 to obtain the holding time during thermal runaway of the battery cells 20, so as to evaluate the reliability of the battery cells 20. The specific situation is shown in Table 2. The method for measuring the fatigue cycles of the battery cell 20 during use and the method for measuring the holding time during thermal runaway of the battery cell 20 are as described above. The difference between Example 1 and Examples 8-13 lies in the different dimension d of the first surface 2111 along the length direction Z of the first wall portion and the different sum a of dimensions of all the predetermined pressure relief areas P arranged along the length direction Z of the first wall portion in the length direction Z of the first wall portion.

**Table 2**

| | a (mm) | d (mm) | a/d | Experimental result 1 holding time (s) | Experimental result 2 fatigue cycles |
|---|---|---|---|---|---|
| Example 8 | 26 | 260 | 0.1 | 2.0 | 1878 |
| Example 9 | 30 | 200 | 0.15 | 1.9 | 1845 |
| Example 10 | 32 | 160 | 0.2 | 1.8 | 1803 |
| Example 11 | 42 | 140 | 0.3 | 1.6 | 1723 |
| Example 12 | 46 | 110 | 0.4 | 1.4 | 1532 |
| Example 13 | 50 | 100 | 0.5 | 1.3 | 1475 |

As can be seen from Table 2, as a/d gradually increases, the holding time of the battery cell 20 becomes shorter, that is, as a/d gradually increases, the timely pressure relief performance of the battery cell 20 is better, and the probability of explosion of the battery cell 20 during thermal runaway gradually decreases. As a/d gradually increases, the fatigue cycles of the battery cell 20 gradually decrease, that is, as a/d gradually increases, the possibility of fatigue valve opening and leakage of the battery cell 20 during long-term use gradually increases, and the reliability of the battery cell 20 gradually decreases.

In Table 2, when a/d ≥ 0.1, the holding time of the battery cell 20 is shorter, which can increase the possibility of timely pressure relief of the pressure relief component 22 of the battery cell 20, and reduce the risk of the housing 21 of the battery cell 20 bursting, exploding, or catching fire due to untimely pressure relief of the pressure relief component 22. When a/d ≤ 0.5, the fatigue cycles of the battery cell 20 are all large, which means that the battery cell 20 has a high fatigue life, and further reduces the risk of leakage problems caused by premature actuation or fatigue cracking of the pressure relief component 22 in the area corresponding to the first groove 221 after long-term use of the battery cell 20. Therefore, 0.1 ≤ a/d ≤ 0.5 can further reduce the risk of the housing 21 of the battery cell 20 bursting, exploding, or catching fire due to untimely pressure relief of the pressure relief component 22, and further reduce the risk of leakage problems caused by premature actuation or fatigue cracking of the pressure relief component 22 in the area corresponding to the first groove 221 after long-term use of the battery cell 20, so as to improve the service stability of the pressure relief component 22, and improve the service life and service reliability of the battery cell 20.

Therefore, the sum a of dimensions of all the predetermined pressure relief areas P arranged along the length direction Z of the first wall portion is 0.1 to 0.5 times the dimension d of the first surface 2111 along the length direction Z of the first wall portion, that is, the ratio of the sum a of dimensions of all the predetermined pressure relief areas P arranged along the length direction Z of the first wall portion to the dimension d of the first surface 2111 along the length direction Z of the first wall portion is 0.1 to 0.5. When the ratio of the sum a of dimensions of all the predetermined pressure relief areas P arranged along the length direction Z of the first wall portion to the dimension d of the first surface 2111 along the length direction Z of the first wall portion is greater than or equal to 0.1, it can alleviate the problem that the bottom wall of the first groove 221 has excessive pressure bearing capacity, which causes the bursting pressure required for the pressure relief component 22 to relieve pressure in the battery cell 20 to be too large, thereby reducing the risk of the housing 21 of the battery cell 20 bursting, exploding, or catching fire due to untimely pressure relief of the pressure relief component 22, and further effectively improving the service reliability of the battery cell 20. When the ratio of the sum a of dimensions of all the predetermined pressure relief areas P arranged along the length direction Z of the first wall portion to the dimension d of the first surface 2111 along the length direction Z of the first wall portion is less than or equal to 0.5, it can reduce the deformation of the bottom wall of the first groove 221 when the expansion force generated by the expansion of the battery cell 20 during use acts on the pressure relief component 22, and further reduce the phenomenon that the structural strength of the bottom wall of the first groove 221 of the pressure relief component 22 is reduced due to excessive deformation, further reducing the risk of leakage problems caused by premature actuation or fatigue cracking of the pressure relief component 22 at the position corresponding to the first groove 221 after long-term use of the battery cell 20, so as to improve the service stability of the pressure relief component 22, and improve the service life and service reliability of the battery cell 20. Therefore, when 0.05 ≤ a/d ≤ 0.6, it can balance the reduction of the risk of the housing 21 of the battery cell 20 bursting, exploding, or catching fire due to untimely pressure relief of the pressure relief component 22, and the reduction of the risk of leakage problems caused by premature actuation or fatigue cracking of the pressure relief component 22 at the position corresponding to the first groove 221 after long-term use of the battery cell 20, so as to improve the service stability of the pressure relief component 22, and improve the service life and service reliability of the battery cell 20.

Continue to refer to Table 2. As d decreases, the holding time of the battery cell 20 gradually shortens, and the fatigue cycles of the battery cell 20 gradually decrease. When d ≥ 100mm, the fatigue cycles of the battery cell 20 are large, and the risk of fatigue valve opening and leakage of the battery cell 20 during long-term use is low. When d ≤ 260mm, the holding time of the battery cell 20 during thermal runaway is shorter, which means that the timely pressure relief of the battery cell 20 is better. Therefore, when 100mm ≤ d ≤ 260mm, the risk of the housing 21 of the battery cell 20 bursting, exploding, or catching fire due to untimely pressure relief of the pressure relief component 22 is low, and the risk of leakage problems caused by premature actuation or fatigue cracking of the pressure relief component 22 at the position corresponding to the first groove 221 after long-term use of the battery cell 20 is low, so as to improve the service stability of the pressure relief component 22, and improve the service life and service reliability of the battery cell 20.

In some embodiments, the first wall portion 211 is a rectangular wall portion; and along a width direction Y of the first wall portion, the first groove 221 defines at least one predetermined pressure relief area P, and a sum b of dimensions of all the predetermined pressure relief areas P arranged along the width direction Y of the first wall portion is 0.3 to 0.7 times a dimension c of the first surface 2111 along the width direction Y of the first wall portion.

Along the width direction Y of the first wall portion, the pressure relief component 22 can form one predetermined pressure relief area P, or can form multiple predetermined pressure relief areas P.

In embodiments where the pressure relief component 22 forms one predetermined pressure relief area P along the width direction Y of the first wall portion, the sum b of dimensions of all the predetermined pressure relief areas P arranged along the width direction Y of the first wall portion is the dimension of the predetermined pressure relief area P along the width direction Y of the first wall portion.

In embodiments where the pressure relief component 22 forms multiple predetermined pressure relief areas P along the width direction Y of the first wall portion, the multiple predetermined pressure relief areas P are arranged sequentially along the width direction Y of the first wall portion. Two adjacent predetermined pressure relief areas P can share a boundary. Then, the sum b of dimensions of all the predetermined pressure relief areas P arranged along the width direction Y of the first wall portion can be the dimension between the outermost boundaries of the two predetermined pressure relief areas P that are farthest apart among the multiple predetermined pressure relief areas P.

The sum b of dimensions of all the predetermined pressure relief areas P arranged along the width direction Y of the first wall portion is 0.3 to 0.7 times the dimension c of the first surface 2111 along the width direction Y of the first wall portion, that is, the ratio of the sum b of dimensions of all the predetermined pressure relief areas P arranged along the width direction Y of the first wall portion to the dimension c of the first surface 2111 along the width direction Y of the first wall portion is 0.3 to 0.7. Exemplarily, b/c can be 0.3, 0.35, 0.4, 0.45, 0.5, 0.55, 0.6, 0.65, 0.7, or the like.

In order to make the technical problems, technical solutions, and beneficial effects solved by the embodiments of the present application clearer, the following will provide further detailed descriptions in conjunction with Examples 14-20. Obviously, the described examples are only a part of the examples of the present application, and not all of the examples. All other examples obtained by persons skilled in the art based on the examples in the present application without creative effort fall within the protection scope of the present application.

Fatigue tests were performed on the battery cells 20 in Examples 14-20 to obtain the number of fatigue cycles during long-term use of the battery cells 20, so as to evaluate the reliability of the battery cells 20, and the degree of material accumulation on any one of the two surfaces of the housing 21 along the width direction Y of the first wall portion due to the formation of the first groove 221 of the battery cell 20 was tested to evaluate the flatness of the surface of the battery cell 20 along the width direction Y of the first wall portion. The specific situation is shown in Table 3. The method for measuring the fatigue cycles of the battery cell 20 during use can be learned from the method described above.

The test method for the degree of material accumulation on any one of the two surfaces of the housing 21 along the width direction Y of the first wall portion due to the formation of the first groove 221 of the battery cell 20 is as follows:
For convenience of description, the two opposite outer surfaces of the housing 21 along the width direction Y of the first wall portion were defined as measuring surfaces. Along the length direction Z of the first wall portion, four reference points were taken on each measuring surface. The four reference points were respectively located on two sides of the first groove 221 along the length direction of the first wall portion. The plane formed by the four reference points was a reference plane, and the reference plane was parallel to the measuring surface before the first groove 221 was formed. A detection point was obtained in the area corresponding to the measuring surface and the first groove 221, and the distance from the detection point to the reference plane in the width direction Y of the first wall portion was obtained, so as to obtain the degree of material accumulation on the measuring surface due to the manufacturing and molding of the first groove 221. The larger the distance from the detection point to the reference plane in the width direction Y of the first wall portion, the greater the degree of material accumulation, and the worse the flatness of the surface of the housing 21 along the width direction Y of the first wall portion. Conversely, the smaller the distance from the detection point to the reference plane in the width direction Y of the first wall portion, the smaller the degree of material accumulation, and the better the flatness of the surface of the housing 21 along the width direction Y of the first wall portion.

The difference between Example 1 and Examples 14-20 lies in the different dimension c of the first surface 2111 along the width direction Y of the first wall portion and the different sum b of dimensions of all the predetermined pressure relief areas P arranged along the width direction Y of the first wall portion along the length direction Z of the first wall portion.

**Table 3**

| | b (mm) | c (mm) | b/c | Experimental result 1 holding time (s) | Experimental result 2 (degree of material accumulation (mm)) |
|---|---|---|---|---|---|
| Example 14 | 15 | 50 | 0.3 | 2.3 | 0.032 |
| Example 15 | 18 | 55 | 0.33 | 2.1 | 0.038 |
| Example 16 | 25 | 62.5 | 0.4 | 1.9 | 0.056 |
| Example 17 | 35 | 70 | 0.5 | 1.7 | 0.089 |
| Example 18 | 45 | 75 | 0.6 | 1.5 | 0.232 |
| Example 19 | 55 | 85 | 0.65 | 1.4 | 0.277 |
| Example 20 | 62 | 88 | 0.7 | 1.3 | 0.292 |

As can be seen from Table 3, as b/c gradually increases, the holding time of the battery cell 20 becomes shorter, that is, as b/c gradually increases, the timely pressure relief performance of the battery cell 20 is better, and the probability of explosion of the battery cell 20 during thermal runaway is smaller. As b/c gradually increases, the local material accumulation on the housing 21 of the battery cell 20 along the width direction Y of the first wall portion during the manufacturing and molding of the first groove 221 becomes more severe, and the flatness of the two outer surfaces of the housing 21 of the battery cell of the battery cell 20 along the width direction Y of the first wall portion becomes worse.

In Table 3, when b/c ≥ 0.3, the holding time of the battery cell 20 is shorter, which can increase the possibility of timely pressure relief of the pressure relief component 22 of the battery cell 20, and reduce the risk of the housing 21 of the battery cell 20 bursting, exploding, or catching fire due to untimely pressure relief of the pressure relief component 22. When b/c ≤ 0.7, the degree of material accumulation on the two surfaces of the housing body 212 along the width direction Y of the first wall portion of the battery cell 20 is smaller, which means that the flatness of the surface of the housing 21 along the width direction Y of the first wall portion of the battery cell 20 is better. Therefore, 0.3 ≤ b/c ≤ 0.7 can reduce the risk of the housing 21 of the battery cell 20 bursting, exploding, or catching fire due to untimely pressure relief of the pressure relief component 22, and reduce the degree of material accumulation on the housing body 212 along the width direction Y of the first wall portion during the manufacturing and molding of the first groove 221.

Therefore, the sum b of dimensions of all the predetermined pressure relief areas P arranged along the width direction Y of the first wall portion is 0.3 to 0.7 times the dimension c of the first surface 2111 along the width direction Y of the first wall portion, that is, the ratio of the sum b of dimensions of all the predetermined pressure relief areas P arranged along the width direction Y of the first wall portion to the dimension of the first surface 2111 along the width direction of the first wall portion 211 is 0.3 to 0.7. By setting the ratio of the sum b of dimensions of all the predetermined pressure relief areas P arranged along the width direction Y of the first wall portion to the dimension of the first surface 2111 along the width direction of the first wall portion 211 to be greater than or equal to 0.3, it can alleviate the problem that the bottom wall of the first groove 221 has excessive pressure bearing capacity, which causes the bursting pressure required for the pressure relief component 22 to relieve pressure in the battery cell 20 to be too large, thereby reducing the risk of the housing 21 of the battery cell 20 bursting, exploding, or catching fire due to untimely pressure relief of the pressure relief component 22, and further effectively improving the service reliability of the battery cell 20. By setting the ratio of the sum b of dimensions of all the predetermined pressure relief areas P arranged along the width direction Y of the first wall portion to the dimension of the first surface 2111 along the width direction of the first wall portion 211 to be less than or equal to 0.7, it can reduce the degree of material accumulation on the upper part of the width direction Y of the first wall portion during the manufacturing process of the first groove 221, thereby alleviating the problem of poor flatness of the surface of the battery cell 20 along the width direction Y of the first wall portion due to the formation of the first groove 221.

Continue to refer to Table 3. As c increases, the holding time of the battery cell 20 gradually shortens, and the degree to which the two opposite outer surfaces of the housing 21 of the battery cell 20 along the width direction Y of the first wall portion protrude relative to the reference plane gradually increases. When c ≥ 55mm, the holding time of the battery cell 20 during thermal runaway is shorter, which is beneficial for timely pressure relief during thermal runaway of the battery cell 20, and the probability of explosion of the battery cell 20 during thermal runaway is low. When c ≤ 85mm, the degree to which the two opposite outer surfaces of the battery cell 20 along the width direction Y of the first wall portion protrude relative to the reference plane is smaller, the degree of material accumulation on the housing 21 along the width direction of the first wall portion is smaller, and the flatness of the two opposite outer surfaces of the housing 21 along the width direction Y of the first wall portion is better. Therefore, when 55mm ≤ c ≤ 85mm, the risk of the housing 21 of the battery cell 20 bursting, exploding, or catching fire due to untimely pressure relief of the pressure relief component 22 is low, the reliability of the battery cell 20 is better, and the flatness of the two opposite outer surfaces of the housing 21 along the width direction Y of the first wall portion of the battery cell 20 is better.

In some embodiments, the first wall portion 211 is a rectangular wall portion; and along a length direction Z of the first wall portion, the pressure relief component 22 is formed with at least one predetermined pressure relief area P, and a sum a of dimensions of all the predetermined pressure relief areas P arranged along the length direction Z of the first wall portion is 26mm ≤ a ≤ 50mm.

Along the length direction Z of the first wall portion, the pressure relief component 22 can form one predetermined pressure relief area P, or can form multiple predetermined pressure relief areas P.

As shown in FIGs. 9, 10, 11, 13, 14, 15, 16, and 17, in embodiments where the pressure relief component 22 forms one predetermined pressure relief area P along the length direction Z of the first wall portion, the sum a of dimensions of all the predetermined pressure relief areas P arranged along the length direction Z of the first wall portion is the dimension of the predetermined pressure relief area P along the length direction Z of the first wall portion.

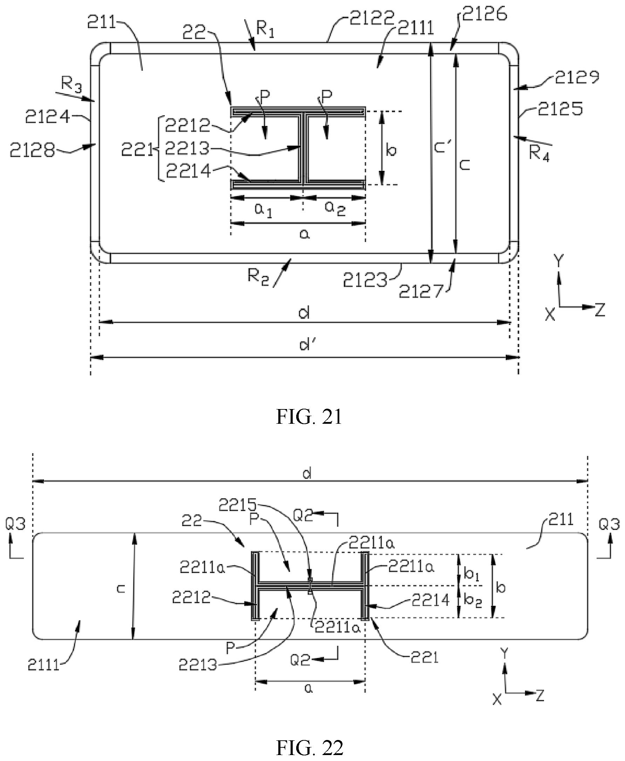

As shown in FIG. 21, in embodiments where the pressure relief component 22 forms multiple predetermined pressure relief areas P along the length direction Z of the first wall portion, the multiple predetermined pressure relief areas P are arranged sequentially along the length direction Z of the first wall portion. Two adjacent predetermined pressure relief areas P can share a boundary. Then, the sum a of dimensions of all the predetermined pressure relief areas P arranged along the length direction Z of the first wall portion can be the dimension between the outermost boundaries of the two predetermined pressure relief areas P that are farthest apart among the multiple predetermined pressure relief areas P. As shown in FIG. 21, the pressure relief component forms two predetermined pressure relief areas P along the length direction Z of the first wall portion. The two predetermined pressure relief areas P are arranged along the length direction Z of the first wall portion. The two predetermined pressure relief areas P can be bounded by the center line of the second groove segment 2213 of the first groove in the width direction. The dimensions of the two predetermined pressure relief areas P along the length direction Z of the first wall portion are a1 and a2, respectively. Then, a = a1 + a2.

Exemplarily, a can be 26mm, 30mm, 32mm, 40mm, 42mm, 44mm, 46mm, 50mm, or the like.

Continue to refer to Table 2. When a ≥ 26mm, the holding time of the battery cell 20 is shorter, which can increase the possibility of timely pressure relief of the pressure relief component 22 of the battery cell 20, and reduce the risk of the housing 21 of the battery cell 20 bursting, exploding, or catching fire due to untimely pressure relief of the pressure relief component 22. When a ≤ 50mm, the fatigue cycles of the battery cell 20 are large, which means that the battery cell 20 has a high fatigue life, and further reduces the risk of leakage problems caused by premature actuation or fatigue cracking of the pressure relief component 22 in the area corresponding to the first groove 221 after long-term use of the battery cell 20. Therefore, 26mm ≤ a ≤ 50mm can further reduce the risk of the housing 21 of the battery cell 20 bursting, exploding, or catching fire due to untimely pressure relief of the pressure relief component 22, and further reduce the risk of leakage problems caused by premature actuation or fatigue cracking of the pressure relief component 22 at the position corresponding to the first groove 221 after long-term use of the battery cell 20, so as to improve the service stability of the pressure relief component 22, and improve the service life and service reliability of the battery cell 20.

Therefore, the sum a of dimensions of all the predetermined pressure relief areas P arranged along the length direction Z of the first wall portion is greater than or equal to 26mm, which not only facilitates the processing and molding of the first groove 221 and defines the predetermined pressure relief area P, but also helps to increase the area of the predetermined pressure relief area P, alleviating the problem that the bottom wall of the first groove 221 has excessive pressure bearing capacity, which causes the bursting pressure required for the pressure relief component 22 to relieve pressure in the battery cell 20 to be too large, thereby reducing the risk of the housing 21 of the battery cell 20 bursting, exploding, or catching fire due to untimely pressure relief of the pressure relief component 22, and further effectively improving the service reliability of the battery cell 20. The sum a of dimensions of all the predetermined pressure relief areas P arranged along the length direction Z of the first wall portion is less than or equal to 50mm, which can reduce the deformation of the bottom wall of the first groove 221 when the expansion force generated by the expansion of the battery cell 20 during use acts on the pressure relief component 22, and further reduce the phenomenon that the structural strength of the bottom wall of the first groove 221 of the pressure relief component 22 is reduced due to excessive deformation, further reducing the risk of leakage problems caused by premature actuation or fatigue cracking of the pressure relief component 22 at the position corresponding to the first groove 221 after long-term use of the battery cell 20, so as to improve the service stability of the pressure relief component 22, and improve the service life and service reliability of the battery cell 20.

In some embodiments, the first wall portion 211 is a rectangular wall portion; and along a width direction Y of the first wall portion, the first groove 221 defines at least one predetermined pressure relief area P, and a sum b of dimensions of all the predetermined pressure relief areas P arranged along the width direction Y of the first wall portion is 18mm ≤ b ≤ 62mm.

Along the width direction Y of the first wall portion, the pressure relief component 22 can form one predetermined pressure relief area P, or can form multiple predetermined pressure relief areas P.

As shown in FIG. 9, in embodiments where the pressure relief component 22 forms one predetermined pressure relief area P along the width direction Y of the first wall portion, the sum b of dimensions of all the predetermined pressure relief areas P arranged along the width direction Y of the first wall portion is the dimension of the predetermined pressure relief area P along the width direction Y of the first wall portion.

As shown in FIGs. 10, 11, and 13-17, in embodiments where the pressure relief component 22 forms multiple predetermined pressure relief areas P along the width direction Y of the first wall portion, the multiple predetermined pressure relief areas P are arranged sequentially along the width direction Y of the first wall portion. Two adjacent predetermined pressure relief areas P can share a boundary. Then, the sum a of dimensions of all the predetermined pressure relief areas P arranged along the width direction Y of the first wall portion can be the dimension between the outermost boundaries of the two predetermined pressure relief areas P that are farthest apart among the multiple predetermined pressure relief areas P. FIGs. 10, 11, and 13-17 show that the pressure relief component 22 forms two predetermined pressure relief areas P along the width direction Y of the first wall portion. The two predetermined pressure relief areas P are arranged along the width direction Y of the first wall portion. The two predetermined pressure relief areas P are bounded by the center line of the second groove segment 2213 of the first groove 221 in the width direction. The dimensions of the two predetermined pressure relief areas P along the width direction Y of the first wall portion are b1 and b2, respectively. Then, b = b1 + b2.

Exemplarily, b can be 18mm, 20mm, 25mm, 30mm, 35mm, 40mm, 45mm, 50mm, 62mm, or the like.

Continue to refer to Table 3. When b ≥ 18mm, the holding time of the battery cell 20 is shorter, which can increase the possibility of timely pressure relief of the pressure relief component 22 of the battery cell 20, and reduce the risk of the housing 21 of the battery cell 20 bursting, exploding, or catching fire due to untimely pressure relief of the pressure relief component 22. When b ≤ 62mm, the degree of material accumulation on the two surfaces of the housing 21 along the width direction Y of the first wall portion of the battery cell 20 is smaller, which means that the flatness of the surface of the housing 21 along the width direction Y of the first wall portion of the battery cell 20 is better. Therefore, 18mm ≤ b ≤ 62mm can reduce the risk of the housing 21 of the battery cell 20 bursting, exploding, or catching fire due to untimely pressure relief of the pressure relief component 22, and reduce the degree of material accumulation on the housing 21 along the width direction Y of the first wall portion during the manufacturing and molding of the first groove 221, and improve the flatness of the two opposite outer surfaces of the housing 21 along the width direction Y of the first wall portion.

Therefore, the sum b of dimensions of all the predetermined pressure relief areas P arranged along the width direction Y of the first wall portion is greater than or equal to 18mm, which not only facilitates the processing and molding of the first groove 221 and defines the predetermined pressure relief area P, but also helps to increase the area of the predetermined pressure relief area P, alleviating the problem that the bottom wall of the first groove 221 has excessive pressure bearing capacity, which causes the bursting pressure required for the pressure relief component 22 to relieve pressure in the battery cell 20 to be too large, thereby reducing the risk of the housing 21 of the battery cell 20 bursting, exploding, or catching fire due to untimely pressure relief of the pressure relief component 22, and further effectively improving the service reliability of the battery cell 20. The sum b of dimensions of all the predetermined pressure relief areas P arranged along the width direction Y of the first wall portion is less than or equal to 62mm, which can reduce the degree of material accumulation on the upper part of the width direction Y of the first wall portion during the manufacturing process of the first groove 221, thereby alleviating the problem of poor flatness of the surface of the battery cell 20 along the width direction Y of the first wall portion due to the formation of the first groove 221.

In some embodiments, the first wall portion 211 is a rectangular wall portion. Along a length direction Z of the first wall portion, the pressure relief component 22 is formed with at least one predetermined pressure relief area P, and a sum of dimensions of all the predetermined pressure relief areas P arranged along the length direction Z of the first wall portion is a. Along a width direction Y of the first wall portion, the first groove 221 defines at least one predetermined pressure relief area P, and a sum of dimensions of all the predetermined pressure relief areas P arranged along the width direction Y of the first wall portion is b. A dimension of the first surface 2111 is c.

When 10mm ≤ c ≤ 40mm, the sum a of dimensions of all the predetermined pressure relief areas P arranged along the length direction Z of the first wall portion is 2 to 3 times the sum b of dimensions of all the predetermined pressure relief areas P arranged along the width direction Y of the first wall portion.

The sum a of dimensions of all the predetermined pressure relief areas P arranged along the length direction Z of the first wall portion is 2 to 3 times the sum b of dimensions of all the predetermined pressure relief areas P arranged along the width direction Y of the first wall portion, that is, the ratio of the sum a of dimensions of all the predetermined pressure relief areas P arranged along the length direction Z of the first wall portion to the sum b of dimensions of all the predetermined pressure relief areas P arranged along the width direction Y of the first wall portion is 2 to 3. Exemplarily, a/b can be 2, 2.1, 2.2, 2.25, 2.4, 2.5, 2.6, 2.7, 2.8, 3, or the like.

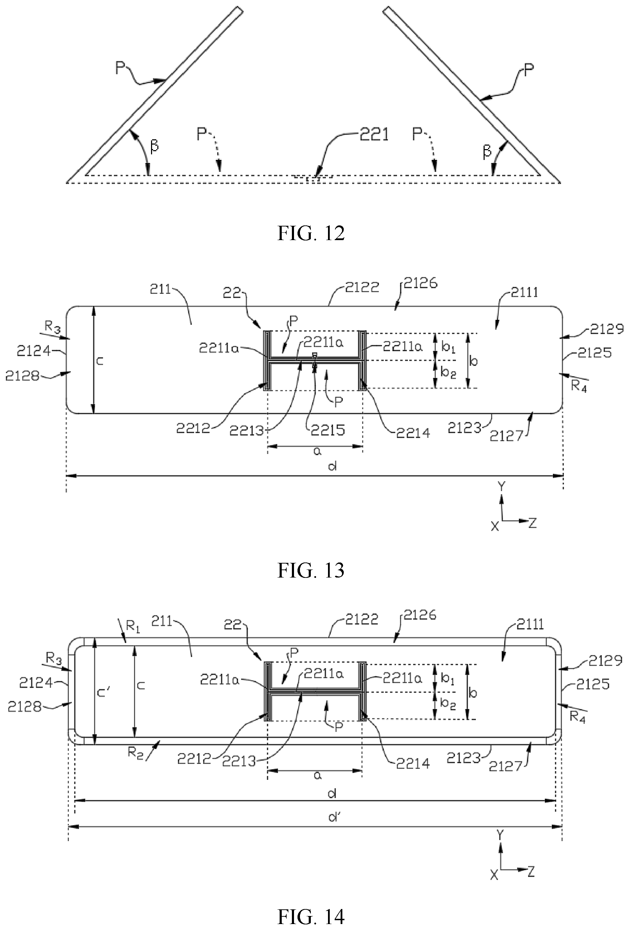

The battery cell 20 satisfying 10mm ≤ c ≤ 40mm can also be referred to as a narrow cell. FIG. 13 shows the case where c = 39mm and a/b = 2.

In order to make the technical problems, technical solutions, and beneficial effects solved by the embodiments of the present application clearer, the following will provide further detailed descriptions in conjunction with Examples 21-40. Obviously, the described examples are only a part of the examples of the present application, and not all of the examples. All other examples obtained by persons skilled in the art based on the examples in the present application without creative effort fall within the protection scope of the present application.

When 10mm ≤ c ≤ 40mm, the bursting pressure of the battery cells 20 during thermal runaway and their valve opening angle during bursting were obtained for the battery cells 20 in Examples 21-40, so as evaluate the reliability of the battery cells 20. The specific situation is shown in Table 4.

The difference between Example 1 and Examples 21-40 lies in the different dimension c of the first surface 2111 along the width direction Y of the first wall portion, the different sum a of dimensions of all the predetermined pressure relief areas P arranged along the length direction Z of the first wall portion, and the different sum b of dimensions of all the predetermined pressure relief areas P arranged along the width direction Y of the first wall portion.

Taking a battery cell 20 with model number 39203 as an example, the preset standard bursting pressure of the first groove 221 is 1MPa. If the actual bursting pressure of the battery cell 20 during thermal runaway satisfies 1.0 ± 0.2MPa, it is considered that the bursting pressure of the battery cell 20 is stable. The stability of the bursting pressure is determined by the standard deviation of multiple sets of bursting pressures. The actual bursting pressure is represented by σ. If the fluctuation value (σ-1) of the actual bursting pressure of the battery cell 20 relative to the standard bursting pressure of the battery cell 20 is < 0.2 MPa, the bursting pressure is considered stable. The actual bursting pressure is the pressure when the first groove 221 begins to crack.

The test method for actual bursting pressure is as follows:
(1) Two steel plates or aluminum plates were used as fixtures to clamp the two large surfaces of the battery cell 20, with a clamping force of 3000N;
(2) A hole with a 3mm drill bit was drilled at the position corresponding to the liquid injection hole on the battery cell 20. The inflation device was connected to the drilled hole through an air pipe. The interior of the battery cell 20 was inflated through the inflation device at an inflation rate of 0.03MPa/s. An air pressure gauge was installed on the air pipe to monitor the internal pressure of the battery cell 20. The battery cell 20 was inflated by the inflation device;
(3) The internal pressure of the battery cell 20 monitored by the air pressure gauge when the first groove cracked and gas was released was the actual bursting pressure of the battery cell 20.

The valve opening state of the battery cell 20 was measured by the valve opening angle when the first groove 221 first relieved pressure. As shown in FIG. 12, the valve opening angle was defined as the angle between the plane where the predetermined pressure relief area P of the crack 2121 of the first groove 221 was located and the plane where the predetermined pressure relief area P had been located before the first groove 221 cracked. The valve opening angle was represented by β. If β > 45°, it was considered qualified. The larger the valve opening angle β, the larger the pressure relief area. The test results for battery cells 20 with various size ratios are as follows.

**Table 4**

| | c (mm) | a (mm) | b (mm) | a/b | Fluctuation value of bursting pressure relative to standard bursting pressure (MPa) | Valve opening angle β |
|---|---|---|---|---|---|---|
| Example 21 | 10 | 8.4 | 4.2 | 2 | 0.099 | 89° |
| Example 22 | | 8.5 | 4.05 | 2.1 | 0.097 | 87° |
| Example 23 | | 9.2 | 3.68 | 2.5 | 0.088 | 75° |
| Example 24 | | 9.4 | 3.48 | 2.7 | 0.085 | 69° |
| Example 25 | | 9.6 | 3.2 | 3 | 0.072 | 65° |
| Example 26 | 20 | 8.4 | 4.2 | 2 | 0.1 | 87° |
| Example 27 | | 8.5 | 4.05 | 2.1 | 0.096 | 85° |
| Example 28 | | 9.2 | 3.68 | 2.5 | 0.079 | 71° |
| Example 29 | | 9.4 | 3.48 | 2.7 | 0.078 | 65° |
| Example 30 | | 9.6 | 3.2 | 3 | 0.076 | 63° |
| Example 31 | 30 | 8.4 | 4.2 | 2 | 0.12 | 88° |
| Example 32 | | 8.5 | 4.05 | 2.1 | 0.105 | 86° |
| Example 33 | | 9.2 | 3.68 | 2.5 | 0.088 | 72° |
| Example 34 | | 9.4 | 3.48 | 2.7 | 0.085 | 66° |
| Example 35 | | 9.6 | 3.2 | 3 | 0.08 | 64° |
| Example 36 | 40 | 8.4 | 4.2 | 2 | 0.15 | 86° |
| Example 37 | | 8.5 | 4.05 | 2.1 | 0.098 | 84° |
| Example 38 | | 9.2 | 3.68 | 2.5 | 0.082 | 70° |
| Example 39 | | 9.4 | 3.48 | 2.7 | 0.085 | 64° |
| Example 40 | | 9.6 | 3.2 | 3 | 0.08 | 62° |

Refer to Table 4. When c = 10mm, 20mm, 30mm, or 40mm, as a/b gradually increases, the valve opening angle gradually decreases, that is, as a/b gradually increases, the pressure relief area becomes smaller, and the pressure relief effect and efficiency become worse. As a/b gradually increases, the fluctuation of the bursting pressure of each battery cell 20 relative to the standard bursting pressure gradually decreases, and the bursting pressure becomes more stable.

In Table 4, when c = 10mm, 20mm, 30mm, or 40mm, and a/b ≥ 2, the fluctuation of the bursting pressure of each battery cell 20 relative to the standard bursting pressure is small, and the bursting pressure is more stable, which is beneficial for timely pressure relief of the battery cell 20 and the reliability of the battery cell 20. When a/b ≤ 3, the valve opening angle of the first groove 221 of the battery cell 20 when it cracks is greater than 45°, and the valve opening angle of the first groove 221 of the battery cell 20 when it cracks is large, which means that the pressure relief area is large, and the pressure relief effect and efficiency are better.

Therefore, when 10mm ≤ c ≤ 40mm, the sum a of dimensions of all the predetermined pressure relief areas P arranged along the length direction Z of the first wall portion is 2 to 3 times the sum b of dimensions of all the predetermined pressure relief areas P arranged along the width direction Y of the first wall portion, that is, the ratio of the sum a of dimensions of all the predetermined pressure relief areas arranged along the length direction Z of the first wall portion to the sum b of dimensions of all the predetermined pressure relief areas P arranged along the width direction Y of the first wall portion is 2 to 3. When the ratio of the sum a of dimensions of all the predetermined pressure relief areas P arranged along the length direction Z of the first wall portion to the sum b of dimensions of all the predetermined pressure relief areas P arranged along the width direction Y of the first wall portion is greater than or equal to 2, the bursting pressure is more stable, which is beneficial for the pressure relief component 22 to relieve pressure in time, thereby reducing the risk of the housing 21 of the battery cell 20 bursting, exploding, or catching fire due to untimely pressure relief of the pressure relief component 22, and further effectively improving the service reliability of the battery cell 20. When the ratio of the sum a of dimensions of all the predetermined pressure relief areas P arranged along the length direction Z of the first wall portion to the sum b of dimensions of all the predetermined pressure relief areas P arranged along the width direction Y of the first wall portion is less than or equal to 3, it is beneficial for the valve opening angle of the predetermined pressure relief area P to be larger when the first groove 221 cracks, so that the pressure relief component 22 has a larger pressure relief area, which is beneficial for the pressure relief component 22 to relieve pressure in time, reducing the risk of the housing 21 of the battery cell 20 bursting, exploding, or catching fire, and improving the reliability of the battery cell 20.

In one embodiment, when 40mm < c ≤ 60mm, the sum a of dimensions of all the predetermined pressure relief areas P arranged along the length direction Z of the first wall portion is 1 to 2 times the sum b of dimensions of all the predetermined pressure relief areas P arranged along the width direction Y of the first wall portion.

The sum a of dimensions of all the predetermined pressure relief areas P arranged along the length direction Z of the first wall portion is 1 to 2 times the sum b of dimensions of all the predetermined pressure relief areas P arranged along the width direction Y of the first wall portion, that is, the ratio of the sum a of dimensions of all the predetermined pressure relief areas P arranged along the length direction Z of the first wall portion to the sum b of dimensions of all the predetermined pressure relief areas P arranged along the width direction Y of the first wall portion is 1 to 2. Exemplarily, a/b can be 1, 1.2, 1.4, 1.5, 1.6, 1.7, 1.8, 2, or the like.

The battery cell 20 satisfying 40mm < c ≤ 60mm can also be referred to as a medium-thick cell. FIG. 14 shows the case where c = 50mm and a/b = 1.0.

In order to make the technical problems, technical solutions, and beneficial effects solved by the embodiments of the present application clearer, the following will provide further detailed descriptions in conjunction with Examples 41-55. Obviously, the described examples are only a part of the examples of the present application, and not all of the examples. All other examples obtained by persons skilled in the art based on the examples in the present application without creative effort fall within the protection scope of the present application.

When 40mm < c ≤ 60mm, the bursting pressure of the battery cells 20 during thermal runaway and their valve opening angle during bursting were obtained for the battery cells 20 in Examples 73-96, so as to evaluate the reliability of the battery cells 20. The specific situation is shown in Table 5. The test methods for bursting pressure and valve opening angle during bursting are as described above. The model number of the test objects used in Examples 41-55 is 54203.

The difference between Example 1 and Examples 41-55 lies in the different dimension c of the first surface 2111 along the width direction Y of the first wall portion, the different sum a of dimensions of all the predetermined pressure relief areas P arranged along the length direction Z of the first wall portion, and the different sum b of dimensions of all the predetermined pressure relief areas P arranged along the width direction Y of the first wall portion.

**Table 5**

| | c (mm) | a (mm) | b (mm) | a/b | Fluctuation value of bursting pressure relative to standard bursting pressure (MPa) | Valve opening angle |
|---|---|---|---|---|---|---|
| Example 41 | 50 | 18 | 18 | 1 | 0.091 | 92° |
| Example 42 | | 23 | 19.17 | 1.2 | 0.088 | 89° |
| Example 43 | | 28 | 18.67 | 1.5 | 0.083 | 85° |
| Example 44 | | 38 | 22.35 | 1.7 | 0.075 | 78° |
| Example 45 | | 48 | 24 | 2 | 0.068 | 69° |
| Example 46 | 55 | 18 | 18 | 1 | 0.081 | 87° |
| Example 47 | | 23 | 19.17 | 1.2 | 0.078 | 84° |
| Example 48 | | 28 | 18.67 | 1.5 | 0.073 | 81° |
| Example 49 | | 38 | 22.35 | 1.7 | 0.065 | 73° |
| Example 50 | | 48 | 24 | 2 | 0.058 | 64° |
| Example 51 | 60 | 18 | 18 | 1 | 0.079 | 84° |
| Example 52 | | 23 | 19.17 | 1.2 | 0.076 | 81° |
| Example 53 | | 28 | 18.67 | 1.5 | 0.071 | 78° |
| Example 54 | | 38 | 22.35 | 1.7 | 0.063 | 70° |
| Example 55 | | 48 | 24 | 2 | 0.056 | 61° |

As can be seen from Table 5, when c = 50mm, 55mm, 60mm, as a/b gradually increases, the valve opening angle gradually decreases, that is, as a/b gradually increases, the pressure relief area becomes smaller, and the pressure relief effect and efficiency become worse. As a/b gradually increases, the fluctuation of the bursting pressure of each battery cell 20 relative to the standard bursting pressure gradually decreases, and the bursting pressure becomes more stable.

In Table 5, when c = 50mm, 55mm, 60mm, and a/b ≥ 1, the fluctuation of the bursting pressure of each battery cell 20 relative to the standard bursting pressure is small, and the bursting pressure is more stable, which is beneficial for timely pressure relief of the battery cell 20 and the reliability of the battery cell 20. When a/b ≤ 2, the valve opening angle of the first groove 221 of the battery cell 20 when it cracks is greater than 45°, and the valve opening angle of the first groove 221 of the battery cell 20 when it cracks is large, which means that the pressure relief area is large, and the pressure relief effect and efficiency are better.

Therefore, when 40mm < c ≤ 60mm, the sum a of dimensions of all the predetermined pressure relief areas P arranged along the length direction Z of the first wall portion is 1 to 2 times the sum b of dimensions of all the predetermined pressure relief areas P arranged along the width direction Y of the first wall portion, that is, the ratio of the sum a of dimensions of all the predetermined pressure relief areas P arranged along the length direction Z of the first wall portion to the sum b of dimensions of all the predetermined pressure relief areas P arranged along the width direction Y of the first wall portion is 1 to 2. When the ratio of the sum a of dimensions of all the predetermined pressure relief areas P arranged along the length direction Z of the first wall portion to the sum b of dimensions of all the predetermined pressure relief areas P arranged along the width direction Y of the first wall portion is greater than or equal to 1, the bursting pressure is more stable, which is beneficial for the pressure relief component 22 to relieve pressure in time, thereby reducing the risk of the housing 21 of the battery cell 20 bursting, exploding, or catching fire due to untimely pressure relief of the pressure relief component 22, and further effectively improving the service reliability of the battery cell 20. When the ratio of the sum a of dimensions of all the predetermined pressure relief areas P arranged along the length direction Z of the first wall portion to the sum b of dimensions of all the predetermined pressure relief areas P arranged along the width direction Y of the first wall portion is less than or equal to 2, it is beneficial for the valve opening angle of the predetermined pressure relief area P to be larger when the first groove 221 cracks, so that the pressure relief component 22 has a larger pressure relief area, which is beneficial for the pressure relief component 22 to relieve pressure in time, reducing the risk of the housing 21 of the battery cell 20 bursting, exploding, or catching fire, and improving the reliability of the battery cell 20.

In some embodiments, when 60mm < c, the sum a of dimensions of all the predetermined pressure relief areas P arranged along the length direction Z of the first wall portion is 0.4 to 1 times the sum b of dimensions of all the predetermined pressure relief areas P arranged along the width direction Y of the first wall portion.

The sum a of dimensions of all the predetermined pressure relief areas P arranged along the length direction Z of the first wall portion is 0.4 to 1 times the sum b of dimensions of all the predetermined pressure relief areas P arranged along the width direction Y of the first wall portion, that is, the ratio of the sum a of dimensions of all the predetermined pressure relief areas P arranged along the length direction Z of the first wall portion to the sum b of dimensions of all the predetermined pressure relief areas P arranged along the width direction Y of the first wall portion is 0.4 to 1. Exemplarily, a/b can be 0.4, 0.5, 0.6, 0.7, 0.8, 1, or the like.

The battery cell 20 satisfying 60mm < c can also be referred to as a thick cell. FIG. 15 shows the case where c = 71mm and a/b = 0.6. FIG. 16 shows the case where c = 87mm and a/b = 0.5.

In order to make the technical problems, technical solutions, and beneficial effects solved by the embodiments of the present application clearer, the following will provide further detailed descriptions in conjunction with Examples 56-73. Obviously, the described examples are only a part of the examples of the present application, and not all of the examples. All other examples obtained by persons skilled in the art based on the examples in the present application without creative effort fall within the protection scope of the present application.

When 60mm < c, the bursting pressure of the battery cells 20 during thermal runaway and their valve opening angle during bursting were obtained for the battery cells 20 in Examples 56-73, so as to evaluate the reliability of the battery cells 20. The specific situation is shown in Table 6. The test methods for bursting pressure and valve opening angle during bursting are as described above. The model number of the test objects used in Examples 56-73 is 87203.

The difference between Example 1 and Examples 56-73 lies in the different dimension c of the first surface 2111 along the width direction Y of the first wall portion, the different sum a of dimensions of all the predetermined pressure relief areas P arranged along the length direction Z of the first wall portion, and the different sum b of dimensions of all the predetermined pressure relief areas P arranged along the width direction Y of the first wall portion.

**Table 6**

| | c (mm) | a (mm) | b (mm) | a/b | Bursting pressure or fluctuation value of bursting pressure relative to standard bursting pressure (MPa) | Valve opening angle |
|---|---|---|---|---|---|---|
| Example 56 | 70 | 23 | 57.5 | 0.4 | 0.093 | 88° |
| Example 57 | | 28 | 56 | 0.5 | 0.081 | 85° |
| Example 58 | | 33 | 55 | 0.6 | 0.086 | 81° |
| Example 59 | | 38 | 54.3 | 0.7 | 0.083 | 77° |
| Example 60 | | 43 | 53.75 | 0.8 | 0.072 | 73° |
| Example 61 | | 48 | 48 | 1 | 0.065 | 70° |
| Example 62 | 80 | 23 | 57.5 | 0.4 | 0.083 | 83° |
| Example 63 | | 28 | 56 | 0.5 | 0.071 | 80° |
| Example 64 | | 33 | 55 | 0.6 | 0.076 | 76° |
| Example 65 | | 38 | 54.3 | 0.7 | 0.073 | 72° |
| Example 66 | | 43 | 53.75 | 0.8 | 0.062 | 68° |
| Example 67 | | 48 | 48 | 1 | 0.055 | 65° |
| Example 68 | 90 | 23 | 57.5 | 0.4 | 0.073 | 80° |
| Example 69 | | 28 | 56 | 0.5 | 0.061 | 77° |
| Example 70 | | 33 | 55 | 0.6 | 0.066 | 73° |
| Example 71 | | 38 | 54.3 | 0.7 | 0.063 | 69° |
| Example 72 | | 43 | 53.75 | 0.8 | 0.052 | 65° |
| Example 73 | | 48 | 48 | 1 | 0.045 | 62° |

As can be seen from Table 6, when c = 70mm, 80mm, 90mm, as a/b gradually increases, the valve opening angle gradually decreases, that is, as a/b gradually increases, the pressure relief area becomes smaller, and the pressure relief effect and efficiency become worse. As a/b gradually increases, the fluctuation of the bursting pressure of each battery cell 20 relative to the standard bursting pressure gradually decreases, and the bursting pressure becomes more stable.

In Table 6, when c = 70mm, 80mm, 90mm, and a/b ≥ 0.4, the fluctuation of the bursting pressure of each battery cell 20 relative to the standard bursting pressure is small, and the bursting pressure is more stable, which is beneficial for timely pressure relief of the battery cell 20 and improving the reliability of the battery cell 20. When a/b ≤ 1, the valve opening angle of the first groove 221 of the battery cell 20 when it cracks is greater than 45°, and the valve opening angle of the first groove 221 of the battery cell 20 when it cracks is large, which means that the pressure relief area is large, and the pressure relief effect and efficiency are better.

Therefore, when 60mm < c, the sum a of dimensions of all the predetermined pressure relief areas P arranged along the length direction Z of the first wall portion is 0.4 to 1 times the sum b of dimensions of all the predetermined pressure relief areas P arranged along the width direction Y of the first wall portion, that is, the ratio of the sum a of dimensions of all the predetermined pressure relief areas P arranged along the length direction Z of the first wall portion to the sum b of dimensions of all the predetermined pressure relief areas P arranged along the width direction Y of the first wall portion is 0.4 to 1. When the ratio of the sum a of dimensions of all the predetermined pressure relief areas P arranged along the length direction Z of the first wall portion to the sum b of dimensions of all the predetermined pressure relief areas P arranged along the width direction Y of the first wall portion is greater than or equal to 0.4, the bursting pressure is more stable, which is beneficial for the pressure relief component 22 to relieve pressure in time, thereby reducing the risk of the housing 21 of the battery cell 20 bursting, exploding, or catching fire due to untimely pressure relief of the pressure relief component 22, and further effectively improving the service reliability of the battery cell 20. When the ratio of the sum a of dimensions of all the predetermined pressure relief areas P arranged along the length direction Z of the first wall portion to the sum b of dimensions of all the predetermined pressure relief areas P arranged along the width direction Y of the first wall portion is less than or equal to 1, it is beneficial for the valve opening angle of the predetermined pressure relief area P to be larger when the first groove 221 cracks, so that the pressure relief component 22 has a larger pressure relief area, which is beneficial for the pressure relief component 22 to relieve pressure in time, reducing the risk of the housing 21 of the battery cell 20 bursting, exploding, or catching fire, and improving the reliability of the battery cell 20.

As shown in FIG. 17, in some embodiments, the pressure relief component 22 further includes a second groove 222, and the second groove 222 is configured to guide the predetermined pressure relief area P to open.

The bottom wall of the second groove 222 forms a second weak portion 2221, that is, the portion of the pressure relief component 22 where the second groove 222 is provided and corresponding to the bottom wall of the second groove 222 is the second weak portion 2221.

Along the thickness direction X of the first wall portion, the thickness of the second weak portion 2221 is greater than the thickness of the first weak portion 2211 formed by the bottom wall of the first groove 221. The second weak portion 2221 is configured to guide the predetermined pressure relief area P to flip when the first weak portion 2211 cracks, so as to relieve the internal pressure of the battery cell 20, thereby realizing that the second groove 222 guides the predetermined pressure relief area P to open.

The second weak portion 2221 is configured to guide the predetermined pressure relief area P to flip when the bottom wall of the first groove 221 cracks, that is, the predetermined pressure relief area P can flip around the second weak portion 2221 after the bottom wall of the first groove 221 of the pressure relief component 22 cracks, so that the interior of the housing 21 and the exterior of the housing 21 are in communication for pressure relief after the predetermined pressure relief area P flips.

Certainly, in other embodiments, the second weak portion 2221 can also be other structures, for example, by locally heat treating the pressure relief component 22 to weaken the strength of this area, thereby forming the second weak portion 2221.

The pressure relief component 22 is provided with a second groove 222, so the pressure relief component 22 forms a weak portion in the area corresponding to the second groove 222. The weak portion corresponding to the second groove 222 can guide the predetermined pressure relief area P to open, thereby improving the opening effect of the predetermined pressure relief area P of the pressure relief component 22, which is beneficial to increasing the pressure relief area of the battery cell 20 after the predetermined pressure relief area P opens, and further improving the pressure relief rate of the battery cell 20 when thermal runaway occurs, so as to reduce the risk of fire, explosion, connection failure, and more caused by untimely pressure relief of the battery cell 20, which is beneficial to improving the service reliability of the battery cell 20. The pressure relief component 22 is provided with a second groove 222, so that the pressure relief component 22 forms a weak portion in the area where the second groove 222 is provided and corresponds to the bottom surface of the second groove 222. The battery cell 20 with this structure facilitates the formation of a weak portion on the pressure relief component 22, which is beneficial to reducing the difficulty of forming a weak portion on the pressure relief component 22 to guide the predetermined pressure relief area P to open, so as to improve the production efficiency of the battery cell 20.

In some embodiments, the second groove 222 is recessed from the second surface 2112 towards the first surface 2111.

The first groove 221 is arranged on the first surface 2111, and the second groove 222 is arranged on the second surface 2112. The first surface 2111 and the second surface 2112 are two opposite surfaces of the pressure relief component 22 in the thickness direction X of the first wall portion. Along the thickness direction X of the first wall portion, the first groove 221 and the second groove 222 are respectively arranged on the two sides of the pressure relief component 22.

Exemplarily, the first groove 221 is arranged on the surface of the pressure relief component 22 facing away from the interior of the housing 21, and the second groove 222 is arranged on the surface of the pressure relief component 22 facing towards the interior of the housing 21, so that the first groove 221 and the second groove 222 are respectively arranged on the two sides of the pressure relief component 22.

The second groove 222 is recessed from the second surface 2112 towards the first surface 2111, so the first groove 221 and the second groove 222 are arranged on opposite sides of the pressure relief component 22 along the thickness direction X of the first wall portion, which facilitates processing the first groove 221 and the second groove 222 separately on both sides of the pressure relief component 22 along the thickness direction X of the first wall portion, and helps to reduce the mutual influence between the first groove 221 and the second groove 222 during the processing.

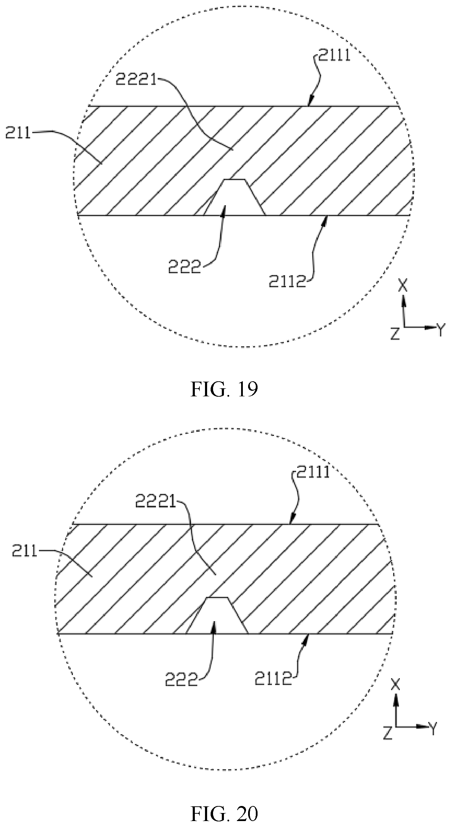

As shown in FIGs. 17, 18, 19, and 20, in some embodiments, the first surface 2111 is a surface of the pressure relief component 22 facing away from an interior of the housing 21, and the second surface 2112 is a surface of the pressure relief component 22 facing towards the interior of the housing 21.

That is, the first groove 221 is arranged on the surface of the pressure relief component 22 facing away from the interior of the housing 21, and the first groove 221 is recessed from the first surface 2111 towards the second surface 2112. The second groove 222 is arranged on the surface of the pressure relief component 22 facing towards the interior of the housing 21, and the second groove 222 is recessed from the second surface 2112 towards the first surface 2111.

By arranging the first groove 221 and the second groove 222 respectively on the first surface 2111 and the second surface 2112, which are opposite to each other along the thickness direction X of the first wall portion of the pressure relief component 22, it facilitates processing the first groove 221 and the second groove 222 separately on both sides of the pressure relief component 22 along the thickness direction X of the first wall portion, and helps to reduce the mutual influence between the first groove 221 and the second groove 222 during the processing. Moreover, arranging the second groove 222 on the second surface 2112 of the pressure relief component 22 facing towards the interior of the housing 21 facilitates the predetermined pressure relief area P to flip towards the outer side of the housing 21 around the bottom wall of the second groove 222 when it is opened, thereby reducing the interference effect of the side surface of the second groove 222 on the predetermined pressure relief area P during the flipping process, and helps to improve the flipping effect of the predetermined pressure relief area P.

As shown in FIG. 17, in some embodiments, the first groove 221 and the second groove 222 do not contact each other.

By setting the first groove 221 and the second groove 222 as structures that do not contact each other, on the one hand, it can reduce the mutual influence between the first groove 221 and the second groove 222 during the processing, and on the other hand, it can reduce the phenomenon that the area corresponding to the second groove 222 cracks when the first groove 221 cracks for pressure relief, and can reduce the stress influence between the first groove 221 and the second groove 222.

Certainly, in other embodiments, as shown in FIG. 11, the pressure relief component 22 may also not include a second groove 222.

In embodiments where the first groove 221 includes multiple groove segments, exemplarily, as shown in FIG. 17, the first groove 221 includes a first groove segment 2212 and a second groove segment 2213. The first groove segment 2212 and the second groove segment 2213 are connected, and the first groove segment 2212 and the second groove segment 2213 jointly define at least one predetermined pressure relief area P.

The first groove segment 2212 can extend linearly. The second groove segment 2213 can extend linearly. The first groove segment 2212 and the second groove segment 2213 jointly define at least one predetermined pressure relief area P. The predetermined pressure relief area P is configured to open when the pressure relief component 22 cracks along at least a portion of the bottom wall of the first groove 221, so as to release the internal pressure of the battery cell 20.

The first groove segment 2212 can also extend curvilinearly, for example, the first groove segment 2212 is an arc segment. The second groove segment 2213 can also extend curvilinearly, for example, the second groove segment 2213 is an arc segment.

The first groove segment 2212 and the second groove segment 2213 each form a first weak segment 2211a. The first weak portion 2211 can include two first weak segments 2211a. Since the first groove segment 2212 and the second groove segment 2213 are connected, the first weak segment 2211a formed in the area of the first groove segment 2212 and the first weak segment 2211a formed in the area of the second groove segment 2213 are connected, forming a first weak portion 2211 including two connected first weak segments 2211a. When one of the first weak segments 2211a begins to crack, it can drive the other first weak segment 2211a to crack.

The first groove segment 2212 and the second groove segment 2213 jointly define the predetermined pressure relief area P, that is, the first groove segment 2212 and the second groove segment 2213 are structures arranged along the edge of the predetermined pressure relief area P, so that the trajectory of the first groove 221 is arranged along the edge of the predetermined pressure relief area P.

The predetermined pressure relief area P is configured to open when the first weak portion 2211 formed by the bottom wall of at least a portion of the first groove 221 of the pressure relief component 22 cracks, that is, when the battery cell 20 undergoes thermal runaway and releases internal pressure, the areas of the first groove segment 2212 and the second groove segment 2213 of the pressure relief component 22 can crack, so that the predetermined pressure relief area P can be opened and the internal pressure of the battery cell 20 can be released.

The connection between the first groove segment 2212 and the second groove segment 2213 can take various forms, for example, the first groove segment 2212 and the second groove segment 2213 can be connected to form a "T" shape, the first groove segment 2212 and the second groove segment 2213 can be connected to form a "V" shape, the first groove segment 2212 and the second groove segment 2213 can be connected to form an "L" shape, the first groove segment 2212 and the second groove segment 2213 can be connected to form an "X" shape.

The first groove 221 includes a first groove segment 2212 and a second groove segment 2213, and the first groove segment 2212 and the second groove segment 2213 are connected to each other. On the one hand, it can increase the pressure relief area of the battery cell 20 to improve the pressure relief rate of the battery cell 20. On the other hand, it makes the connection position between the first groove segment 2212 and the second groove segment 2213 weaker, making it easier to crack and open the predetermined pressure relief area P to release the internal pressure of the battery cell 20.

In some embodiments, the first groove 221 further includes a third groove segment 2214. The first groove segment 2212 and the third groove segment 2214 are arranged opposite to each other. The second groove segment 2213 connects the first groove segment 2212 and the third groove segment 2214. The first groove segment 2212, the second groove segment 2213, and the third groove segment 2214 jointly define at least one predetermined pressure relief area P.

The third groove segment 2214 can extend linearly. The first groove segment 2212, the second groove segment 2213, and the third groove segment 2214 jointly define the predetermined pressure relief area P. The predetermined pressure relief area P is configured to open when the first weak portion formed by the bottom wall of at least a portion of the first groove 221 of the pressure relief component 22 cracks, so as to release the internal pressure of the battery cell 20.

The extension direction of the first groove segment 2212 is parallel to the extension direction of the third groove segment 2214. The extension direction of the first groove segment 2212 is perpendicular to the extension direction of the second groove segment 2213. The extension direction of the third groove segment 2214 is perpendicular to the extension direction of the second groove segment 2213. That is, the first groove segment 2212 and the third groove segment 2214 are respectively perpendicular to the second groove segment 2213.

The connection between the first groove segment 2212, the second groove segment 2213, and the third groove segment 2214 can take various forms, for example, the first groove segment 2212, the second groove segment 2213, and the third groove segment 2214 can be connected to form an "H" shape, or the first groove segment 2212, the second groove segment 2213, and the third groove segment 2214 can be connected to form a "U" shape.

In other embodiments, the third groove segment 2214 can also extend curvilinearly, for example, the third groove segment 2214 is an arc segment.

The bottom wall of the first groove segment 2212, the bottom wall of the second groove segment 2213, and the bottom wall of the third groove segment 2214 all form a first weak segment 2211a, that is, the first weak portion 2211 includes three first weak segments 2211a. The three first weak segments 2211a are respectively the bottom wall of the first groove segment 2212, the bottom wall of the second groove segment 2213, and the bottom wall of the third groove segment 2214. The three first weak segments 2211a constitute the first weak portion 2211.

The area corresponding to the third groove segment 2214 forms a first weak segment 2211a. Then, the first weak portion 2211 includes three first weak segments 2211a. The second groove segment 2213 connects the first groove segment 2212 and the third groove segment 2214. Then, the first weak segment 2211a formed in the area corresponding to the second groove segment 2213 connects the first weak segment 2211a formed in the area corresponding to the first groove segment 2212 and the first weak segment 2211a formed in the area corresponding to the third groove segment 2214. When one of the first weak segments 2211a begins to crack, it can drive another first weak segment 2211a to crack, which is beneficial for the first weak portion 2211 to crack quickly to open the predetermined pressure relief area P, thereby achieving rapid pressure relief.

The first groove segment 2212 and the third groove segment 2214 are arranged opposite to each other, that is, the first groove segment 2212 and the third groove segment 2214 are spaced apart. Exemplarily, as shown in FIG. 17, the first groove segment 2212 and the third groove segment 2214 are arranged spaced apart along the length direction Z of the first wall portion, and the first groove segment 2212 and the third groove segment 2214 both extend along the width direction Y of the first wall portion.

The second groove segment 2213 connects the first groove segment 2212 and the third groove segment 2214, that is, the second groove segment 2213 is located between the first groove segment 2212 and the third groove segment 2214, and the two ends of the second groove segment 2213 are respectively connected to the first groove segment 2212 and the third groove segment 2214. Exemplarily, as shown in FIG. 15, the second groove segment 2213 extends along the length direction Y of the wall portion. Certainly, in other embodiments, the second groove segment 2213 can also extend the first groove segment 2212 and the third groove segment 2214 respectively from its two ends in the length direction Y of the wall portion.

The first groove 221 is provided with a first groove segment 2212 and a third groove segment 2214 arranged opposite to each other, and a second groove segment 2213 connecting the first groove segment 2212 and the third groove segment 2214, so that the pressure relief component 22 can crack along the first groove segment 2212, the second groove segment 2213, and the third groove segment 2214 when the battery cell 20 relieves pressure, so as to open the predetermined pressure relief area P to release the internal pressure of the battery cell 20. The first groove 221 with this structure makes the intersection position of the first groove segment 2212 and the second groove segment 2213 and the intersection position of the second groove segment 2213 and the third groove segment 2214 weaker, making it easier to crack and open the predetermined pressure relief area P for pressure relief, and can further improve the pressure relief area and pressure relief rate of the battery cell 20.

As shown in FIG. 17, in some embodiments, a position where the second groove segment 2213 is connected to the first groove segment 2212 is offset from two ends of the first groove segment 2212, and a position where the second groove segment 2213 is connected to the third groove segment 2214 is offset from two ends of the third groove segment 2214.

The position where the second groove segment 2213 is connected to the first groove segment 2212 is offset from the two ends of the extension direction of the first groove segment 2212. The position where the second groove segment 2213 is connected to the third groove segment 2214 is offset from the two ends of the extension direction of the third groove segment 2214.

The connection position between the first groove segment 2212 and the second groove segment 2213 is offset from the two ends of the first groove segment 2212, that is, the second groove segment 2213 is connected between the two ends of the first groove segment 2212. Similarly, the connection position between the third groove segment 2214 and the second groove segment 2213 is offset from the two ends of the third groove segment 2214, that is, the second groove segment 2213 is connected between the two ends of the third groove segment 2214, so that the first groove 221 formed by the first groove segment 2212, the second groove segment 2213, and the third groove segment 2214 has an approximately "H"-shaped structure, and predetermined pressure relief areas P are formed on both sides of the second groove segment 2213. Certainly, the areas of the two predetermined pressure relief areas P can be the same or different.

Exemplarily, the second groove segment 2213 is a linear structure extending along the length direction Z of the first wall portion. The first groove segment 2212 and the third groove segment 2214 are both linear structures extending along the width direction Y of the first wall portion. The second groove segment 2213 is located between the first groove segment 2212 and the third groove segment 2214 along the length direction Z of the first wall portion.

By setting the first groove segment 2212, the second groove segment 2213, and the third groove segment 2214 to all extend along a linear trajectory, and setting the first groove segment 2212 and the third groove segment 2214 to be both perpendicular to the second groove segment 2213, the extension direction of the second groove segment 2213 is the arrangement direction of the first groove segment 2212 and the third groove segment 2214. On the one hand, it can improve the regularity of the shape of the first groove 221, which is beneficial to reducing the processing difficulty of the first groove 221, so as to reduce the manufacturing cost of the battery cell 20. On the other hand, the two predetermined pressure relief areas P located on both sides of the second groove segment 2213 relieve pressure in opposite directions when the battery cell 20 relieves pressure.

The position where the second groove segment 2213 is connected to the first groove segment 2212 is offset from the two ends of the first groove segment 2212, so the connection position between the first groove segment 2212 and the second groove segment 2213 is set to be between the two ends of the first groove segment 2212. The position where the second groove segment 2213 is connected to the third groove segment 2214 is offset from the two ends of the third groove segment 2214, so the connection position between the third groove segment 2214 and the second groove segment 2213 is set to be between the two ends of the third groove segment 2214. This forms an "H"-shaped structure with the first groove segment 2212, the second groove segment 2213, and the third groove segment 2214, so that predetermined pressure relief areas P can be formed on both sides of the second groove segment 2213 of the first groove 221, and the two predetermined pressure relief areas P can open in an opposing manner for pressure relief when the battery cell 20 relieves pressure, which is beneficial to further increasing the pressure relief effect of the battery cell 20 and can effectively improve the pressure relief rate of the battery cell 20.

The first groove 221 can also be other structures. Referring to FIG. 9, the shape of the first groove 221 formed by the first groove segment 2212, the second groove segment 2213, and the third groove segment 2214 can be a "U"-shaped structure, that is, one end of the second groove segment 2213 is connected to one end of the first groove segment 2212, and the other end is connected to one end of the third groove segment 2214, so as to form a predetermined pressure relief area P on the pressure relief component 22.

In some embodiments, the first groove 221 also includes a fourth groove segment 2215. The fourth groove segment 2215 is arranged between the first groove segment 2212 and the third groove segment 2214. The first fourth groove segment is connected to the third groove segment 2214. The area corresponding to the first fourth groove segment forms a first weak segment 2211a.

Exemplarily, as shown in FIG. 17, the fourth groove segment 2215 intersects the second groove segment 2213 perpendicularly. The fourth groove segment 2215 extends along the width direction Y of the first wall portion. Along the width direction Y of the first wall portion, the length of the fourth groove segment 2215 is less than the length of the first groove segment 2212, and the length of the fourth groove segment 2215 is less than the length of the third groove segment 2214.

The bottom wall of the first fourth groove segment forms a first weak segment 2211a. The bottom wall of the first groove segment 2212, the bottom wall of the second groove segment 2213, the bottom wall of the third groove segment 2214, and the bottom wall of the first fourth groove segment jointly form a first weak portion 2211 including four first weak segments 2211a.

The arrangement of the fourth groove segment 2215 facilitates the pressure relief component 22 to crack from the intersection of the second groove segment 2213 and the fourth groove segment 2215, so that the two predetermined pressure relief areas P on both sides of the second groove segment 2213 can open simultaneously, thereby improving the pressure relief rate.

Continue to refer to FIG. 17. In some embodiments, the first groove 221 defines two predetermined pressure relief areas P, where the two predetermined pressure relief areas P are respectively located on two sides of the second groove segment 2213. The pressure relief component 22 further includes a second groove 222, where the second groove 222 is configured to guide the predetermined pressure relief area P to open, and each of the predetermined pressure relief areas P is correspondingly provided with at least one second groove 222, and the first groove 221 is located between the two second grooves 222.

Each predetermined pressure relief area P can be correspondingly provided with one second groove 222, or can be correspondingly provided with multiple second grooves 222.

Each second groove 222 is configured to guide the corresponding predetermined pressure relief area P to flip when the bottom wall of the first groove 221 cracks, thereby guiding the predetermined pressure relief area P to open.

The extension direction of the second groove 222 is parallel to the extension direction of the second groove segment 2213 of the first groove 221. The two second grooves 222 are arranged spaced apart along the extension direction of the first groove segment 2212 of the first groove 221. The first groove segment 2212 and the third groove segment 2214 of the first groove 221 are located between the two second grooves 222, and the second groove segment 2213 is located between the two second grooves 222, so that the first groove 221 is located between the two second grooves 222.

Each first groove 221 is located along the width direction Y of the first wall portion between the edge of the first wall portion 211 and the first groove 221. The two first grooves 221 separate the edge of the first wall portion 211 from the first groove 221 on both sides of the first groove 221 along the width direction Y of the first wall portion.

The second groove 222 can guide the corresponding predetermined pressure relief area P to open, and each predetermined pressure relief area P is correspondingly provided with at least one second groove 222, thereby improving the opening effect of each predetermined pressure relief area P of the pressure relief component 22, which is beneficial to increasing the pressure relief area of the battery cell 20 after the predetermined pressure relief area P opens, and further improving the pressure relief rate of the battery cell 20 when thermal runaway occurs, so as to reduce the risk of fire, explosion, connection failure, and more caused by untimely pressure relief of the battery cell 20, which is beneficial to improving the service reliability of the battery cell 20.

As shown in FIG. 17, in some embodiments, the second groove segment 2213 and the second groove 222 are arranged opposite to each other along a first direction, and along the first direction, the first groove segment 2212 and the third groove segment 2214 are both spaced apart from the second groove 222.

The second groove segment 2213 and the second groove 222 are arranged opposite to each other along the first direction, and along the first direction, the first groove segment 2212 and the third groove segment 2214 are both spaced apart from the second groove 222, so the first groove segment 2212, the second groove segment 2213, and the third groove segment 2214 do not contact the second groove 222. This can reduce the mutual influence between the first groove 221 and the second groove 222 during the processing, and can also reduce the phenomenon that the area corresponding to the second groove 222 cracks when the first groove 221 cracks for pressure relief, and can reduce the stress influence between the first groove 221 and the second groove 222. The second groove segment 2213 and the second groove 222 are arranged opposite to each other along the first direction, and along the first direction, the first groove segment 2212 and the third groove segment 2214 are both spaced apart from the second groove 222, so the second groove 222 is located between the edge of the first wall portion 211 along the first direction and the first score line. The second groove 222 can act as a buffer between the first groove 221 and the edge of the first wall portion 211 along the first direction, reducing the risk of the first groove 221 cracking due to external force, and improving the reliability of the battery cell 20.

Depending on the structure of the battery cell 20, the first direction can be different. For example, in embodiments where the first wall portion 211 is a rectangular wall portion, the first direction can be the length direction Z of the first wall portion, or the first direction can be the width direction Y of the first wall portion.

In some embodiments, the first wall portion 211 is a rectangular wall portion, and the first direction is parallel to a width direction Y of the first wall portion.

That is, the first groove segment 2212 and the third groove segment 2214 extend along the width direction Y of the first wall portion. The second groove 222 and the second groove segment 2213 extend along the length direction Z of the first wall portion. The second groove 222 and the second groove segment 2213 are arranged opposite to each other along the width direction Y of the first wall portion.

The first direction is parallel to the width direction Y of the first wall portion, so the second groove segment 2213 and the second groove 222 are arranged opposite to each other along the width direction Y of the first wall portion. Along the width direction Y of the first wall portion, the first groove segment 2212 and the third groove segment 2214 are both spaced apart from the second groove 222. The first groove segment 2212, the second groove segment 2213, and the third groove segment 2214 do not contact the second groove 222 in the width direction Y of the first wall portion. This can reduce the mutual influence between the first groove 221 and the second groove 222 during the processing, and can also reduce the phenomenon that the area corresponding to the second groove 222 cracks when the area corresponding to the first groove 221 cracks for pressure relief, and can reduce the stress influence between the first groove 221 and the second groove 222. The second groove segment 2213 and the second groove 222 are arranged opposite to each other along the width direction Y of the first wall portion, and along the width direction Y of the first wall portion, the first groove segment 2212 and the third groove segment 2214 are both spaced apart from the second groove 222, so the second groove 222 is located between the edge of the first wall portion 211 along the width direction Y of the first wall portion and the first score line. The second groove 222 can act as a buffer between the first groove 221 and the edge of the first wall portion 211 along the first direction, reducing the risk of the first groove 221 cracking due to external force, and improving the reliability of the battery cell 20.

As shown in FIG. 21, in other embodiments, the first groove segment 2212 and the third groove segment 2214 can also be arranged along the width direction Y of the first wall portion. The first groove segment 2212 and the third groove segment 2214 both extend along the length direction Z of the first wall portion. The second groove segment 2213 extends along the width direction Y of the first wall portion and connects the first groove segment 2212 and the third groove segment 2214. The first groove 221 defines two predetermined pressure relief areas P, where the two predetermined pressure relief areas P are respectively located on two sides of the second groove segment 2213 along the length direction Z of the first wall portion. In this way, the first groove 221 defines two predetermined pressure relief areas P arranged side by side along the length direction Z of the first wall portion. The dimensions of the two predetermined pressure relief areas P along the length direction Z of the first wall portion are a1 and a2, respectively. Then, a = a1 + a2. Along the length direction Z of the first wall portion, the boundary line between the two predetermined pressure relief areas P can be the center line of the second groove segment 2213 in the width direction.

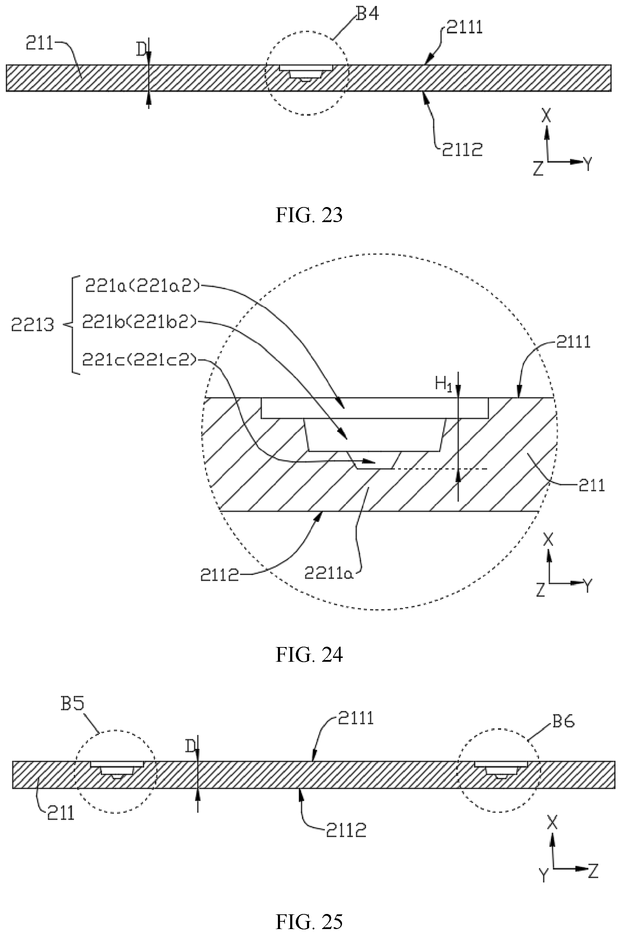

In some embodiments, as shown in FIGs. 23 and 24, along the thickness direction X of the first wall portion, the maximum groove depth of the first groove 221 is H₁, and the thickness of the pressure relief component 22 is D, where 0.16 ≤ H₁/D < 1.

H₁/D can be any point value or range value between any two of 0.16, 0.18, 0.2, 0.22, 0.25, 0.28, 0.3, 0.32, 0.35, 0.38, 0.4, 0.42, 0.45, 0.48, 0.5, 0.62, 0.65, 0.68, 0.7, 0.72, 0.75, 0.78, 0.8, 0.82, 0.85, 0.88, 0.9, 0.92, 0.95, 0.98, 0.99, or the like.

It can be understood that if the pressure relief component 22 is integrally formed with the first wall portion 211, the first wall portion 211 can be used as the pressure relief component 22, and the thickness of the pressure relief component 22 is the thickness of the first wall portion 211. The thickness of the first wall portion 211 can be the distance between the first surface 2111 and the second surface 2112 along the thickness direction X of the first wall portion.

In this embodiment, 0.16 ≤ H₁/D < 1, which ensures that the maximum depth of the first groove 221 does not account for too small a proportion of the thickness of the pressure relief component 22, so that the bursting pressure of the battery cell 20 is not too high, which is beneficial to improving the timely pressure relief of the battery cell 20.

In some embodiments, 0.4 mm ≤ H₁ ≤ 2 mm, and 0.8 mm ≤ D ≤ 2.5 mm.

H₁ can be any point value or range value between any two of 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, or the like.

D can be any point value or range value between any two of 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, 2.05 mm, 2.1 mm, 2.15 mm, 2.2 mm, 2.25 mm, 2.3 mm, 2.35 mm, 2.4 mm, 2.45 mm, 2.5 mm, or the like.

In this embodiment, 0.4 mm ≤ H₁ ≤ 2 mm, and 0.8 mm ≤ D ≤ 2.5 mm, which makes the maximum depth of the first groove 221 and the thickness of the pressure relief component 22 within a reasonable range, resulting in better economic performance. In embodiments where the first wall portion 211 serves as the pressure relief component 22, the thickness of the first wall portion 211 is 0.8mm to 2.5mm. The thickness of the first wall portion 211 is greater than or equal to 0.8mm, which ensures that the first wall portion 211 has sufficient strength. The thickness of the first wall portion 211 is less than or equal to 2mm, which ensures that the thickness of the first wall portion 211 is not too thick. When the volume of the housing 21 is constant, the internal space of the housing 21 can be increased to provide more space for the electrode assembly 23. By controlling the thickness of the first wall portion 211 within the range of 0.8mm to 2.5mm, and controlling the maximum groove depth of the first groove 221 within the range of 0.4mm to 2mm, the maximum groove depth of the first groove 221 is better matched with the thickness of the pressure relief component 22, so that the pressure relief component 22 has good pressure relief capability.

The first groove 221 can be a single-stage score line groove.

In some embodiments, the first groove 221 is a multi-stage score line groove, where the multi-stage score line groove is a multi-stage score line groove sequentially arranged from the first surface 2111 to the second surface 2112, and in two adjacent stages of the score line grooves, a stage of the score line groove farther from the first surface 2111 is arranged on a bottom surface of a stage of the score line groove closer to the first surface 2111.

That is, the first groove 221 is a multi-stage stepped groove structure arranged along the thickness direction X of the first wall portion, that is, the first groove 221 is a stepped groove structure formed by multiple stampings.

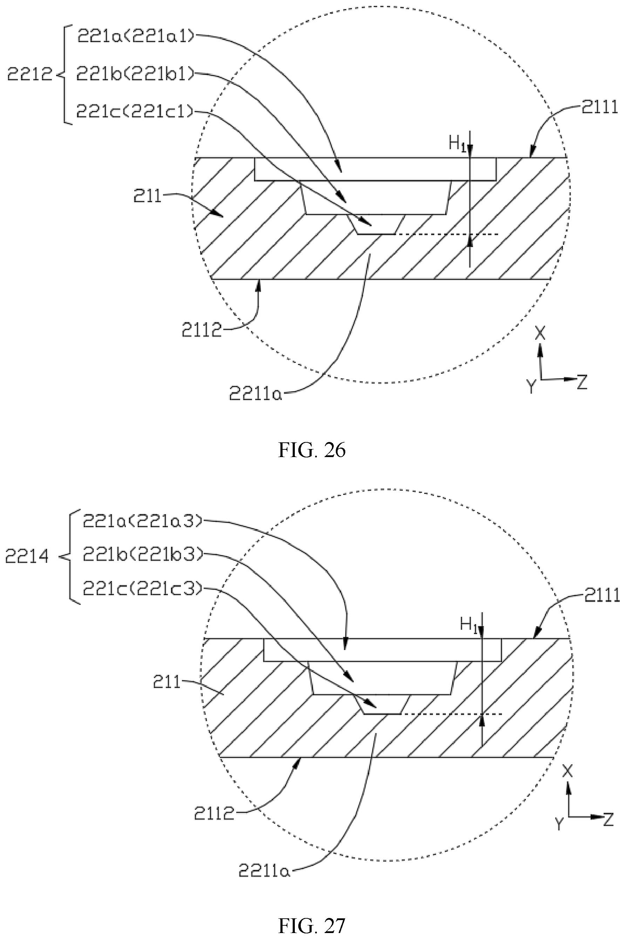

Exemplarily, as shown in FIGs. 22-27, the first groove 221 is a three-stage stepped groove structure. Certainly, in other embodiments, the first groove 221 can also be a two-stage stepped groove, a four-stage stepped groove, a five-stage stepped groove, or a six-stage stepped groove, or the like.

It should be noted that in embodiments where the first groove 221 includes multiple groove segments, each groove segment is a multi-stage stepped groove structure. Exemplarily, as shown in FIGs. 22-27, the first groove 221 includes a first groove segment 2212, a second groove segment 2213, and a third groove segment 2214. Then, the corresponding first groove segment 2212, second groove segment 2213, and third groove segment 2214 are all multi-stage stepped groove structures. Certainly, in structures where the entire first groove 221 extends along a smooth trajectory, such as a curve, a ring, or a straight line, the entire first groove 221 is a multi-stage stepped groove structure. Exemplarily, as shown in FIGs. 3 and 4, the first groove 221 is a ring-shaped structure, and correspondingly, the entire first groove 221 is a multi-stage stepped groove structure.

By setting the first groove 221 as a stepped groove structure arranged along the thickness direction of the wall portion, so that the first groove 221 is a groove formed by multiple processing steps, this structure, when forming a groove of the same depth in the pressure relief component 22, on the one hand, can reduce the depth of a single processing step of the score line groove, which is beneficial to reducing the manufacturing difficulty of forming a groove of the same depth and the requirements for manufacturing equipment, so as to reduce manufacturing costs, and can reduce the forming force received by the pressure relief component 22 during a single processing step in the formation of the first groove 221, which is beneficial to reducing the risk of cracks in the pressure relief component 22, so as to improve the production quality of the battery cell 20. On the other hand, it can improve the flow state of the material during the formation of the bottom wall of the first groove 221, which is beneficial to the flow of the material generated when forming the bottom wall of the first groove 221, so as to improve the structural consistency of the multi-stage score line groove.

In some embodiments, the first groove 221 is a three-stage score line groove, where the three-stage score line groove is sequentially arranged from the first surface 2111 to the second surface 2112.

The three-stage score line grooves of the first groove 221 are defined as a first sub-groove 221a, a second sub-groove 221b, and a third sub-groove 221c. The first sub-groove 221a, the second sub-groove 221b, and the third sub-groove 221c are arranged sequentially from the first surface 2111 to the second surface 2112. The second sub-groove 221b is arranged on the bottom surface of the first sub-groove 221a, and the third sub-groove 221c is arranged on the bottom surface of the second sub-groove 221b.

Exemplarily, as shown in FIGs. 22-27, in embodiments where the first groove 221 includes a first groove segment 2212, a second groove segment 2213, and a third groove segment 2214, the first sub-groove 221a includes a first segment 221a1, a second segment 221a2, and a third segment 221a3. The second sub-groove 221b includes a fourth segment 221b1, a fifth segment 221b2, and a sixth segment 221b3. The third sub-groove 221c includes a seventh segment 221c1, an eighth segment 221c2, and a ninth segment 221c3. The fourth segment 221b1 is arranged on the bottom surface of the first segment 221a1. The seventh segment 221c1 is arranged on the bottom surface of the fourth segment 221b1. The first segment 221a1, the fourth segment 221b1, and the seventh segment 221c1 jointly form the first groove segment 2212. The fifth segment 221b2 is arranged on the bottom surface of the second segment 221a2. The eighth segment 221c2 is arranged on the bottom surface of the fifth segment 221b2. The second segment 221a2, the fifth segment 221b2, and the eighth segment 221c2 jointly form the second groove segment 2213. The sixth segment 221b3 is arranged on the bottom surface of the third segment 221a3. The ninth segment 221c3 is arranged on the bottom surface of the sixth segment 221b3. The third segment 221a3, the sixth segment 221b3, and the ninth segment 221c3 jointly form the third groove segment 2214.

The first groove 221 is a three-stage score line groove. In the case of forming a groove of the same depth, it can not only reduce the depth of a single processing step of the score line groove, which is beneficial to reducing the manufacturing difficulty of forming a groove of the same thickness and the requirements for manufacturing equipment, so as to reduce manufacturing costs, and can reduce the forming force received by the pressure relief component 22 during a single processing step in the formation of the bottom wall of the first groove 221, which is beneficial to reducing the risk of cracks in the pressure relief component 22, so as to improve the production quality of the battery cell 20. On the other hand, it can improve the flow state of the material during the formation of the bottom wall of the first groove 221, which is beneficial to the flow of the material generated when forming the first groove 221, so as to improve the structural consistency of the multi-stage score line groove. It also alleviates the problem of increased processing time due to multiple processing steps required for the formation of the first groove 221.

In some embodiments, the pressure relief component 22 is integrally formed with the first wall portion 211.

That is, the pressure relief component 22 and the first wall portion 211 are an integral structure. The pressure relief component 22 and the first weak portion 2211 are formed on the first wall portion 211 by an integral molding process, that is, the pressure relief component 22 is the first wall portion 211, so that the pressure relief component 22 is a part of the housing 21.

Exemplarily, as shown in FIG. 10, the first wall portion 211 is the bottom wall of the housing body 212 opposite to the end cover 213 in the thickness direction X of the first wall portion. Then, the pressure relief component 22 is the bottom wall, and the first groove 221 is arranged on the bottom wall. If the first wall portion 211 is an end cover 213, then the pressure relief component 22 is the end cover 213, so that the pressure relief component 22 can seal the opening 2121 of the housing body 212, and the two electrode terminals 24 are both installed on the pressure relief component 22.

By setting the pressure relief component 22 and the first wall portion 211 as an integrally formed structure, the pressure relief component 22 is a structure integrated on the first wall portion 211, that is, the pressure relief component 22 is a wall of the housing 21, and correspondingly, the first wall portion 211 is provided with the pressure relief component 22. The battery cell 20 with this structure can improve the structural strength of the pressure relief component 22 on the first wall portion 211, and can reduce the risk of leakage caused by improper assembly between the pressure relief component 22 and the first wall portion 211.

In some embodiments, a material of the pressure relief component 22 includes aluminum alloy.

It can be understood that in embodiments where the pressure relief component 22 is integrally formed with the first wall portion 211, the material of the first wall portion 211 includes aluminum alloy. If the first wall portion 211 is an end cover 213, the end cover 213 can be made of aluminum alloy. If the first wall portion 211 is a wall portion in the housing body 212, the housing body 212 can be made of aluminum alloy.

Aluminum alloy has the characteristics of light weight and good ductility, making it easier to process the first groove 221 on the pressure relief component 22. In embodiments where the pressure relief component 22 is integrally formed with the first wall portion 211, the first wall portion 211 is made of aluminum alloy, which can effectively reduce the difficulty of forming the first wall portion 211.

In some embodiments, the aluminum alloy includes the following components by mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other single elements ≤ 0.03%.

This aluminum alloy belongs to the 3-series aluminum, and has lower hardness and better formability, which reduces the processing difficulty of the first groove 221, helps to improve the processing accuracy of the first groove 221, and improves the pressure relief consistency of the pressure relief component 22.

In some embodiments, the aluminum alloy includes the following components by mass percentage: aluminum ≥ 96.7%, 0.05% ≤ copper ≤ 0.2%, iron ≤ 0.7%, manganese ≤ 1.5%, silicon ≤ 0.6%, zinc ≤ 0.1%, other single element components ≤ 0.05%, and total other element components ≤ 0.15%.

This aluminum alloy belongs to the 5-series aluminum. The pressure relief component 22 made of this aluminum alloy has higher hardness and greater strength, and has good anti-damage capability.

In some embodiments, the pressure relief component 22 is separately arranged from the first wall portion 211, where the first wall portion 211 is provided with a pressure relief hole (not shown in the figure), and the pressure relief component 22 is installed on the first wall portion 211 and covers the pressure relief hole.

The pressure relief hole penetrates the two sides of the first wall portion in the thickness direction X, and the pressure relief hole communicates with the interior of the housing 21.

The pressure relief component 22 being separately arranged from the first wall portion 211 means that before the pressure relief component 22 and the first wall portion 211 are assembled, the pressure relief component 22 and the first wall portion 211 are two separate components. To complete the assembly of the pressure relief component 22 and the first wall portion 211, the pressure relief component 22 and the first wall portion 211 need to be connected as a whole through a connection relationship. The pressure relief component 22 can be connected to the hole wall of the pressure relief hole and cover the pressure relief hole. Exemplarily, the pressure relief component 22 is welded to the first wall portion 211.

By setting the pressure relief component 22 and the first wall portion 211 as a separate structure, the pressure relief component 22 is a structure installed on the first wall portion 211. The battery cell 20 with this structure can reduce the difficulty of arranging the pressure relief component 22 on the first wall portion 211, and enables the processing procedures of the housing 21 and the pressure relief component 22 to be carried out simultaneously, which is beneficial to optimizing the production beat of the battery cell 20.

In some embodiments, the battery cell 20 includes an electrode assembly 23, where the electrode assembly 23 is accommodated in the housing 21, and the first wall portion 211 supports the electrode assembly 23.

The battery cell 20 can include one or more electrode assemblies 23. In embodiments where the battery cell 20 includes multiple electrode assemblies 23, the multiple electrode assemblies 23 are stacked along their thickness direction.

The first wall portion 211 supports the electrode assembly 23, which can be understood as the first wall portion 211 bearing the weight of the electrode assembly 23.

The first wall portion 211 supports the electrode assembly 23, and the pressure relief component 22 is arranged on the first wall portion 211, which can reduce the risk of substances released during pressure relief of the battery cell 20 acting on other electrical connection structures, thereby reducing the risk of causing other reliability problems.

In some embodiments, the battery cell 20 includes an electrode terminal 24, where the electrode terminal 24 is arranged on a wall portion of the housing 21 other than the first wall portion 211.

The electrode terminal 24 is arranged on a wall portion of the housing 21 other than the first wall portion 211, that is, the electrode terminal 24 and the pressure relief component 22 are arranged on different wall portions of the housing 21.

The electrode terminal 24 is arranged on a wall portion of the housing 21 other than the first wall portion 211, so the risk of substances released during pressure relief of the battery cell 20 acting on the electrode terminal 24 is low, which can reduce the risk of the battery cell 20 short-circuiting and causing thermal runaway again due to the substances released during pressure relief of the battery cell 20 forming an electrical connection with the electrode terminal 24.

In some embodiments, the electrode terminal 24 is arranged on a wall of the housing 21 opposite to the first wall portion 211.

Exemplarily, the housing body 212 of the housing 21 has a bottom wall opposite to the opening 2121, and the end cover 213 seals the opening 2121. The end cover 213 and the bottom wall are arranged opposite to each other. The bottom wall is the first wall portion 211. Then, the electrode terminal 24 is arranged on the end cover 213 that seals the opening 2121.

The electrode terminal 24 is arranged on the wall of the housing 21 opposite to the first wall portion 211, which makes the distance between the electrode terminal 24 and the pressure relief component 22 greater, and can further reduce the risk of substances released during pressure relief of the battery cell 20 acting on the electrode terminal 24, and further reduces the risk of the battery cell 20 short-circuiting and causing thermal runaway again due to the substances released during pressure relief of the battery cell 20 forming an electrical connection with the electrode terminal 24.

In some embodiments, the housing 21 includes a housing body 212 and an end cover 213; the housing body 212 has at least one opening 2121; the end cover 213 corresponds to the opening 2121 one-to-one, and the end cover 213 is connected to the housing body 212 and seals the opening 2121; where at least one end cover 213 is the first wall portion 211.

The end cover 213 is the first wall portion 211, that is, the pressure relief component 22 is arranged on the end cover 213. In embodiments where the housing body 212 has two opposite openings 2121, the housing 21 includes two end covers 213. One of the two end covers 213 can be the first wall, that is, one end cover 213 is provided with a pressure relief component 22, or both end covers 213 can be the first wall, that is, both end covers 213 are provided with a pressure relief component 22.

By setting the first wall portion 211 of the housing 21 as the end cover 213 of the housing 21 for sealing the opening 2121, the battery cell 20 with this structure facilitates arranging the pressure relief component 22 on the end cover 213, which is beneficial to reducing the manufacturing difficulty of the battery cell 20, so as to improve the production efficiency of the battery cell 20.

It should be noted that the structure of the battery cell 20 is not limited thereto. In some embodiments, the battery cell 20 can also be other structures. For example, as shown in FIGs. 3 and 4, the housing 21 can include a housing body 212 and an end cover 213. A receiving cavity with an opening 2121 is formed inside the housing body 212. The receiving cavity is configured to receive the electrode assembly 23. The end cover 213 seals the opening 2121, and the housing body 212 includes the first wall portion 211.

The housing body 212 can include an integrally formed side wall and bottom wall, that is, the housing body 212 is manufactured by an integral molding process, such as stamping, casting, or extrusion molding. That is, the side wall and the bottom wall of the housing body 212 are an integral structure.

The housing body 212 includes the first wall portion 211, that is, the first wall portion 211 is a wall of the housing body 212. Exemplarily, as shown in FIG. 10, the first wall portion 211 is the bottom wall of the housing body 212 opposite to the end cover 213 in the thickness direction X of the first wall portion. Certainly, in other embodiments, the first wall portion 211 can also be a side wall of the housing body 212.

By setting the first wall portion 211 of the housing 21 as a wall portion of the housing body 212, the battery cell 20 with this structure can make the area of the housing 21 where the pressure relief component 22 is arranged away from the end cover 213, thereby effectively alleviating the phenomenon that the stress generated by the connection between the end cover 213 and the housing body 212 acts on the pressure relief component 22, so as to reduce the impact on the predetermined pressure relief area P of the pressure relief component 22 and the area corresponding to the first groove 221, and further helps to reduce the risk of cracking or structural strength reduction of the pressure relief component 22 under the pulling action of stress, so as to improve the service life and service reliability of the battery cell 20.

It should be noted that the structure of the battery cell 20 can also be various. In some embodiments, the housing body 212 has two opposite openings 2121; the housing 21 includes two end covers 213, where each of the end covers 213 is connected to the housing body 212 and seals one of the openings 2121, and the housing body 212 includes the first wall portion 211.

A receiving cavity is formed inside the housing body 212, and the two openings 2121 both communicate with the receiving cavity. The two openings 2121 can be arranged opposite to each other along the thickness direction X of the first wall portion. In embodiments where the housing 21 includes two openings 2121 and two end covers 213, the first wall portion 211 can also be a wall of the housing body 212.

The housing body 212 of the housing 21 has two openings 2121 arranged opposite to each other, and the two end covers 213 respectively seal the two openings 2121. The battery cell 20 with this structure facilitates assembling the battery cell 20 from both ends of the housing body 212, which is beneficial to reducing the manufacturing difficulty and assembly difficulty of the battery cell 20. The housing body 212 includes the first wall portion 211, and the pressure relief component 22 is not arranged on the end cover 213, which can reduce the risk of substances released during pressure relief of the battery cell 20 acting on other structures of the battery 100 and further reduces the risk of the battery cell 20 short-circuiting and causing thermal runaway again due to the substances released during pressure relief of the battery cell 20 forming an electrical connection with the electrode terminal 24.

In embodiments where the housing 21 includes two openings 2121 and two end covers 213, the two end covers 213 respectively seal the two openings 2121, and one of the two end covers 213 is the first wall portion 211. Certainly, both end covers 213 can also be the first wall portion 211, and each first wall portion 211 is provided with a pressure relief component 22.

In some embodiments, the housing body 212 has one opening 2121, and a wall portion of the housing body 212 arranged opposite to the opening 2121 is the first wall portion 211.

Exemplarily, the wall portion of the housing body 212 opposite to the opening 2121 is the bottom wall of the housing body 212, the bottom wall is the first wall portion 211, the end cover 213 is arranged opposite to the first wall portion 211, and the electrode terminal 24 is arranged on the end cover 213.

The wall portion of the housing body 212 arranged opposite to the opening 2121 is the first wall portion 211, which can reduce the risk of substances released during pressure relief of the battery cell 20 acting on other structures of the battery 100, and further reduces the risk of the battery cell 20 short-circuiting and causing thermal runaway again due to the substances released during pressure relief of the battery cell 20 forming an electrical connection with the electrode terminal 24.

In some embodiments, a material of the pressure relief component 22 includes steel.

The steel can be carbon steel, alloy steel, stainless steel, or the like.

It can be understood that in embodiments where the pressure relief component 22 is integrally formed with the first wall portion 211, the material of the first wall portion 211 includes steel. If the first wall portion 211 is an end cover 213, the end cover 213 can be made of steel; if the first wall portion 211 is a wall portion in the housing body 212, the housing body 212 can be made of steel.

In this embodiment, steel has the characteristic of high strength. The pressure relief component 22 made of steel has better strength. When the bursting pressure of the battery cell 20 is constant, the pressure relief component 22 can be made thinner, reducing the volume of the pressure relief component 22. In embodiments where the pressure relief component 22 is integrally formed with the first wall portion 211, the first wall portion 211 is made of steel, and the first wall portion 211 can be made thinner. When the volume of the housing 21 is constant, the internal volume of the housing 21 can be increased to provide more space for the electrode assembly 23, which is beneficial to improving the volumetric energy density of the battery cell 20.

In some embodiments, the steel is carbon steel or stainless steel.

Carbon steel can be low carbon steel, medium carbon steel, or high carbon steel.

In some embodiments, a material of the pressure relief component 22 includes aluminum alloy.

It can be understood that in embodiments where the pressure relief component 22 is integrally formed with the first wall portion 211, the material of the first wall portion 211 includes aluminum alloy. If the first wall portion 211 is an end cover 213, the end cover 213 can be made of aluminum alloy; if the first wall portion 211 is a wall portion in the housing body 212, the housing body 212 can be made of aluminum alloy.

Aluminum alloy has the characteristics of light weight and good ductility, making it easier to process the first groove 221 and the second groove 222 on the pressure relief component 22. In embodiments where the pressure relief component 22 is integrally formed with the first wall portion 211, the first wall portion 211 is made of aluminum alloy, which can effectively reduce the difficulty of forming the first wall portion 211. Due to the good ductility of aluminum alloy, it is easier to accumulate material in the predetermined pressure relief area P when forming the first groove 221.

In some embodiments, the present application also provides a battery 100, and the battery 100 includes the battery cell 20 provided in any of the above embodiments.

As shown in FIG. 2, the battery 100 can also include a box 10, and the battery cell 20 is accommodated in the box 10.

In some embodiments, the box 10 can include a first box body 11 and a second box body 12, where the first box body 11 and the second box body 12 are covered with each other, and the first box body 11 and the second box body 12 jointly define an assembly space for accommodating the battery cell 20.

Optionally, the second box body 12 can be a hollow structure open at one end, and the first box body 11 can be a plate-like structure, where the first box body 11 covers the open side of the second box body 12, so that the first box body 11 and the second box body 12 jointly define the assembly space; the first box body 11 and the second box body 12 can also both be hollow structures open on one side, where the open side of the first box body 11 covers the open side of the second box body 12.

Certainly, the box 10 formed by the first box body 11 and the second box body 12 can be of various shapes, such as a cylinder or a cuboid. Exemplarily, in FIG. 2, the shape of the box 10 is a cuboid.

Optionally, the number of battery cells 20 arranged in the box 10 can be one or more. Exemplarily, in FIG. 2, the box 10 of the battery 100 is provided with multiple battery cells 20, and the multiple battery cells 20 can be connected in series, in parallel, or in a mixed connection, where a mixed connection means that there are both series and parallel connections among the multiple battery cells 20. The multiple battery cells 20 can be directly connected in series, in parallel, or in a mixed connection, and then the whole formed by the multiple battery cells 20 is accommodated in the box 10; certainly, the battery 100 can also be formed by multiple battery cells 20 first connected in series, in parallel, or in a mixed connection to form a battery 100 module, and then multiple battery 100 modules are connected in series, in parallel, or in a mixed connection to form a whole, which is then accommodated in the box 10.

The battery 100 can also include other structures. For example, the battery 100 can also include a busbar member, and the busbar member connects multiple battery cells 20 to achieve electrical connection between the multiple battery cells 20.

It should be noted that in some embodiments, the battery 100 may also not be provided with a box 10. The battery 100 includes multiple battery cells 20, and the battery 100 composed of multiple battery cells 20 can be directly assembled to an electrical device to provide electrical energy to the electrical device through the multiple battery cells 20. That is, the box 10 can be part of the electric device. Taking the vehicle 1000 as an example of the electric device, the box 10 can be part of the chassis structure of the vehicle 1000. For example, part of the box 10 can become at least part of the floor of the vehicle 1000, or part of the box 10 can become at least part of the crossbeams and longitudinal beams of the vehicle 1000.

In some embodiments, the present application also provides an electric device, and the electric device includes the battery cell 20 provided in any of the above embodiments.

The battery cell 20 is configured to provide electrical energy to the electric device. The electric device can be any device or system that applies the battery cell 20 as described above.

The present application provides a battery cell 20, and the battery cell 20 includes a housing 21, an electrode assembly 23, and a pressure relief component 22. The housing 21 has a first wall portion 211. The housing 21 includes a housing body 212 and an end cover 213. A receiving cavity with an opening 2121 is formed inside the housing body 212. The electrode assembly 23 is accommodated in the receiving cavity. The end cover 213 seals the opening 2121, and the end cover 213 is the first wall portion 211. The pressure relief component 22 is integrally formed with the first wall portion 211, and the pressure relief component 22 is arranged on the first wall portion 211.

Along a thickness direction X of the first wall portion, the first wall portion 211 has a first surface 2111 and a second surface 2112 arranged opposite to each other. The first surface 2111 is a surface of the first wall portion 211 facing away from an interior of the housing 21, and the second surface 2112 is a surface of the first wall portion 211 facing towards the interior of the housing 21. The pressure relief component 22 is provided with a first groove 221. The first groove 221 is a three-stage score line groove. The three-stage score line groove is sequentially arranged from the first surface 2111 to the second surface 2112. The first groove 221 defines two predetermined pressure relief areas P. The pressure relief component 22 is configured to be capable of cracking along at least a portion of the first groove 221 when the battery cell 20 relieves pressure. The second surface 2112 is provided with a second groove 222. Along a thickness direction X of the first wall portion, a thickness of a bottom wall of the second groove 222 is greater than a thickness of a bottom wall of the first groove 221. The second groove 222 is configured to guide the predetermined pressure relief area P to flip when the first groove 221 cracks, so as to release the internal pressure of the battery cell 20. The pressure relief component 22 is integrally formed with the first wall portion 211.

The first groove 221 includes a first groove segment 2212, a second groove segment 2213, a third groove segment 2214, and a fourth groove segment 2215. The first groove segment 2212, the second groove segment 2213, the third groove segment 2214, and the fourth groove segment 2215 each form a first weak segment 2211a. Along a length direction Z of the first wall portion, the first groove segment 2212 and the third groove segment 2214 are arranged spaced apart. The first groove segment 2212 and the third groove segment 2214 both extend linearly along a width direction Y of the first wall portion. The third groove segment 2214 extends linearly along a length direction Z of the first wall portion. The second groove segment 2213 connects the first groove segment 2212 and the third groove segment 2214. A position where the second groove segment 2213 is connected to the first groove segment 2212 is offset from two ends of the first groove segment 2212. A position where the second groove segment 2213 is connected to the third groove segment 2214 is offset from two ends of the third groove segment 2214. The first groove segment 2212, the second groove segment 2213, and the third groove segment 2214 form an H-shaped first groove 221. Along a width direction Y of the first wall portion, two predetermined pressure relief areas P are respectively formed on two sides of the second groove segment 2213. The first groove 221 defines two predetermined pressure relief areas P. The fourth groove segment 2215 is arranged between the first groove segment 2212 and the third groove segment 2214, and the fourth groove segment 2215 intersects the second groove segment 2213.

A sum S₁ of areas of all the predetermined pressure relief areas P is 0.03 to 0.3 times an area S₂ of the first surface 2111. 500mm² ≤ S₁ ≤ 1300mm²; 5000mm² ≤ S₂ ≤ 8500mm².

The above are merely preferred embodiments of the present application and are not intended to limit the present application. Various modifications and changes can be made to the present application by persons skilled in the art. Any modification, equivalent replacement, and improvement made within the spirit and principle of the present application shall be included in the protection scope of the present application.

## Claims

1. A battery cell, comprising:
a housing, comprising a first wall portion, wherein in a thickness direction of the first wall portion, the first wall portion has a first surface and a second surface arranged opposite to each other; and
a pressure relief component, arranged on the first wall portion, wherein the pressure relief component is provided with a first groove, the first groove being recessed from the first surface towards the second surface, the first groove defining at least one predetermined pressure relief area, and the pressure relief component being configured to be capable of cracking along at least a portion of the first groove when the battery cell relieves pressure;
wherein a sum S₁ of areas of all the predetermined pressure relief areas is 0.03 to 0.3 times an area S₂ of the first surface.

2. The battery cell according to claim 1, wherein 500mm² ≤ S₁ ≤ 1300mm².

3. The battery cell according to claim 1 or 2, wherein 5000mm² ≤ S₂ ≤ 8500mm².

4. The battery cell according to any one of claims 1 to 3, wherein the first wall portion is a rectangular wall portion; and
along a width direction of the first wall portion, a dimension of the first surface is c; along a length direction of the first wall portion, a dimension of the first surface is d; and S₂ = c*d;
wherein 55mm ≤ c ≤ 85mm, and 100mm ≤ d ≤ 260mm.

5. The battery cell according to any one of claims 1 to 4, wherein the first wall portion is a rectangular wall portion; and
along a length direction of the first wall portion, the pressure relief component is formed with at least one predetermined pressure relief area, and a sum a of dimensions of all the predetermined pressure relief areas arranged along the length direction of the first wall portion is 0.1 to 0.5 times a dimension d of the first surface along the length direction of the first wall portion.

6. The battery cell according to any one of claims 1 to 5, wherein the first wall portion is a rectangular wall portion; and
along a width direction of the first wall portion, the first groove defines at least one predetermined pressure relief area, and a sum b of dimensions of all the predetermined pressure relief areas arranged along the width direction of the first wall portion is 0.3 to 0.7 times a dimension c of the first surface along the width direction of the first wall portion.

7. The battery cell according to any one of claims 1 to 6, wherein the first wall portion is a rectangular wall portion; and
along a length direction of the first wall portion, the pressure relief component is formed with at least one predetermined pressure relief area, and a sum of dimensions of all the predetermined pressure relief areas arranged along the length direction of the first wall portion is a, wherein 26mm ≤ a ≤ 50mm.

8. The battery cell according to any one of claims 1 to 7, wherein the first wall portion is a rectangular wall portion; and
along a width direction of the first wall portion, the first groove defines at least one predetermined pressure relief area, and a sum of dimensions of all the predetermined pressure relief areas arranged along the width direction of the first wall portion is b, wherein 18mm ≤ b ≤ 62mm.

9. The battery cell according to any one of claims 1 to 8, wherein the first wall portion is a rectangular wall portion;
along a length direction of the first wall portion, the pressure relief component is formed with at least one predetermined pressure relief area, and a sum of dimensions of all the predetermined pressure relief areas arranged along the length direction of the first wall portion is a;
along a width direction of the first wall portion, the first groove defines at least one predetermined pressure relief area, and a sum of dimensions of all the predetermined pressure relief areas arranged along the width direction of the first wall portion is b, and along the width direction of the first wall portion, a dimension of the first surface is c;
when 10mm ≤ c ≤ 40mm, the sum a of dimensions of all the predetermined pressure relief areas arranged along the length direction of the first wall portion is 2 to 3 times the sum b of dimensions of all the predetermined pressure relief areas arranged along the width direction of the first wall portion;
when 40mm < c ≤ 60mm, the sum a of dimensions of all the predetermined pressure relief areas arranged along the length direction of the first wall portion is 1 to 2 times the sum b of dimensions of all the predetermined pressure relief areas arranged along the width direction of the first wall portion; and
when 60mm < c, the sum a of dimensions of all the predetermined pressure relief areas arranged along the length direction of the first wall portion is 0.4 to 1 times the sum b of dimensions of all the predetermined pressure relief areas arranged along the width direction of the first wall portion.

10. The battery cell according to any one of claims 1 to 9, wherein the pressure relief component further comprises a second groove, wherein the second groove is configured to guide the predetermined pressure relief area to open.

11. The battery cell according to claim 10, wherein the second groove is recessed from the second surface towards the first surface.

12. The battery cell according to claim 10 or 11, wherein the first surface is a surface of the pressure relief component facing away from an interior of the housing, and the second surface is a surface of the pressure relief component facing towards the interior of the housing.

13. The battery cell according to any one of claims 10 to 12, wherein the first groove and the second groove do not contact each other.

14. The battery cell according to any one of claims 1 to 13, wherein the first groove comprises a first groove segment and a second groove segment, wherein the first groove segment and the second groove segment are connected, and the first groove segment and the second groove segment jointly define the at least one predetermined pressure relief area.

15. The battery cell according to claim 14, wherein the first groove further comprises a third groove segment, wherein the first groove segment and the third groove segment are arranged opposite to each other, the second groove segment connects the first groove segment and the third groove segment, and the first groove segment, the second groove segment, and the third groove segment jointly define the at least one predetermined pressure relief area.

16. The battery cell according to claim 15, wherein a position where the second groove segment is connected to the first groove segment is offset from two ends of the first groove segment, and a position where the second groove segment is connected to the third groove segment is offset from two ends of the third groove segment.

17. The battery cell according to claim 15 or 16, wherein the first groove defines two predetermined pressure relief areas, wherein the two predetermined pressure relief areas are respectively located on two sides of the second groove segment; and
the pressure relief component further comprises a second groove, wherein the second groove is configured to guide the predetermined pressure relief area to open, and each of the predetermined pressure relief areas is correspondingly provided with at least one second groove, and the first groove is located between the two second grooves.

18. The battery cell according to claim 17, wherein the second groove segment and the second groove are arranged opposite to each other along a first direction, and along the first direction, the first groove segment and the third groove segment are both spaced apart from the second groove.

19. The battery cell according to claim 18, wherein the first wall portion is a rectangular wall portion, and the first direction is parallel to a width direction of the first wall portion.

20. The battery cell according to any one of claims 1 to 19, wherein the first groove is a multi-stage score line groove, wherein the multi-stage score line groove is a multi-stage score line groove sequentially arranged from the first surface to the second surface, and in two adjacent stages of the score line grooves, a stage of the score line groove farther from the first surface is arranged on a bottom surface of a stage of the score line groove closer to the first surface.

21. The battery cell according to claim 20, wherein the first groove is a three-stage score line groove, wherein the three-stage score line groove is sequentially arranged from the first surface to the second surface.

22. The battery cell according to any one of claims 1 to 21, wherein the pressure relief component is integrally formed with the first wall portion.

23. The battery cell according to any one of claims 1 to 22, wherein the pressure relief component is separately arranged from the first wall portion, wherein the first wall portion is provided with a pressure relief hole, and the pressure relief component is installed on the first wall portion and covers the pressure relief hole.

24. The battery cell according to any one of claims 1 to 23, wherein the battery cell comprises an electrode assembly, wherein the electrode assembly is accommodated in the housing, and the first wall portion supports the electrode assembly.

25. The battery cell according to any one of claims 1 to 24, wherein the battery cell comprises an electrode terminal, wherein the electrode terminal is arranged on a wall portion of the housing other than the first wall portion.

26. The battery cell according to claim 25, wherein the electrode terminal is arranged on a wall of the housing opposite to the first wall portion.

27. The battery cell according to any one of claims 1 to 26, wherein the housing comprises:
a housing body, having at least one opening; and
an end cover, corresponding to the opening one-to-one, wherein the end cover is connected to the housing body and seals the opening;
wherein at least one end cover is the first wall portion, or the housing body comprises the first wall portion.

28. The battery cell according to claim 27, wherein the housing body has two openings arranged opposite to each other; and the housing comprises two end covers, wherein each of the end covers is connected to the housing body and seals one of the openings, and the housing body comprises the first wall portion.

29. The battery cell according to claim 27, wherein the housing body has one opening, and a wall portion of the housing body arranged opposite to the opening is the first wall portion.

30. The battery cell according to any one of claims 1 to 29, wherein a material of the pressure relief component comprises steel.

31. The battery cell according to claim 30, wherein the steel is carbon steel or stainless steel.

32. The battery cell according to any one of claims 1 to 29, wherein a material of the pressure relief component comprises aluminum alloy.

33. The battery cell according to claim 32, wherein the aluminum alloy comprises the following components by mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other single elements ≤ 0.03%.

34. The battery cell according to claim 32, wherein the aluminum alloy comprises the following components by mass percentage: aluminum ≥ 96.7%, 0.05% ≤ copper ≤ 0.2%, iron ≤ 0.7%, manganese ≤ 1.5%, silicon ≤ 0.6%, zinc ≤ 0.1%, other single element components ≤ 0.05%, and total other element components ≤ 0.15%.

35. A battery, comprising the battery cell according to any one of claims 1 to 34.

36. An electric device, comprising the battery cell according to any one of claims 1 to 34.
